(19) Europäisches Patentamt / European Patent Office / Office européen des brevets

(11) EP 4 507 264 A1

(12) **EUROPEAN PATENT APPLICATION**
published in accordance with Art. 153(4) EPC

(43) Date of publication:
**12.02.2025 Bulletin 2025/07**

(21) Application number: **23795038.1**

(22) Date of filing: **13.04.2023**

(51) International Patent Classification (IPC):
***H04L 43/08*** *(2022.01)*

(52) Cooperative Patent Classification (CPC):
**H04L 43/08; H04L 43/0852; H04L 43/0864; H04L 43/50**

(86) International application number:
**PCT/CN2023/087970**

(87) International publication number:
**WO 2023/207605 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.04.2022 CN 202210434623**

(71) Applicant: **Huawei Technologies Co., Ltd.**
**Shenzhen, Guangdong 518129 (CN)**

(72) Inventors:
- **QI, Yunlei**
  **Shenzhen, Guangdong 518129 (CN)**
- **LI, Rixin**
  **Shenzhen, Guangdong 518129 (CN)**
- **XU, Li**
  **Shenzhen, Guangdong 518129 (CN)**

(74) Representative: **Grünecker Patent- und Rechtsanwälte PartG mbB**
**Leopoldstraße 4**
**80802 München (DE)**

(54) **DELAY MEASUREMENT METHOD AND RELATED DEVICE**

(57) Embodiments of this application disclose a delay measurement method. The method may be applied to a fine granularity service scenario, and includes: A first communication apparatus obtains a first moment, where the first moment is a timestamp at which the first communication apparatus inserts an operation, administration and maintenance OAM block; and the first moment is greater than or equal to a moment at which the first communication apparatus receives a first service bit flow, the first moment is less than a moment at which the first communication apparatus inserts a one-way delay measurement 1DM message or a two-way delay measurement 2DM message into a first block flow, the first service bit flow carries a first fine granularity service, and the first block flow is obtained based on the first service bit flow; and the first communication apparatus sends first moment to a second communication apparatus, where the first moment is for measuring a delay between the first communication apparatus and the second communication apparatus. This reduces a detection blind area in one-way or two-way delay measurement, and improves delay measurement accuracy, thereby improving communication quality and reducing a service interruption probability.

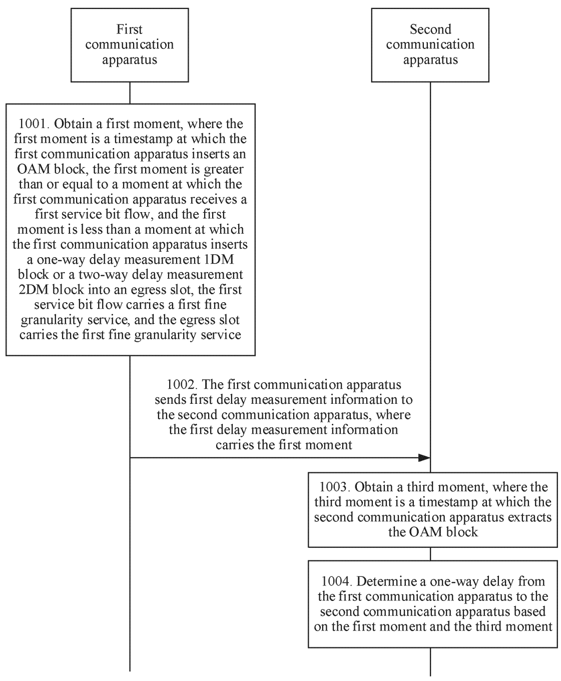


FIG. 10

EP 4 507 264 A1

## Description

This application claims priority to Chinese Patent Application No. 202210434623.4, filed with the China National Intellectual Property Administration on April 24, 2022 and entitled "DELAY MEASUREMENT METHOD AND RELATED DEVICE", which is incorporated herein by reference in its entirety.

## TECHNICAL FIELD

This application relates to the field of communication technologies, and in particular, to a delay measurement method and a related device.

## BACKGROUND

A fine granularity technology is a finer-granularity circuit switching technology developed based on an international telecommunication union telecommunication standardization sector (ITU-T) metro transport network (metro transport network, MTN) standard. The fine granularity technology refines a hard-pipe granularity in an MTN from 5 gigabits per second (G-bits per-second, Gbps) to 10 megabits per second (megabits per second, Mbps), to meet differentiated service carrying requirements such as a small bandwidth, high isolation, and high security in 5th generation mobile communication technology+ (5th generation mobile communication technology+, 5G+) vertical industry applications, private line services, and other scenarios.

In the fine granularity technology, a fine granularity unit (fine granularity unit, FGU) carries a first fine granularity service. In the fine granularity technology, a time division multiplexing (time-division multiplexing, TDM) mechanism is used to regularly and cyclically send FGU base frames. A quantity of slots and locations of the slots included in each frame are strictly fixed. Therefore, a transmission period in each slot is accordingly deterministic. To support more slot channels at a finer granularity and improve bandwidth utilization, the FGU solution uses a multiframe manner to perform slot division on a 5 Gbps granularity at an SPN channel layer. One multiframe includes 20 FGU base frames. Each FGU base frame supports 24 slots. The 5 Gbps granularity at the SPN channel layer supports 480 slots.

A slicing packet network (slicing packet network, SPN) slice channel, which is a transmission path between source and sink nodes in an SPN network, provides an end-to-end ethernet slice connection in the network, and features a low delay, transparent transmission, hard isolation, and the like. A cross-connection technology based on an ethernet 66B block sequence, a metro transport network path (MTN Path) layer frame structure, and a metro transport network section (MTN Section) layer frame structure, and operation, administration and maintenance (operation administration and maintenance, OAM) overheads thereof are used. A client layer service is mapped to an MTN client at a source node, intermediate nodes of the network perform cross-connection based on the ethernet 66B block (66B block) sequence, and the client layer service is demapped from the MTN client at a destination node. This can implement functions such as access/restoration of client data, addition/deletion of OAM information, cross-connection of data flows, and monitoring and protection of channels.

Delay measurement supported by an OAM block at an MTN path layer includes one-way delay measurement (One-way Delay Measurement, 1DM) and two-way delay measurement (Two-way Delay Measurement, 2DM). An OAM block for 1DM is also referred to as a 1DM block, and an OAM block for 2DM is also referred to as a 2DM block. Specifically, a source node in an FGU network is used as an example for description. After the source node receives a service bit flow that carries a fine granularity service, the source node first performs slicing processing on the service bit flow to generate a plurality of service slices. Then, the source node encapsulates the service slice to obtain a service container, and processes the service container to obtain a block flow. The block flow includes a block I, a block S, a block T, and a block D corresponding to the service container. Then, the block flow is mapped to an egress slot location. Specifically, slicing is performed based on a slot payload length, to obtain a plurality of lower-order slot payloads. Then, the source node encapsulates the lower-order slot payloads to obtain an FGU base frame, where M/X lower-order slots are loaded into a base frame payload of each FGU base frame, M is a positive integer, and X is a positive integer. Finally, the source node sends X FGU base frames to a next-hop node in a form of an FGU-based multiframe. When delay measurement is performed, in a process in which the source node encapsulates a sliced service flow and then maps the sliced service flow to an egress slot location, the source node determines an idle (idle) block between two adjacent sliced service flows. Then, a 1DM block or a 2DM block is inserted, and the idle block is replaced with the 1DM block or the 2DM block. The source node fills, in a timestamp (timestamp) field of the 1DM block or the 2DM block, a timestamp at which the source node sends the 1$^{st}$ 1DM block or the 1$^{st}$ 2DM block.

An applicant finds through research that a measurement blind area exists in the foregoing delay measurement procedure, and therefore a more accurate delay measurement method is required.

## SUMMARY

According to a first aspect, an embodiment of this application provides a delay measurement method, including: A first communication apparatus obtains a first moment, where

the first moment is a timestamp at which the first communication apparatus inserts an operation, administration and maintenance OAM block; and

the first moment is greater than or equal to a moment at which the first communication apparatus receives a first service bit flow, the first moment is less than a moment at which the first communication apparatus inserts a one-way delay measurement 1DM message or a two-way delay measurement 2DM message into a first block flow, the first service bit flow carries a first fine granularity service, and the first block flow is obtained based on the first service bit flow; and

the first communication apparatus sends first delay measurement information to a second communication apparatus, where the first delay measurement information carries the first moment, and the first delay measurement information is for measuring a delay between the first communication apparatus and the second communication apparatus.

In this embodiment of this application, the first communication apparatus obtains the first moment, where the first moment is the timestamp at which the first communication apparatus inserts the operation, administration and maintenance OAM block, the first moment is greater than or equal to the moment at which the first communication apparatus receives the first service bit flow, the first moment is less than the moment at which the first communication apparatus inserts the one-way delay measurement 1DM message into the first block flow, the first service bit flow carries the first fine granularity service, and the first block flow is obtained based on the first service bit flow. The first communication apparatus sends the first delay measurement information to the second communication apparatus, where the first delay measurement information carries the first moment, and the first delay measurement information is for measuring the delay between the first communication apparatus and the second communication apparatus. According to the foregoing method, a detection blind area in one-way delay measurement is reduced, and delay measurement accuracy is improved, thereby improving communication quality and reducing a service interruption probability.

In a possible implementation of the first aspect, that a first communication apparatus obtains a first moment includes:
The first communication apparatus obtains a first sub-moment, where the first sub-moment is a moment at which the first communication apparatus receives the first service bit flow. For example, the first sub-moment is a moment at which the first communication apparatus receives a specific bit in the first service bit flow.

The first communication apparatus obtains a second sub-moment, where the second sub-moment is a moment at which the first communication apparatus maps a service container corresponding to the first service bit flow to the first block flow. For example, in a process in which the first communication apparatus maps, to the first block flow, the service container that carries a specific bit, when the first communication apparatus maps, to a block location that carries the service container in the first block flow, the service container corresponding to the first service bit flow, a moment of the mapping is recorded as the second sub-moment.

The first communication apparatus obtains a third sub-moment, where the third sub-moment is a moment at which the first communication apparatus maps the 1DM message or the 2DM message to the first block flow. For example, in a process in which the first communication apparatus processes the first service bit flow to obtain the first block flow, and then maps the first block flow to an egress slot location, the first communication apparatus records a moment at which a 1DM block is inserted into the first block flow as the third sub-moment.

The first communication apparatus obtains the first moment through calculation in the following manner:

$$T1=t3-(t2-t1),$$

where
T1 is the first moment, t3 is the third sub-moment, t2 is the second sub-moment, and t1 is the first sub-moment.

In a possible implementation of the first aspect, the method further includes:
The first communication apparatus receives second delay measurement information from the second communication apparatus, where the second delay measurement information includes round trip time information, and the round trip time information indicates time consumed by the second communication apparatus from sending a second service bit flow to receiving a third service bit flow, where

the second service bit flow carries the first fine granularity service, the third service bit flow carries a second fine granularity service, the first fine granularity service has an association relationship with the second fine granularity service, the first fine granularity service is a service in a first direction of the second fine granularity service, the first direction is from the first communication apparatus to the second communication apparatus, the second fine granularity service is a service in a second direction of the first fine granularity service, and the second direction is from the second communication apparatus to the first communication apparatus;

the first communication apparatus obtains a second moment, where the second moment is a timestamp at which the first communication apparatus extracts the OAM block, the second moment is less than or equal to a moment at which the first communication apparatus sends a fourth service bit flow, and greater than a moment at which the first communication apparatus extracts a two-way delay measurement reply 2DMR message from a fourth block flow, the fourth service bit flow is obtained based on processing of the fourth block flow, and the fourth service bit flow carries the second fine granularity service; and

the first communication apparatus determines a two-way delay between the first communication apparatus and the second communication apparatus based on the first moment, the second moment, and the round trip time information.

In this embodiment of this application, the first communication apparatus obtains the first moment, where the first moment is the timestamp at which the first communication apparatus inserts the operation, administration and maintenance OAM block, the first moment is greater than or equal to the moment at which the first communication apparatus receives the first service bit flow, the first moment is less than the moment at which the first communication apparatus inserts the two-way delay measurement message 2DMM message into the first block flow, the first service bit flow carries the first fine granularity service, and the first block flow carries the first fine granularity service. The first communication apparatus sends the first delay measurement information to the second communication apparatus, where the first delay measurement information carries the first moment, and the first delay measurement information is for measuring the delay between the first communication apparatus and the second communication apparatus. Then, the second communication apparatus sends the second delay measurement information to the first communication apparatus, where the second delay measurement information carries the round trip time information, and the round trip time information indicates a time interval from sending the second service bit flow to receiving the third service bit flow by the second communication apparatus, the third service bit flow carries the second fine granularity service, and the second fine granularity service is associated with the first fine granularity service. The first communication apparatus obtains the second moment, where the second moment is the timestamp at which the first communication apparatus extracts the OAM block, the second moment is less than or equal to the moment at which the first communication apparatus sends the fourth service bit flow, and is greater than the moment at which the first communication apparatus extracts the two-way delay measurement reply 2DMR message from the fourth block flow, the fourth service bit flow is obtained based on processing of the fourth block flow, and the fourth service bit flow carries the second fine granularity service. Finally, the first communication apparatus determines the two-way delay between the first communication apparatus and the second communication apparatus based on the first moment, the second moment, and the round trip time information. According to the foregoing method, a detection blind area in a two-way delay measurement procedure is reduced, and delay measurement accuracy is improved, thereby improving communication quality and reducing a service interruption probability.

In a possible implementation of the first aspect, that the first communication apparatus obtains a second moment includes:

The first communication apparatus obtains a tenth sub-moment, where the tenth sub-moment is a moment at which the first communication apparatus extracts the two-way delay measurement reply 2DMR message from the fourth block flow. For example, the first communication apparatus demaps FGU slot data to obtain the fourth block flow. When extracting the 2DMR message from the fourth block flow, the first communication apparatus records the moment at which the 2DMR message is extracted as the tenth sub-moment.

The first communication apparatus obtains an eleventh sub-moment, where the eleventh sub-moment is a moment at which the first communication apparatus sends the second service bit flow. For example, the eleventh sub-moment may be a moment at which the first communication apparatus sends a specific bit in the fourth service bit flow. For example, the specific bit may be the $1^{st}$ bit, the $100^{th}$ bit, the $200^{th}$ bit, the $500^{th}$ bit, and/or the $1000^{th}$ bit of the fourth service bit flow.

The first communication apparatus obtains a twelfth sub-moment, where the twelfth sub-moment is a moment at which the first communication apparatus obtains a service container by demapping the fourth block flow. For example, the first communication apparatus demaps FGU slot data at an ingress slot location to the fourth block flow, where the fourth block flow corresponds to the second fine granularity service. Then, in a process of processing the fourth block flow by the first communication apparatus, when performing demapping processing on a block location that carries a service container in the fourth block flow, the first communication apparatus records the moment as the twelfth sub-moment. The first communication apparatus may perform demapping processing on the block location corresponding to the service container in the fourth block flow to obtain the corresponding service container.

The first communication apparatus obtains the second moment through calculation in the following manner:

$$T2=t10+(t11-t12),$$

where

T2 is the second moment, t10 is the tenth sub-moment, t11 is the eleventh sub-moment, and t12 is the twelfth sub-moment.

In a possible implementation of the first aspect, the round trip time information includes:

a third moment and a fourth moment, where the third moment is greater than a moment at which the second communication apparatus extracts the two-way delay measurement message 2DMM message from a second block flow, and is less than or equal to a moment at which the second communication apparatus sends the second service bit flow, the second block flow carries the first fine granularity service, and the second service bit flow is generated based on the second block flow; and

the fourth moment is greater than or equal to a moment at which the second communication apparatus receives the third service bit flow, and is less than a moment at which the second communication apparatus inserts the two-way delay measurement reply 2DMR message into a third block flow, where the third block flow is generated based on the third service bit flow; or

the round trip time information includes a round trip time period, and the round trip time period is obtained by subtracting the third moment from the fourth moment.

In a possible implementation of the first aspect, when the round trip time information is the round trip time period: that the first communication apparatus determines a two-way delay between the first communication apparatus and the second communication apparatus based on the first moment, the second moment, and the round trip time information includes:

The first communication apparatus obtains the two-way delay between the first communication apparatus and the second communication apparatus through calculation by using the following method:

$$Two_way_delay=T2-T1-\Delta,$$

where

Two _way_delay is the two-way delay between the first communication apparatus and the second communication apparatus, T2 is the second moment, T1 is the first moment, and $\Delta$ is the round trip time period.

In a possible implementation of the first aspect, when the round trip time information is the third moment and the fourth moment:

that the first communication apparatus determines a two-way delay between the first communication apparatus and the second communication apparatus based on the first moment, the second moment, and the round trip time information includes:

The first communication apparatus obtains the two-way delay between the first communication apparatus and the second communication apparatus through calculation by using the following method:

$$Two_way_delay=(T2-T1)-(T4-T3),$$

where

Two _way_delay is the two-way delay between the first communication apparatus and the second communication apparatus, T4 is the fourth moment, T1 is the first moment, T3 is the third moment, and T2 is the second moment.

In a possible implementation of the first aspect, the second delay measurement information carries identification information. The method further includes:

The first communication apparatus stores the first moment and the identification information in a memory of the first communication apparatus, where the first moment is in one-to-one correspondence with the identification information; and the first communication apparatus determines the first moment from the memory of the first communication apparatus based on the identification information in the second delay measurement information.

For example, the identification information is a group of sequence numbers "01", "02", ..., and "xxx", and the first communication apparatus allocates a unique sequence number to each first moment. After the first communication apparatus obtains the first moment, the first communication apparatus adds a corresponding sequence number to the corresponding first delay measurement information, where the sequence number is used as the identification information. The first communication apparatus stores the identification information and the first moment in the memory after associating the identification information with the first moment. After receiving the first delay measurement information, the second communication apparatus extracts the identification information. Then, the second delay measurement information sent by the second communication apparatus to the first communication apparatus carries the same identification information. After receiving the second delay measurement information from the second communication apparatus, the first communication apparatus determines, from the memory based on the identification information carried in the second delay measurement information, the first moment corresponding to the second delay measurement information. Further, the first communication apparatus determines the two-way delay between the first communication apparatus and the second communication apparatus based on the round trip time information carried in the second delay measurement information, the first moment, and the second moment.

In a possible implementation of the first aspect, the first fine granularity service is a constant bit rate CBR service.

According to a second aspect, an embodiment of this application provides a delay measurement method, including:
A second communication apparatus obtains a third moment, where the third moment is a timestamp at which the second communication apparatus extracts an operation, administration and maintenance OAM block; and

the third moment is greater than a moment at which the second communication apparatus extracts a one-way delay measurement 1DM message or a two-way delay measurement 2DM message from a second block flow, and is less than or equal to a moment at which the second communication apparatus sends a second service bit flow, the second block flow carries a first fine granularity service, the second service bit flow is generated based on the second block flow, and the second service bit flow carries the first fine granularity service;
the second communication apparatus receives first delay measurement information from a first communication apparatus, where the first delay measurement information carries a first moment, and the first moment is a timestamp at which the first communication apparatus inserts the OAM block; and
the second communication apparatus determines a one-way delay from the first communication apparatus to the second communication apparatus based on the first moment and the third moment; or
the second communication apparatus sends second delay measurement information to the first communication apparatus, where the second delay measurement information is obtained based on the third moment, and the second delay measurement information indicates the first communication apparatus to determine a two-way delay between the first communication apparatus and the second communication apparatus.

In this embodiment of this application, the first communication apparatus obtains the first moment, where the first moment is the timestamp at which the first communication apparatus inserts the operation, administration and maintenance OAM block, the first moment is greater than or equal to the moment at which the first communication apparatus receives the first service bit flow, the first moment is less than the moment at which the first communication apparatus inserts the one-way delay measurement 1DM message into the first block flow, the first service bit flow carries the first fine granularity service, and the first block flow is obtained based on the first service bit flow. The first communication apparatus sends the first delay measurement information to the second communication apparatus, where the first delay measurement information carries the first moment, and the first delay measurement information is for measuring the delay between the first communication apparatus and the second communication apparatus. According to the foregoing method, a detection blind area in one-way delay measurement or two-way delay measurement is reduced, and delay measurement accuracy is improved, thereby improving communication quality and reducing a service interruption probability.

With reference to the first aspect or the second aspect, in a possible implementation, the second delay measurement information is carried in a second service container, and the second service container carries a service slice obtained by the second communication apparatus by performing slicing processing based on the third service bit flow; and
the third service bit flow carries the second fine granularity service, the second fine granularity service has the association relationship with the first fine granularity service, the first fine granularity service is the service in the first direction of the second fine granularity service, the first direction is from the first communication apparatus to the second communication apparatus, the second fine granularity service is the service in the second direction of the first fine granularity service, and the second direction is from the second communication apparatus to the first communication apparatus.

After the first communication apparatus receives the FGU slot data, the first communication apparatus performs demapping processing on the FGU slot data to obtain a corresponding service container. When the first communication apparatus finds that the service container carries the second delay measurement information, the first communication apparatus records the second moment, and the service container (carrying the second delay measurement information) is referred to as the second service container.

The second moment may be a moment at which the first communication apparatus extracts the second delay measurement information (the round trip time information) from the second service container, or the second moment may be a moment at which the first communication apparatus reassembles a service bit flow (that is, the fourth service bit flow) by using a service slice corresponding to the second service container, and sends the service bit flow. This is not limited in embodiments of this application.

With reference to the first aspect or the second aspect, in a possible implementation, the second delay measurement information is carried in the two-way delay measurement reply 2DMR message.

Specifically, because the 2DMR message includes a timestamp (timestamp) field, the second communication apparatus may replace a moment recorded in the timestamp field of the original 2DMR message with the round trip time information. In this case, it is considered that the 2DMR message carries the second delay measurement information. It should be noted that, in embodiments of this application, a quantity of OAM blocks included in the 2DMR message is not limited. For example, the second delay measurement information may be carried in one or more OAM blocks (namely, 2DMR blocks). After the second communication apparatus generates the second delay measurement information, the second communication apparatus maps the second delay measurement information to an egress slot location, and then sends the egress slot location through an ethernet interface or a FlexE client interface. The egress slot location arrives at the first communication apparatus after being transmitted by Q intermediate nodes. The second communication apparatus is used in a source node.

Optionally, when the second delay measurement information is carried in the 2DMR message, the second delay measurement information further includes the first moment. Specifically, after receiving the first delay measurement information, the second communication apparatus stores the first moment in the first delay measurement information. Then, when sending the second delay measurement information to the first communication apparatus, the second communication apparatus adds the first moment to the second delay measurement information. In this case, the second delay measurement information includes the first moment and the round trip time information (for example, the third moment and the fourth moment). The first moment may be carried in the timestamp field of the 2DMR message.

It may be understood that the second delay measurement information in embodiments of this application may include a first moment and/or round trip time information generated based on one fine granularity service, or may include a plurality of first moments and/or a plurality of pieces of round trip time information generated based on a plurality of fine granularity services. For example, the second service container includes F1 (the first moment and the round trip time information of the first fine granularity service), F3 (a first moment and round trip time information of a third fine granularity service), and F5 (a first moment and round trip time information of a fifth fine granularity service). In other words, the first moments and/or the round trip time information that are/is obtained through measurement based on the plurality of fine granularity services in the second communication apparatus are/is transmitted in a same service container. For another example, the 2DMR message includes F1, F3, and F5. In other words, the first moments and/or the round trip time information that are/is obtained through measurement based on the plurality of fine granularity services in the second communication apparatus are/is transmitted in a same 2DMR message.

With reference to the first aspect or the second aspect, in a possible implementation, the first delay measurement information is carried in a first service container, and the first service container carries a service slice obtained by the first communication apparatus by performing slicing processing based on the first service bit flow.

The first delay measurement information is carried in the first service container, and the first service container carries the service slice obtained by the first communication apparatus by performing slicing processing based on the first service bit flow.

Specifically, in this embodiment of this application, a service container carrying the first delay measurement information is referred to as the first service container. The service container includes one or more of the following information (or fields): a payload (the payload is for carrying a service slice), an ESQ sequence number (optional), a frequency synchronization message (timestamp), a payload length (optional), padding (optional), and check (optional).

With reference to the first aspect or the second aspect, in a possible implementation, the first delay measurement information is carried in the 1DM message, or the first delay measurement information is carried in a two-way delay measurement message 2DMM message; and

a timestamp field of the 1DM message or the two-way delay measurement message 2DMM message carries the first moment.

Specifically, because the 1DM message includes a timestamp (timestamp) field, the first communication apparatus may replace a moment recorded in the timestamp field of the original 1DM message with the first moment. In this case, it is considered that the 1DM message carries the first delay measurement information. It should be noted that, in embodiments of this application, a quantity of OAM blocks included in the 1DM message is not limited. For example, the first delay measurement information may be carried in one or more OAM blocks (namely, 1DM blocks). After the first communication apparatus generates the first delay measurement information, the first communication apparatus maps the first block flow including the first delay measurement information to the egress slot location, and then sends the FGU slot data at the egress slot location through an ethernet interface or a FlexE client interface. The FGU slot data includes the first delay measurement information, and the FGU slot data includes one or more sub-slots. The FGU slot data arrives at the second communication apparatus after being transmitted by Q intermediate nodes, where Q is a positive integer. The second communication apparatus is used in a sink node.

It may be understood that the first delay measurement information in embodiments of this application may include a first moment generated based on one fine granularity service, or may include a plurality of first moments generated based on a plurality of fine granularity services. For example, the first service container includes R1 (the first moment of the first fine granularity service), R3 (a first moment of a third fine granularity service), and R5 (a first moment of a fifth fine granularity service). In other words, the first moments that are obtained through measurement based on the plurality of fine granularity services in the first communication apparatus are transmitted in a same service container. For another example, the 1DM message includes R1, R3, and R5. In other words, the first moments that are obtained through measurement based on the plurality of fine granularity services in the first communication apparatus are transmitted in a same 1DM message.

Specifically, because the 2DMM message includes a timestamp (timestamp) field, the first communication apparatus may replace a moment recorded in the timestamp field of the original 2DMM message with the first moment. In this case, it is considered that the 2DMM message carries the first delay measurement information. It should be noted that, in embodiments of this application, a quantity of OAM blocks included in the 2DMM message is not limited. For example, the first delay measurement information may be carried in one or more OAM blocks (namely, 2DMM blocks). After the first communication apparatus generates the first delay measurement information, the first communication apparatus maps the first delay measurement information to the egress slot location, and then sends the FGU slot data (including the first delay measurement information) at the egress slot location through an ethernet interface or a FlexE client interface. The FGU slot data (including the first delay measurement information) arrives at the second communication apparatus after being transmitted by the Q intermediate nodes, so that the second communication apparatus obtains the first delay measurement information. The second communication apparatus is used in a sink node.

In a possible implementation of the second aspect, that the second communication apparatus sends second delay measurement information to the first communication apparatus includes:

The second communication apparatus obtains a fourth moment, where the fourth moment is a timestamp at which the second communication apparatus inserts an OAM block, the fourth moment is greater than or equal to a moment at which the second communication apparatus receives the third service bit flow, and is less than a moment at which the second communication apparatus inserts the two-way delay measurement reply 2DMR message into a third block flow, where the third block flow is generated based on the third service bit flow;

> the second communication apparatus obtains round trip time information, where the round trip time information is determined based on the third moment and the fourth moment, and the round trip time information indicates a time interval from sending the second service bit flow by the second communication apparatus to receiving the third service bit flow by the second communication apparatus; and
>
> the second communication apparatus sends the second delay measurement information to the first communication apparatus, where the second delay measurement information carries the round trip time information.

In a possible implementation of the second aspect, the round trip time information includes the third moment and the fourth moment; or

the round trip time information includes a round trip time period, and the round trip time period is obtained by subtracting the third moment from the fourth moment.

In a possible implementation of the second aspect, that a second communication apparatus obtains a third moment includes:

The second communication apparatus obtains a fourth sub-moment, where the fourth sub-moment is a moment at which the second communication apparatus sends the second service bit flow. For example, the fourth sub-moment may be a moment at which the second communication apparatus sends a specific bit in the second service bit flow. For example, the specific bit may be the 1$^{st}$ bit, the 100$^{th}$ bit, the 200$^{th}$ bit, the 500$^{th}$ bit, and/or the 1000$^{th}$ bit of the second service bit flow.

The second communication apparatus obtains a fifth sub-moment, where the fifth sub-moment is a moment at which the second communication apparatus obtains a service container by demapping the second block flow. For example, the second communication apparatus demaps FGU slot data at an ingress slot location to the second block flow, where the second block flow corresponds to the first fine granularity service. Then, in a process of processing the second block flow by the second communication apparatus, when performing demapping processing on a block location that carries a service container in the second block flow, the second communication apparatus records the moment as the fifth sub-moment. The second communication apparatus may perform demapping processing on the block location corresponding to the service container in the second block flow to obtain the corresponding service container.

The second communication apparatus obtains a sixth sub-moment, where the sixth sub-moment is a moment at which the second communication apparatus extracts the 1DM message from the second block flow. For example, the second communication apparatus demaps FGU slot data to obtain the second block flow. When extracting the 1DM message from the second block flow, the second communication apparatus records the moment at which the 1DM message is extracted as the sixth sub-moment.

The second communication apparatus obtains the third moment through calculation in the following manner:

$$T3=t6+(t4-t5),$$

where
T3 is the third moment, t6 is the sixth sub-moment, t4 is the fourth sub-moment, and t5 is the fifth sub-moment.

In a possible implementation of the second aspect, that the second communication apparatus obtains a fourth moment includes:
The second communication apparatus obtains a seventh sub-moment, where the seventh sub-moment is a moment at which the second communication apparatus receives the third service bit flow, and the third service bit flow carries the second fine granularity service. For example, the seventh sub-moment may be a moment at which the second communication apparatus receives a specific bit in the third service bit flow. For example, the specific bit may be the 1st bit, the 100th bit, the 200th bit, the 500th bit, and/or the 1000th bit of the third service bit flow.

The second communication apparatus obtains an eighth sub-moment, where the eighth sub-moment is a moment at which the second communication apparatus maps a service container corresponding to the third service bit flow to the third block flow. For example, in a process in which the second communication apparatus maps, to the third block flow, the service container that carries a specific bit, when the second communication apparatus maps, to a block location that carries the service container in the third block flow, the service container corresponding to the third service bit flow, a moment of the mapping is recorded as the eighth sub-moment.

The second communication apparatus obtains a ninth sub-moment, where the ninth sub-moment is the moment at which the second communication apparatus inserts the 2DMR message into the third block flow. For example, in a process in which the second communication apparatus processes the third service bit flow to obtain the third block flow, and then maps the third block flow to an egress slot location, the second communication apparatus records a moment at which a 2DMR block is inserted into the third block flow as the ninth sub-moment.

The second communication apparatus obtains the fourth moment through calculation in the following manner:

$$T4=t9-(t8-t7),$$

where
T4 is the fourth moment, t9 is the ninth sub-moment, t8 is the eighth sub-moment, and t7 is the seventh sub-moment.

In a possible implementation of the second aspect, that the second communication apparatus determines a one-way delay from the first communication apparatus to the second communication apparatus based on the first moment and the third moment includes:

The second communication apparatus obtains a one-way delay from the first communication apparatus to the second communication apparatus through calculation by using the following method:

$$One_way_delay=T3-T1,$$

where
One_way_delay is the one-way delay from the first communication apparatus to the second communication apparatus, T3 is the third moment, and T1 is the first moment.

In a possible implementation of the second aspect, the second fine granularity service is a constant bit rate CBR service.

According to a third aspect, an embodiment of this application provides a communication apparatus, where the communication apparatus is used as a first communication apparatus, and the communication apparatus includes:

a transceiver module, configured to perform a receiving- and/or sending-related operation performed by the first communication apparatus according to the first aspect; and
a processing module, configured to perform an operation other than the receiving and/or sending-related operation performed by the first communication apparatus in the first aspect.

It should be noted that the communication apparatus mentioned in embodiments of this application may be, for example, a network device such as a switch or a router, may be some components of a network device, for example, a board or a line card of the network device, may be a functional module of the network device, or may be a chip configured to implement the methods in this application. This is not specifically limited in embodiments of this application. When the communication apparatus is a chip, the transceiver module configured to implement the method may be, for example, an interface circuit of the chip, and the processing module may be a processing circuit having a processing function in the chip. Communication apparatuses may be directly connected, for example, but not limited to, by using an ethernet cable or an optical cable.

For example, the communication apparatus includes:
The transceiver module is configured to obtain a first moment, where

the first moment is a timestamp at which the first communication apparatus inserts an operation, administration and maintenance OAM block; and
the first moment is greater than or equal to a moment at which the first communication apparatus receives a first service bit flow, the first moment is less than a moment at which the first communication apparatus inserts a one-way delay measurement 1DM message or a two-way delay measurement 2DM message into a first block flow, the first service bit flow carries a first fine granularity service, and the first block flow is obtained based on the first service bit flow.

The transceiver module is further configured to send the first delay measurement information to the second communication apparatus, where the first delay measurement information carries the first moment, and the first delay measurement information is for measuring the delay between the first communication apparatus and the second communication apparatus.
In a possible implementation, the first delay measurement information is carried in a first service container, and the first service container carries a service slice obtained by the first communication apparatus by performing slicing processing based on the first service bit flow.
In a possible implementation, the first delay measurement information is carried in the 1DM message, or the first delay measurement information is carried in a two-way delay measurement message 2DMM message; and
a timestamp field of the 1DM message or the two-way delay measurement message 2DMM message carries the first moment.
In a possible implementation, the transceiver module is further configured to obtain a first sub-moment, where the first sub-moment is a moment at which the first communication apparatus receives the first service bit flow.
The transceiver module is further configured to obtain a second sub-moment, where the second sub-moment is a moment at which the first communication apparatus maps a service container corresponding to the first service bit flow to the first block flow.
The transceiver module is further configured to obtain a third sub-moment, where the third sub-moment is a moment at which the first communication apparatus maps the 1DM message or the 2DM message to the first block flow.
The processing module is configured to obtain the first moment through calculation in the following manner:

$$T1=t3-(t2-t1),$$

where
T1 is the first moment, t3 is the third sub-moment, t2 is the second sub-moment, and t1 is the first sub-moment.
In a possible implementation, the transceiver module is further configured to receive second delay measurement information from the second communication apparatus, where the second delay measurement information includes round trip time information, and the round trip time information indicates time consumed by the second communication apparatus from sending a second service bit flow to receiving a third service bit flow, where
the second service bit flow carries the first fine granularity service, the third service bit flow carries a second fine granularity service, the first fine granularity service has an association relationship with the second fine granularity service, the first fine granularity service is a service in a first direction of the second fine granularity service, the first direction is from the first communication apparatus to the second communication apparatus, the second fine granularity service is a service in a second direction of the first fine granularity service, and the second direction is from the second communication apparatus to the first communication apparatus.
The transceiver module is further configured to obtain the second moment, where the second moment is the timestamp at which the first communication apparatus extracts the OAM block, the second moment is less than or equal to the moment at which the first communication apparatus sends the fourth service bit flow, and is greater than the moment at which the first communication apparatus extracts the two-way delay measurement reply 2DMR message from the fourth block flow, the fourth service bit flow is obtained based on processing of the fourth block flow, and the fourth service bit flow carries the second fine granularity service.
The processing module is further configured to determine a two-way delay between the first communication apparatus and the second communication apparatus based on the first moment, the second moment, and the round trip time information.
In a possible implementation, the second delay measurement information is carried in a second service container, and the second service container carries a service slice obtained by the second communication apparatus by performing slicing processing based on the third service bit flow; and

the third service bit flow carries the second fine granularity service, the second fine granularity service has the association relationship with the first fine granularity service, the first fine granularity service is the service in the first direction of the second fine granularity service, the first direction is from the first communication apparatus to the second communication apparatus, the second fine granularity service is the service in the second direction of the first fine granularity service, and the second direction is from the second communication apparatus to the first communication apparatus.

In a possible implementation, the second delay measurement information is carried in the two-way delay measurement reply 2DMR message.

In a possible implementation, the transceiver module is further configured to obtain a tenth sub-moment, where the tenth sub-moment is a moment at which the first communication apparatus extracts the two-way delay measurement reply 2DMR message from the fourth block flow.

The transceiver module is further configured to obtain an eleventh sub-moment, where the eleventh sub-moment is a moment at which the first communication apparatus sends the second service bit flow.

The transceiver module is further configured to obtain a twelfth sub-moment, where the twelfth sub-moment is a moment at which the first communication apparatus obtains a service container by demapping the fourth block flow.

The processing module is further configured to obtain the second moment through calculation in the following manner:

$$T2=t10+(t11-t12),$$

where

T2 is the second moment, t10 is the tenth sub-moment, t11 is the eleventh sub-moment, and t12 is the twelfth sub-moment.

In a possible implementation, the round trip time information includes:

a third moment and a fourth moment, where the third moment is greater than a moment at which the second communication apparatus extracts the two-way delay measurement message 2DMM message from a second block flow, and is less than or equal to a moment at which the second communication apparatus sends the second service bit flow, the second block flow carries the first fine granularity service, and the second service bit flow is generated based on the second block flow; and

the fourth moment is greater than or equal to a moment at which the second communication apparatus receives the third service bit flow, and is less than a moment at which the second communication apparatus inserts the two-way delay measurement reply 2DMR message into a third block flow, where the third block flow is generated based on the third service bit flow; or

the round trip time information includes a round trip time period, and the round trip time period is obtained by subtracting the third moment from the fourth moment.

In a possible implementation, when the round trip time information is the round trip time period,

the processing module is further configured to obtain the two-way delay between the first communication apparatus and the second communication apparatus through calculation by using the following method:

$$Two_way_delay=T2-T1-\Delta,$$

where

Two _way_delay is the two-way delay between the first communication apparatus and the second communication apparatus, T2 is the second moment, T1 is the first moment, and Δ is the round trip time period.

In a possible implementation, when the round trip time information is the third moment and the fourth moment:

the processing module is further configured to obtain the two-way delay between the first communication apparatus and the second communication apparatus through calculation by using the following method:

$$Two_way_delay=(T2-T1)-(T4-T3),$$

where

Two _way_delay is the two-way delay between the first communication apparatus and the second communication apparatus, T4 is the fourth moment, T1 is the first moment, T3 is the third moment, and T2 is the second moment.

In a possible implementation, the first delay measurement information carries identification information.

The second delay measurement information carries the identification information.

The processing module is further configured to store the first moment and the identification information in a memory of the first communication apparatus, where the first moment is in one-to-one correspondence with the identification information.

The processing module is further configured to determine the first moment from the memory of the first communication apparatus based on the identification information in the second delay measurement information.

In a possible implementation, the first fine granularity service is a constant bit rate CBR service.

According to a fourth aspect, an embodiment of this application provides a communication apparatus, where the communication apparatus is used as a second communication apparatus, and the communication apparatus includes:

a transceiver module, configured to perform a receiving- and/or sending-related operation performed by the second communication apparatus according to the second aspect; and
a processing module, configured to perform an operation other than the receiving and/or sending-related operation performed by the second communication apparatus in the second aspect.

It should be noted that the communication apparatus mentioned in embodiments of this application may be, for example, a network device such as a switch or a router, may be some components of a network device, for example, a board or a line card of the network device, may be a functional module of the network device, or may be a chip configured to implement the methods in this application. This is not specifically limited in embodiments of this application. When the communication apparatus is a chip, the transceiver module configured to implement the method may be, for example, an interface circuit of the chip, and the processing module may be a processing circuit having a processing function in the chip. Communication apparatuses may be directly connected, for example, but not limited to, by using an ethernet cable or an optical cable.

For example, the communication apparatus includes: a transceiver module, configured to obtain a third moment, where the third moment is a timestamp at which the second communication apparatus extracts an operation, administration and maintenance OAM block; and
the third moment is greater than a moment at which the second communication apparatus extracts a one-way delay measurement 1DM message or a two-way delay measurement 2DM message from a second block flow, and is less than or equal to a moment at which the second communication apparatus sends a second service bit flow, the second block flow carries a first fine granularity service, the second service bit flow is generated based on the second block flow, and the second service bit flow carries the first fine granularity service;

The transceiver module is further configured to receive first delay measurement information from a first communication apparatus, where the first delay measurement information carries a first moment, and the first moment is a timestamp at which the first communication apparatus inserts the OAM block.

The processing module is configured to determine a one-way delay from the first communication apparatus to the second communication apparatus based on the first moment and the third moment.

Alternatively, the transceiver module is further configured to send second delay measurement information to the first communication apparatus, where the second delay measurement information is obtained based on the third moment, and the second delay measurement information indicates the first communication apparatus to determine a two-way delay between the first communication apparatus and the second communication apparatus.

In a possible implementation, the second delay measurement information is carried in a second service container, and the second service container carries a service slice obtained by the second communication apparatus by performing slicing processing based on the third service bit flow; and
the third service bit flow carries a second fine granularity service, and the second fine granularity service has an association relationship with the first fine granularity service.

In a possible implementation, the second delay measurement information is carried in the two-way delay measurement reply 2DMR message.

In a possible implementation, the first moment is carried in the first delay measurement information; and
the first delay measurement information carries the first moment, the first moment is greater than or equal to a moment at which the first communication apparatus receives a first service bit flow, the first moment is less than a moment at which the first communication apparatus inserts the one-way delay measurement 1DM message or the two-way delay measurement 2DM message into a first block flow, the first service bit flow carries the first fine granularity service, and the first block flow is obtained based on the first service bit flow.

In a possible implementation, the first delay measurement information is carried in a first service container, and the first service container carries a service slice obtained by the first communication apparatus by performing slicing processing based on the first service bit flow.

In a possible implementation, the first delay measurement information is carried in the 1DM message, or the first delay measurement information is carried in a two-way delay measurement message 2DMM message; and
a timestamp field of the 1DM message or the two-way delay measurement message 2DMM message carries the first moment.

In a possible implementation, the transceiver module is further configured to obtain a fourth moment, where the fourth moment is a timestamp at which the second communication apparatus inserts an OAM block, the fourth moment is greater than or equal to a moment at which the second communication apparatus receives the third service bit flow, and is less than a moment at which the second communication apparatus inserts the two-way delay measurement reply 2DMR message into a third block flow, where the third block flow is generated based on the third service bit flow.

The transceiver module is further configured to obtain round trip time information, where the round trip time information is determined based on the third moment and the fourth moment, and the round trip time information indicates a time interval from sending the second service bit flow by the second communication apparatus to receiving the third service bit flow by the second communication apparatus.

The transceiver module is further configured to send the second delay measurement information to the first communication apparatus, where the second delay measurement information carries the round trip time information.

In a possible implementation, the round trip time information includes the third moment and the fourth moment; or the round trip time information includes a round trip time period, and the round trip time period is obtained by subtracting the third moment from the fourth moment.

In a possible implementation, the transceiver module is further configured to obtain a fourth sub-moment, where the fourth sub-moment is a moment at which the second communication apparatus sends the second service bit flow.

The transceiver module is further configured to obtain a fifth sub-moment, where the fifth sub-moment is a moment at which the second communication apparatus obtains a service container by demapping the second block flow.

The transceiver module is further configured to obtain a sixth sub-moment, where the sixth sub-moment is a moment at which the second communication apparatus extracts the 1DM message or the 2DM message from the second block flow.

The processing module is further configured to obtain the third moment through calculation in the following manner:

$$T3=t6+(t4-t5),$$

where
T3 is the third moment, t6 is the sixth sub-moment, t4 is the fourth sub-moment, and t5 is the fifth sub-moment.

In a possible implementation, the transceiver module is further configured to obtain a seventh sub-moment, where the seventh sub-moment is a moment at which the second communication apparatus receives the third service bit flow.

The transceiver module is further configured to obtain an eighth sub-moment, where the eighth sub-moment is a moment at which the second communication apparatus maps a service container corresponding to the third service bit flow to the third block flow.

The transceiver module is further configured to obtain a ninth sub-moment, where the ninth sub-moment is the moment at which the second communication apparatus inserts the 2DMR message into the third block flow.

The processing module is further configured to obtain the fourth moment through calculation in the following manner:

$$T4=t9-(t8-t7),$$

where
T4 is the fourth moment, t9 is the ninth sub-moment, t8 is the eighth sub-moment, and t7 is the seventh sub-moment.

In a possible implementation, the processing module is further configured to obtain a one-way delay from the first communication apparatus to the second communication apparatus through calculation by using the following method:

$$One_way_delay=T3-T1,$$

where
One _way_delay is the one-way delay from the first communication apparatus to the second communication apparatus, T3 is the third moment, and T1 is the first moment.

In a possible implementation, the second fine granularity service is a constant bit rate CBR service.

According to a fifth aspect, an embodiment of this application provides a network device, where the network device is used in a first communication apparatus, and the network device includes:

a transceiver, configured to obtain a first moment, where
the first moment is a timestamp at which the first communication apparatus inserts an operation, administration and maintenance OAM block; and

the first moment is greater than or equal to a moment at which the first communication apparatus receives a first service bit flow, the first moment is less than a moment at which the first communication apparatus inserts a one-way delay measurement 1DM message or a two-way delay measurement 2DM message into a first block flow, the first service bit flow carries a first fine granularity service, and the first block flow is obtained based on the first service bit flow.

The transceiver is further configured to send the first delay measurement information to the second communication apparatus, where the first delay measurement information carries the first moment, and the first delay measurement information is for measuring the delay between the first communication apparatus and the second communication apparatus.

In a possible implementation, the first delay measurement information is carried in a first service container, and the first service container carries a service slice obtained by the first communication apparatus by performing slicing processing based on the first service bit flow.

In a possible implementation, the first delay measurement information is carried in the 1DM message, or the first delay measurement information is carried in a two-way delay measurement message 2DMM message; and

a timestamp field of the 1DM message or the two-way delay measurement message 2DMM message carries the first moment.

In a possible implementation, the transceiver is further configured to obtain a first sub-moment, where the first sub-moment is a moment at which the first communication apparatus receives the first service bit flow.

The transceiver is further configured to obtain a second sub-moment, where the second sub-moment is a moment at which the first communication apparatus maps a service container corresponding to the first service bit flow to the first block flow.

The transceiver is further configured to obtain a third sub-moment, where the third sub-moment is a moment at which the first communication apparatus maps the 1DM message or the 2DM message to the first block flow.

A processor is configured to obtain the first moment through calculation in the following manner:

$$T1=t3-(t2-t1),$$

where T1 is the first moment, t3 is the third sub-moment, t2 is the second sub-moment, and t1 is the first sub-moment.

In a possible implementation, the transceiver is further configured to receive second delay measurement information from the second communication apparatus, where the second delay measurement information includes round trip time information, and the round trip time information indicates time consumed by the second communication apparatus from sending a second service bit flow to receiving a third service bit flow, where

the second service bit flow carries the first fine granularity service, the third service bit flow carries a second fine granularity service, the first fine granularity service has an association relationship with the second fine granularity service, the first fine granularity service is a service in a first direction of the second fine granularity service, the first direction is from the first communication apparatus to the second communication apparatus, the second fine granularity service is a service in a second direction of the first fine granularity service, and the second direction is from the second communication apparatus to the first communication apparatus.

The transceiver is further configured to obtain the second moment, where the second moment is the timestamp at which the first communication apparatus extracts the OAM block, the second moment is less than or equal to the moment at which the first communication apparatus sends the fourth service bit flow, and is greater than the moment at which the first communication apparatus extracts the two-way delay measurement reply 2DMR message from the fourth block flow, the fourth service bit flow is obtained based on processing of the fourth block flow, and the fourth service bit flow carries the second fine granularity service.

The processor is further configured to determine a two-way delay between the first communication apparatus and the second communication apparatus based on the first moment, the second moment, and the round trip time information.

In a possible implementation, the second delay measurement information is carried in a second service container, and the second service container carries a service slice obtained by the second communication apparatus by performing slicing processing based on the third service bit flow; and

the third service bit flow carries the second fine granularity service, the second fine granularity service has the association relationship with the first fine granularity service, the first fine granularity service is the service in the first direction of the second fine granularity service, the first direction is from the first communication apparatus to the second communication apparatus, the second fine granularity service is the service in the second direction of the first fine granularity service, and the second direction is from the second communication apparatus to the first communication apparatus.

In a possible implementation, the second delay measurement information is carried in the two-way delay measurement reply 2DMR message.

In a possible implementation, the transceiver is further configured to obtain a tenth sub-moment, where the tenth sub-moment is a moment at which the first communication apparatus extracts the two-way delay measurement reply 2DMR message from the fourth block flow.

The transceiver is further configured to obtain an eleventh sub-moment, where the eleventh sub-moment is a moment at which the first communication apparatus sends the second service bit flow.

The transceiver is further configured to obtain a twelfth sub-moment, where the twelfth sub-moment is a moment at which the first communication apparatus obtains a service container by demapping the fourth block flow.

The processor is further configured to obtain the second moment through calculation in the following manner:

$$T2=t10+(t11-t12),$$

where

T2 is the second moment, t10 is the tenth sub-moment, t11 is the eleventh sub-moment, and t12 is the twelfth sub-moment.

In a possible implementation, the round trip time information includes:

a third moment and a fourth moment, where the third moment is greater than a moment at which the second communication apparatus extracts the two-way delay measurement message 2DMM message from a second block flow, and is less than or equal to a moment at which the second communication apparatus sends the second service bit flow, the second block flow carries the first fine granularity service, and the second service bit flow is generated based on the second block flow; and

the fourth moment is greater than or equal to a moment at which the second communication apparatus receives the third service bit flow, and is less than a moment at which the second communication apparatus inserts the two-way delay measurement reply 2DMR message into a third block flow, where the third block flow is generated based on the third service bit flow; or

the round trip time information includes a round trip time period, and the round trip time period is obtained by subtracting the third moment from the fourth moment.

In a possible implementation, when the round trip time information is the round trip time period:

the processor is further configured to obtain the two-way delay between the first communication apparatus and the second communication apparatus through calculation by using the following method:

$$Two_way_delay=T2-T1-\Delta,$$

where

Two _way_delay is the two-way delay between the first communication apparatus and the second communication apparatus, T2 is the second moment, T1 is the first moment, and $\Delta$ is the round trip time period.

In a possible implementation, when the round trip time information is the third moment and the fourth moment:

the processor is further configured to obtain the two-way delay between the first communication apparatus and the second communication apparatus through calculation by using the following method:

$$Two_way_delay=(T2-T1)-(T4-T3),$$

where

Two _way_delay is the two-way delay between the first communication apparatus and the second communication apparatus, T4 is the fourth moment, T1 is the first moment, T3 is the third moment, and T2 is the second moment.

In a possible implementation, the first delay measurement information carries identification information; and the second delay measurement information carries the identification information.

The processor is further configured to store the first moment and the identification information in a memory of the first communication apparatus, where the first moment is in one-to-one correspondence with the identification information.

The processor is further configured to determine the first moment from the memory of the first communication apparatus based on the identification information in the second delay measurement information.

In a possible implementation, the first fine granularity service is a constant bit rate CBR service.

According to a sixth aspect, an embodiment of this application provides a network device, where the network device is used in a second communication apparatus, and the network device includes:

a transceiver, configured to obtain a third moment, where the third moment is a timestamp at which the second communication apparatus extracts an operation, administration and maintenance OAM block; and
the third moment is greater than a moment at which the second communication apparatus extracts a one-way delay measurement 1DM message or a two-way delay measurement 2DM message from a second block flow, and is less than or equal to a moment at which the second communication apparatus sends a second service bit flow, the second block flow carries a first fine granularity service, the second service bit flow is generated based on the second block flow, and the second service bit flow carries the first fine granularity service.

The transceiver is further configured to receive first delay measurement information from a first communication apparatus, where the first delay measurement information carries a first moment, and the first moment is a timestamp at which the first communication apparatus inserts the OAM block.

A processor is configured to determine a one-way delay from the first communication apparatus to the second communication apparatus based on the first moment and the third moment.

Alternatively, the transceiver is further configured to send second delay measurement information to the first communication apparatus, where the second delay measurement information is obtained based on the third moment, and the second delay measurement information indicates the first communication apparatus to determine a two-way delay between the first communication apparatus and the second communication apparatus.

In a possible implementation, the second delay measurement information is carried in a second service container, and the second service container carries a service slice obtained by the second communication apparatus by performing slicing processing based on the third service bit flow; and
the third service bit flow carries a second fine granularity service, and the second fine granularity service has an association relationship with the first fine granularity service.

In a possible implementation, the second delay measurement information is carried in the two-way delay measurement reply 2DMR message.

In a possible implementation, the first moment is carried in the first delay measurement information; and
the first delay measurement information carries the first moment, the first moment is greater than or equal to a moment at which the first communication apparatus receives a first service bit flow, the first moment is less than a moment at which the first communication apparatus inserts the one-way delay measurement 1DM message or the two-way delay measurement 2DM message into a first block flow, the first service bit flow carries the first fine granularity service, and the first block flow is obtained based on the first service bit flow.

In a possible implementation, the first delay measurement information is carried in a first service container, and the first service container carries a service slice obtained by the first communication apparatus by performing slicing processing based on the first service bit flow.

In a possible implementation, the first delay measurement information is carried in the 1DM message, or the first delay measurement information is carried in a two-way delay measurement message 2DMM message; and
a timestamp field of the 1DM message or the two-way delay measurement message 2DMM message carries the first moment.

In a possible implementation, the transceiver is further configured to obtain a fourth moment, where the fourth moment is a timestamp at which the second communication apparatus inserts an OAM block, the fourth moment is greater than or equal to a moment at which the second communication apparatus receives the third service bit flow, and is less than a moment at which the second communication apparatus inserts the two-way delay measurement reply 2DMR message into a third block flow, where the third block flow is generated based on the third service bit flow.

The transceiver is further configured to obtain round trip time information, where the round trip time information is determined based on the third moment and the fourth moment, and the round trip time information indicates a time interval from sending the second service bit flow by the second communication apparatus to receiving the third service bit flow by the second communication apparatus.

The transceiver is further configured to send the second delay measurement information to the first communication apparatus, where the second delay measurement information carries the round trip time information.

In a possible implementation, the round trip time information includes the third moment and the fourth moment; or the round trip time information includes a round trip time period, and the round trip time period is obtained by subtracting the third moment from the fourth moment.

In a possible implementation, the transceiver is further configured to obtain a fourth sub-moment, where the fourth sub-moment is a moment at which the second communication apparatus sends the second service bit flow.

The transceiver is further configured to obtain a fifth sub-moment, where the fifth sub-moment is a moment at which the second communication apparatus obtains a service container by demapping the second block flow.

The transceiver is further configured to obtain a sixth sub-moment, where the sixth sub-moment is a moment at which the second communication apparatus extracts the 1DM message or the 2DM message from the second block flow.

The processor is further configured to obtain the third moment through calculation in the following manner:

$$T3=t6+(t4-t5),$$

where
T3 is the third moment, t6 is the sixth sub-moment, t4 is the fourth sub-moment, and t5 is the fifth sub-moment.

In a possible implementation, the transceiver is further configured to obtain a seventh sub-moment, where the seventh sub-moment is a moment at which the second communication apparatus receives the third service bit flow.

The transceiver is further configured to obtain an eighth sub-moment, where the eighth sub-moment is a moment at which the second communication apparatus maps a service container corresponding to the third service bit flow to the third block flow.

The transceiver is further configured to obtain a ninth sub-moment, where the ninth sub-moment is the moment at which the second communication apparatus inserts the 2DMR message into the third block flow.

The processor is further configured to obtain the fourth moment through calculation in the following manner:

$$T4=t9-(t8-t7),$$

where
T4 is the fourth moment, t9 is the ninth sub-moment, t8 is the eighth sub-moment, and t7 is the seventh sub-moment.

In a possible implementation, the processor is further configured to obtain a one-way delay from the first communication apparatus to the second communication apparatus through calculation by using the following method:

$$One_way_delay=T3-T1,$$

where
One _way_delay is the one-way delay from the first communication apparatus to the second communication apparatus, T3 is the third moment, and T1 is the first moment.

In a possible implementation, the second fine granularity service is a constant bit rate CBR service.

According to a seventh aspect, a communication system is provided, where the communication system includes the network device according to the third aspect or the fourth aspect.

An eighth aspect of this application provides a computer storage medium. The computer storage medium may be non-volatile. The computer storage medium stores computer-readable instructions. When the computer-readable instructions are executed by a processor, the method according to any one of the implementations of the first aspect or the second aspect is implemented.

A ninth aspect of this application provides a computer program product including instructions. When the computer program product runs on a computer, the computer is enabled to perform the method according to any one of the implementations of the first aspect or the second aspect.

A tenth aspect of this application provides a chip system. The chip system includes a processor and an interface circuit, configured to support a network device in implementing functions in the foregoing aspects, for example, sending or processing data and/or information in the foregoing methods. In a possible design, the chip system further includes a memory. The memory is configured to store program instructions and data that are necessary for the network device. The chip system may include a chip, or may include a chip and another discrete component.

An eleventh aspect of this application provides a network device, where the network device is used as a first communication apparatus, and the network device includes: a communication interface; and
a processor connected to the communication interface, where based on the communication interface and the processor, the first communication apparatus performs the method according to the first aspect.

A twelfth aspect of this application provides a network device, where the network device is used as a second communication apparatus, and the network device includes: a communication interface; and
a processor connected to the communication interface, where based on the communication interface and the processor, the second communication apparatus performs the method according to the second aspect.

## BRIEF DESCRIPTION OF DRAWINGS

FIG. 1 is a schematic diagram of an application scenario in which a fine granularity technology is applied to a smart grid;
FIG. 2 is a schematic diagram of a structure of an FGU base frame;
FIG. 3a is a schematic diagram of a structure of an FGU multiframe;

FIG. 3b is a schematic diagram of an overhead of an FGU base frame;
FIG. 4A and FIG. 4B are a schematic diagram of a CBR service processing procedure;
FIG. 5 is a schematic diagram of a base frame payload;
FIG. 6 is a schematic diagram of a fine granularity service multiframe according to an embodiment of this application;
FIG. 7 is a schematic diagram of a network scenario according to an embodiment of this application;
FIG. 8A and FIG. 8B are a schematic diagram of a 1DM procedure;
FIG. 9A to FIG. 9C are a schematic diagram of a 2DM procedure;
FIG. 10 is a schematic diagram of an embodiment of a delay measurement method according to an embodiment of this application;
FIG. 11 is a schematic diagram of another embodiment of a delay measurement method according to an embodiment of this application;
FIG. 12A and FIG. 12B are a schematic diagram of an application scenario according to an embodiment of this application;
FIG. 13A and FIG. 13B are a schematic diagram of another application scenario according to an embodiment of this application;
FIG. 14A to FIG. 14C are a schematic diagram of an application scenario according to an embodiment of this application;
FIG. 15A to FIG. 15C are a schematic diagram of another application scenario according to an embodiment of this application;
FIG. 16A and FIG. 16B are a schematic diagram of another application scenario according to an embodiment of this application;
FIG. 17 is a schematic diagram of an expanded service container according to an embodiment of this application;
FIG. 18 is a schematic diagram of a structure of a communication apparatus 1800 according to an embodiment of this application;
FIG. 19 is a schematic diagram of a structure of a communication apparatus 1900 according to an embodiment of this application;
FIG. 20 is a schematic diagram of a structure of a communication apparatus 2000 according to an embodiment of this application;
FIG. 21 is a schematic diagram of a network system 2100 according to an embodiment of this application; and
FIG. 22 is a schematic diagram of a network system 2200 according to an embodiment of this application.

## DESCRIPTION OF EMBODIMENTS

The following describes embodiments of this application. It is clearly that described embodiments are merely some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the descriptions termed in such a manner are interchangeable in proper cases so that embodiments can be implemented in another order than the order illustrated or described in this application. Moreover, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, system, product, or device. Names or numbers of steps in this application do not mean that the steps in the method procedure need to be performed in a time/logical sequence indicated by the names or numbers. An execution order of the steps in the procedure that have been named or numbered can be changed based on a technical objective to be achieved, provided that same or similar technical effects can be achieved. Division into units in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

First, some technical concepts in embodiments of this application are described.

(1) Fine granularity technology

In the fine granularity technology, a fine granularity unit (fine granularity unit, FGU) carries a fine granularity service. The fine granularity technology inherits a high-efficiency ethernet kernel of a slicing packet network (slicing packet network, SPN) and integrates a fine-grained slicing technology into an overall architecture of the SPN to provide low-cost, refined, and hard-isolated fine granularity bearer pipes. The FGU refines a granularity of hard slicing from 5 gigabits per second (G-bits per-second, Gbps) to 10 megabits per second (megabits per second, Mbps), to meet differentiated service carrying requirements such as a small bandwidth, high isolation, and high security in scenarios such as a 5th generation mobile communication technology+ (5th generation mobile communication technology+, 5G+) vertical industry application and a private line service.

The following describes an application scenario of the fine granularity technology with reference to the accompanying drawings. For example, in a scenario shown in FIG. 1, FIG. 1 is a schematic diagram of an application scenario in which a fine granularity technology is applied to a smart grid. The smart grid includes many parts, which may include: a smart substation, a smart power distribution network, a smart electricity meter, a smart interactive terminal, smart scheduling, a smart household appliance, a smart power consumption building, a smart city power grid, a smart power generation system, and/or a new energy storage system.

The smart grid integrates an information technology, a sensor technology, an automatic control technology, and a power grid infrastructure to obtain panoramic information about the power grid and detect and predict possible faults in a timely manner. When a fault occurs, the power grid can quickly isolate the fault and implement self-recovery, preventing large-scale power outages. In the smart grid, wide application of technologies such as flexible alternating/direct current transmission, grid plant coordination, smart scheduling, power storage, and power distribution automation makes power grid operation control more flexible and economical and can adapt to access of a large quantity of distributed power supplies, microgrids, and electric vehicle charging and discharging facilities. The comprehensive application of communication, information, and modern management technologies will greatly improve utilization efficiency of power equipment, reduce power consumption, and make the power grid run more economically and efficiently. Real-time and non-real-time information is highly integrated, shared, and used, so that a comprehensive, complete, and refined grid running status diagram is displayed for operation management, and corresponding decision-making support, control implementation solutions, and response plans can be provided. A two-way interactive service mode is established in the smart grid. Users can learn about power supply capabilities, power quality, power price, and power outage information in real time, and properly use electrical appliances. Electric power enterprises can obtain detailed power consumption information of the users and provide more value-added services for the users.

Based on the foregoing requirements, smart grid services have high requirements on real-time performance and security. This type of services usually requires a bandwidth not greater than 20 Mbps, an end-to-end one-way delay less than 20 milliseconds (ms), and a high reliability and security requirement, to ensure that no power supply accident occurs due to a communication reason. This has typical service features of a small bandwidth, a deterministic low delay, high reliability, and high security. In a fine granularity service scenario, a plurality of terminal devices and network devices may be included, for example, a power management unit (Power Management Unit, PMU), a data transfer unit (Data Transfer unit, DTU) at each level, or various types of smart meters or smart switches.

In smart grid scenarios, a plurality of types of slices can be obtained through classification based on their functions. For example, a fine-granularity hard slice is for production services such as a transport network (area I) and a data dispatching network (area II); an MTN interface packet slice is for management services such as an integrated data network (area III) and an area IV; and an MTN interface packet slice is for public services.

It may be understood that the fine granularity technology may be further applied to a plurality of scenarios, including but not limited to: medical care, a port, a railway, a private line service, or the like. This is not limited herein.

(2) Fine granularity unit frame

(2) Fine granularity unit frame

The following describes a specific frame structure of a fine granularity unit. The fine granularity unit frame is also referred to as a fine granularity unit (fine granularity unit, FGU) frame or an FGU frame. In the fine granularity technology, a time division multiplexing (time-division multiplexing, TDM) mechanism is used to cyclically send fine granularity unit frames in a fixed period. A quantity of slots and locations of the slots included in each frame are strictly fixed. Therefore, a transmission period in each slot is also deterministic. To support more slot channels at a finer granularity and improve bandwidth utilization, for example, the fine granularity service solution uses a multiframe manner to perform slot division on a 5 Gbps granularity at an SPN channel layer or perform slot division on a 1 Gbps granularity.

The SPN channel layer is located at a physical coding sublayer (physical coding sublayer, PCS) layer of IEEE 802.3 and uses a PCS64/66B coding format of IEEE 802.3. The fine granularity unit frame uses a same 64/66B coding format as the SPN channel layer, encodes an overhead and a payload including a plurality of slots, and encapsulates the overhead and the payload into a fixed-length sequence of block S + block D + block T after encoding.

For example, the fine granularity unit frame includes an FGU base unit frame (also referred to as an FGU base frame, an FGU base frame, a base frame, or a single frame), and the FGU base frame has a fixed length, includes one start block (S0), 195 data blocks (D), and one termination block (T7), and has a total of 197 66B blocks (66B blocks). The 195 data blocks and the termination block (T7) of the single FGU frame provide 1567 (195x8+7) bytes of data content, including a 7-byte overhead and a 1560-byte payload. The payload is divided into 24 sub-slots (Sub-Slot) of a same size. The 66B blocks from the service are compressed from 66B to 65B and then filled in the sub-slot payloads. Each sub-slot (Sub-Slot) is 65 bytes, and can carry eight 65-bit blocks. Specifically, refer to FIG. 2. FIG. 2 is a schematic diagram of a structure of an FGU base frame. For an FGU multiframe, refer to FIG. 3a. FIG. 3a is a schematic diagram of a structure of an FGU multiframe. One FGU multiframe includes 20 FGU base frames. Each FGU base frame supports 24 slots. A 5 Gbps granularity at an SPN channel layer supports 480 slots. Each FGU base frame includes a base frame overhead (overhead, OH) and a base frame payload (payload). In embodiments of this application, the base frame overhead is also referred to as an overhead or an OH. It should be noted that the FGU base frame may further include other content. This is not limited in embodiments of this application.

A length of the overhead included in each FGU base frame is 56 bits. Refer to FIG. 3b. FIG. 3b is a schematic diagram of an overhead of an FGU base frame. The overhead includes: a multiframe indicator (MFI), a flag (Flag) field, a reserved (RES) field, and an overhead information area. Details are as follows:

Multiframe indicator (multiframe indicator, MFI): The MFI has a length of 6 bits and indicates a sequence number of each base frame in an FGU multiframe. For the 1st base frame in the multiframe, a value of an MFI is 0. For a base frame following the 1st base frame, a value of an MFI is sequentially increased by 1.

The flag (Flag) field indicates use of a bit location following a CA field in the overhead. The flag field is also referred to as an overhead channel usage indicator field.

The overhead information area includes: a slot increase adjustment announcement (S field), a slot effective indicator (C field), a change answer (change answer, CA) field (the CA field is also referred to as a slot adjustment answer field), a change request (change request, CR) field (the CR field is also referred to as a slot adjustment request field), a general communication channel (general communication channel, GCC), a client identifier (client ID), a slot identifier (sub-slot ID), and cyclic redundancy check (cyclic redundancy check, CRC).

(4) From a service bit flow to a fine granularity service multiframe

The following uses an example in which a fine granularity service is a constant bit rate (constant bit rate, CBR) service to describe how a node specifically processes a service bit flow to obtain a fine granularity service multiframe after receiving the service bit flow. It may be understood that the fine granularity service in embodiments of this application may alternatively be another service, for example, an ethernet (Ethernet) service, transmitted based on the fine granularity technology. This is not limited in embodiments of this application.

Refer to FIG. 4A and FIG. 4B. FIG. 4A and FIG. 4B are a schematic diagram of a CBR service processing procedure. The CBR service processing procedure is as follows:

S1. Perform service slicing.

In step S1, a node receives a service bit flow, where the service bit flow carries a CBR service. Specifically, the service bit flow includes j CBR service frames, where j is a positive integer greater than 1. After receiving the j CBR service frames, the node slices service data to obtain a corresponding service slice. A specific slicing solution includes: a bit transparent slicing mode, in which specific content of a service frame is not identified, and slicing is performed based on a fixed quantity of bits, for example, slicing is performed on every i bits to obtain a service slice, where i is a positive integer greater than 1; a frame slicing model, in which a specific frame format is identified, and then slicing is performed based on a fixed quantity of frames, for example, slicing is performed on every j frames to obtain a service slice, where j is a positive integer greater than 1.

S2. Perform slice encapsulation.

In step S2, after performing slicing processing on the service bit flow to obtain the corresponding service slice, the node performs encapsulation processing on the service slice to obtain a corresponding service container. Specifically, an overhead is added to the service slice, so that a length of the service slice to which the overhead is added is the same as a length of a lower-order slot payload, for example, both are Y bits, where Y is a positive integer greater than 1. A specific encapsulation procedure is as follows: One or more of the following information is added on the basis of the service slice: an expanded sequence (Expanded Sequence, ESQ) number, a frequency synchronization message (for example, a timestamp), a payload length, padding (padding), or a check field. The ESQ sequence number is for performing lossless protection or loss detection on the service slice. The frequency synchronization message is for transferring service-related clock information. When the length of the service slice is less than the length of the lower-order slot payload, the payload length or the padding needs to be encapsulated, where the payload length or the padding is for identifying a valid payload length. The check field is for performing bit error check on the service slice.

After adding the overhead to the service slice, the node further encapsulates the service slice to which the overhead is added, to obtain the service container. Specifically, frame boundary and frame interval encapsulations are added to the service slice to which the overhead is added, to obtain the service container.

Then, the node converts the service container into a 64B/66B block flow, to be specific, maps the service container to a corresponding block I, block S, block T, and block D.

S3. Insert an operation, administration and maintenance (operation, administration and maintenance, OAM) block.

In step S3, the node inserts the OAM block into the block flow. The OAM block is also referred to as an OAM message in embodiments of this application.

S4. Perform transcoding and compression to obtain data.

Step S4 is an optional step. To improve carrying efficiency of a data channel, transcoding and compression processing is performed on the 64B/66B block flow into which the OAM block is inserted. A specific transcoding algorithm may be a 64B/65B transcoding algorithm or a 256B/257B transcoding algorithm. This is not limited in embodiments of this application.

S5. Slice the data into lower-order slot payloads.

In step S5, the node performs slicing processing on a transcoded data flow based on a specific bit length. For example, the node performs slicing processing based on a payload length (Y bits, where Y is a positive integer greater than 1) per slot, where the payload length per slot is equal to the length of the lower-order slot payload. For another example, the payload length per slot may be Z blocks, and the block may be a 64B/66B block, a transcoded 64B/65B block, or a 256B/257B block. This is not limited in embodiments of this application.

After obtaining the lower-order slot payload, the node loads the lower-order slot payload to a base frame payload (payload). For details, refer to FIG. 5. FIG. 5 is a schematic diagram of a base frame payload. A process of encapsulating a fine granularity service base frame (the fine granularity service base frame is referred to as a base frame for short in embodiments of this application) is as follows: A block S (also referred to as a block /S/), a block D (also referred to as a block /D/), and a block T (also referred to as a block /T/) are encapsulated in the FGU base frame. Data fields in the block flow jointly form a payload (payload) field of the base frame. A data field in the block S is used as an optional field, and the block T may be any one of seven blocks $T_0$ to $T_7$. The base frame payload field is for loading (M/X) lower-order slot payloads and a lower-order slot overhead (overhead, OH) field. The (M/X) lower-order slot payload fields load different lower-order path (sub-Client) data based on a slot table, where M is a positive integer greater than 1, and X is a positive integer greater than 1. The lower-order slot overhead field includes a base frame sequence number, a lower-order-path slot allocation table, a management message channel (the management message channel is optional), overhead check (the overhead check is optional), and the like.

After obtaining the base frame, the node sends the base frame in a form of a fine granularity service multiframe, to be specific, maps the fine granularity service multiframe to an egress slot location and sends the fine granularity service multiframe. Specifically, refer to FIG. 6. FIG. 6 is a schematic diagram of a fine granularity service multiframe according to an embodiment of this application. A node divides a flexible ethernet (Flexible Ethernet, FlexE) client (Client) interface or a common ethernet (ETH) port with a bandwidth of N*5 (gigabit per second, Gbps) into M lower-order slots for cyclic transmission. Each cycle is defined as a multiframe, and the multiframe is further divided into X fixed-length base frames, where N is a positive integer greater than 1. A payload of each base frame carries (M/X) lower-order slots. The base frame is encapsulated by using a block S, a block T, and a block I (that is, an idle (idle) block), to determine a boundary of each base frame. Each base frame header carries some lower-order overheads, and X base frame overheads form a multiframe overhead to transmit a lower-order-path slot configuration and management message.

(5) Delay measurement of a fine granularity service

First, a network scenario in embodiments of this application is described. Refer to FIG. 7. FIG. 7 is a schematic diagram of a network scenario according to an embodiment of this application. A fine granularity service network (FGU network) includes an edge node 1, an edge node 2, and an intermediate node. The edge node 1 is considered as a source node, the edge node 2 is considered as a sink node, and the intermediate node includes Q nodes, where Q is an integer greater than 1. A bidirectional service flow (the bidirectional service flow is also referred to as a service bit flow) exists between the source node and the sink node, and the service flow carries a fine granularity service. In this embodiment of this application, a service flow direction of sending from the source node to the sink node is referred to as a first direction, and the first direction may also be referred to as a forward direction. A service flow direction of sending from the sink node to the source node is referred to as a second direction, and the second direction may also be referred to as a backward direction. The node may also be referred to as a network device, and the network device includes but is not limited to a switch, a router, or a packet transport network (packet transport network, PTN) device.

Based on the foregoing network scenario, delay measurement currently supported by the FGU network includes one-way delay measurement (One-way Delay Measurement, 1DM) and two-way delay measurement (Two-way Delay Measurement, 2DM). The following separately provides descriptions.

One-way delay measurement:

For ease of understanding, refer to FIG. 8A and FIG. 8B. FIG. 8A and FIG. 8B are a schematic diagram of a 1DM procedure. Currently, after receiving a service bit flow that carries a fine granularity service, the source node performs slicing processing on the service bit flow to obtain a corresponding service slice. Then, encapsulation processing is performed on the service slice to obtain a corresponding service container, and the service container is converted into a block flow. The source node determines an idle (idle) block between block flows corresponding to two adjacent service slices, and then replaces the idle block with a 1DM block. This procedure is also referred to as inserting a 1DM block (or referred to as inserting a 1DM message, where the 1DM message includes one or more 1DM blocks). In this case, the source node records a moment of inserting the 1DM block as H1. H1 is used as a moment (which may be specifically a moment at which the $1^{st}$ block (block) in the 1DM message is sent) at which the 1DM block is sent, and H1 is written into a timestamp (timestamp) field of the 1DM message. Then, the source node maps a block flow including the 1DM block to an egress slot location. Because data sent at the egress slot location carries a fine granularity service, a slot sent at the egress slot location is also referred to as fine granularity unit FGU slot data. Finally, the source node sends the FGU slot data through an ethernet interface or a flexible ethernet client (flexible ethernet client, FlexE Client) interface.

In this embodiment of this application, a resource granularity of the FGU slot data may be a slot, a sub-slot, a frame, a subframe, a multiframe, or the like. This is not limited in this embodiment of this application. For ease of description, in this embodiment of this application, an example in which the resource granularity of the FGU slot data is a sub-slot is used for description.

After the intermediate node receives the FGU slot data at an ingress slot location, the intermediate node sends the FGU slot data at an egress slot location. A mapping relationship between the ingress slot location and the egress slot location is indicated by a slot cross-configuration table.

The sink node receives, at an ingress slot location, the FGU slot data from the intermediate node through an ethernet interface or a flexible ethernet client (flexible ethernet client, FlexE Client) interface. First, the sink node performs demapping processing on the FGU slot data to obtain the corresponding block flow, to obtain one or more corresponding service containers. In this case, the sink node records a moment H3 at which the 1DM block is extracted from the block flow, where H3 is used as a moment (which may be specifically a moment at which the $1^{st}$ block (block) in the 1DM message is received) at which the 1DM block is received. Then, the sink node further decapsulates the service container to obtain the corresponding service slice. After the sink node extracts, from the 1DM block, the moment H1 at which the 1DM block is sent, the sink node calculates a one-way delay based on H1 and H3. Based on the calculated one-way delay, the sink node specifically reassembles the service bit flow by using a plurality of service slices. Finally, the sink node sends the service bit flow.

For descriptions of a related format of an OAM block of the 1DM message, refer to Table 1.

## Table 1

SH 0 1 2 3 4 5 6 7 8 9 10 11 12 13 14 15 16 17 18 19 20 21 22 23 24 25 26 27 28 29 30 31 32 33 34 35 36 37 38 39 40 41 42 43 44 45 46 47 48 49 50 51 52 53 54 55 56 57 58 59 60 61 62 63

| | | | | | | | | | | | | | | |
|---|---|---|---|---|---|---|---|---|---|---|---|---|---|---|
| Type | Priority | 1 | 0 | 0x4B | Data 1 | | Data 2 | Data 3 | 0xC | 0x0 | Data 4 | Data 5 | Data 6 | |
| | | 1 | 0 | LSB 0x4B MSB | Resv 00 | LSB Type MSB | LSB Value 1 MSB | LSB Value 2 MSB | LSB 0xC MSB | 0x0 | LSB Value 3 MSB | LSB Value 4 MSB | LSB Seq MSB | $X^3$ CRC4 $X^0$ |
| 1DM | L | 1 | 0 | 0x4B | Resv 00 | 0x12 | Tx-f-TS [B0] | Tx-f-TS [B1] | 0xC | 0x0 | Tx-f-TS [B2] | Tx-f-TS [B3] | 0x0 | CRC4 |
| | | 1 | 0 | 0x4B | Resv 00 | 0x12 | Tx-f-TS [B4] | Tx-f-TS [B5] | 0xC | 0x0 | Tx-f-TS [B6] | Tx-f-TS [B7] | 0x1 | CRC4 |

For descriptions of fields shown in Table 1, refer to Table 2.

**Table 2**

| Field | Location (Bit) | Field descriptions | Value |
|---|---|---|---|
| Type (Type) | BiH 12:17 | OAM type | 0x12: indicates that the OAM block is of a 1DM type |
| Tx-f-TS[0]/Tx-f-TS[4] | BiH 18:25 | Timestamp | Indicates a byte corresponding to the timestamp |
| Tx-f-TS[0]/Tx-f-TS[4] | BiH 36:33 | Timestamp | Indicates a byte corresponding to the timestamp |
| Tx-f-TS[0]/Tx-f-TS[4] | BiH 42:29 | Timestamp | Indicates a byte corresponding to the timestamp |
| Tx-f-TS[0]/Tx-f-TS[4] | Bit 50:57 | Timestamp | Indicates a byte corresponding to the timestamp |
| Seq | Bit 58:61 | Sequence number | Cycle: 0x0 to 0x1 |
| CRC4 | Bit 62:65 | Cyclic redundancy check (CRC) check | CRC check result of the OAM block |

Two-way delay measurement:

For ease of understanding, refer to FIG. 9A to FIG. 9C. FIG. 9A to FIG. 9C are a schematic diagram of a 2DM procedure. A 2DM message is specifically classified into a two-way delay measurement message (two delay measurement message, 2DMM) message and a two-way delay measurement reply (two delay measurement reply, 2DMR) message based on a location of a node sending the 2DM message in a network. In this embodiment of this application, for ease of description, an OAM block of the 2DM message is referred to as a 2DM block. Because the 2DM message includes the 2DMM message and the 2DMR message, an OAM block of the 2DMM message is referred to as a 2DMM block, and an OAM block of the 2DMR message is referred to as a 2DMR block. The 2DM message includes one or more 2DM blocks, the 2DMR message includes one or more 2DMR blocks, and the 2DMM message includes one or more 2DMM blocks.

FIG. 9A to FIG. 9C are used as an example for description. A source node is used as an initiator of delay measurement (or the source node is a node that initiates the delay measurement), and a sink node is a reflector of the delay measurement. Therefore, when the source node sends FGU slot data to the sink node, an inserted 2DM message is a 2DMM message; or when the sink node replies the source node with FGU slot data, an inserted 2DM message is a 2DMR message.

Currently, after receiving a service bit flow that carries a fine granularity service, the source node performs slicing processing on the service bit flow to obtain a corresponding service slice. For ease of differentiation, the fine granularity service carried by the service bit flow sent by the source node is referred to as a fine granularity service A. Then, encapsulation processing is performed on the service slice to obtain a corresponding service container, and the service container is converted into a block flow. The source node determines an idle (idle) block between block flows corresponding to two adjacent service slices, and then replaces the idle block with an OAM block of a 2DMM message. This procedure is also referred to as inserting a 2DMM block (or inserting a 2DMM message, where the 2DMM message includes one or more 2DMM blocks). In this case, the source node records a moment of inserting the 2DMM message as H1. H1 is used as a moment of sending the 2DMM message and is written into a timestamp (timestamp) field of the 2DMM message. Then, the source node maps the block flow including the 2DMM message to an egress slot location, where the egress slot location carries FGU slot data of the fine granularity service A. Finally, the source node encapsulates the FGU slot data into an ethernet interface or a FlexE client interface for sending.

After receiving, at an ingress slot location, the FGU slot data that carries the fine granularity service A, the intermediate node cross-maps the ingress slot location to an egress slot location based on a slot cross-configuration table. The intermediate node sends, at the egress slot location, the FGU slot data that carries the fine granularity service A.

After the sink node receives the FGU slot data from the intermediate node at an ingress slot location through an ethernet interface or a FlexE client interface, first, the sink node performs demapping processing on the FGU slot data to obtain the corresponding block flow, and further obtains a plurality of corresponding service containers. In this case, the sink node records a moment H3 at which the 2DMM message is extracted from the block flow, where H3 is used as a moment at which the 2DMM message is received. Then, the sink node further decapsulates the service container to obtain the corresponding service slice. The sink node reassembles, by using a plurality of service slices, the service bit flow that carries the fine granularity service A. Finally, the sink node sends the service bit flow.

After the sink node receives a service bit flow of a fine granularity service B corresponding to the fine granularity service A, the sink node performs slicing processing on the service bit flow to obtain a corresponding service slice. Then, encapsulation processing is performed on the service slice to obtain a corresponding service container, and the service container is converted into a block flow. The sink node determines an idle (idle) block between blocks corresponding to two adjacent service slices in the block flow, and then replaces the idle block with an OAM block of a 2DMR message. This procedure is also referred to as inserting a 2DMR message (or inserting a 2DMR block). In this case, the sink node records a moment of inserting the 2DMR message as H4. H4 is used as a moment of sending the 2DMR message and is written into a timestamp (timestamp) field of the 2DMR message. H1 and H3 are also written into the timestamp field of the 2DMR message. Then, the sink node maps the block flow including the 2DMR message to an egress slot location, where the egress slot location carries FGU slot data of the fine granularity service B. Finally, the sink node encapsulates the FGU slot data (the fine granularity service B) into an ethernet interface or a FlexE client interface for sending.

After receiving, at the ingress slot location, a slot that carries the FGU slot data (the fine granularity service B), the intermediate node cross-maps the ingress slot location to the egress slot location based on the slot cross-configuration table. The intermediate node sends, at the egress slot location, the FGU slot data that carries the fine granularity service B.

After the source node receives, at the ingress slot location through the ethernet interface or the FlexE client interface, the FGU slot data that carries the fine granularity service B from the intermediate node, first, the source node performs demapping processing on the FGU slot data to obtain the corresponding block flow, and further obtains a plurality of corresponding service containers. In this case, the source node records a moment H2 at which the 2DMR message is extracted from the block flow, where H2 is used as a moment at which the 2DMR message is received. The source node further extracts H1, H3, and H4 from the 2DMR message. Then, the source node performs further decapsulation processing on the service container to obtain the corresponding service slice. After the source node extracts the moments H1, H3, and H4 from the 2DMR message, the source node calculates a two-way delay based on H1, H2, H3, and H4. The source node reassembles the service bit flow by using the plurality of service slices. Finally, the source node sends a service bit flow on which delay compensation processing is performed.

For descriptions of a related format of an OAM block of the 2DMM message, refer to Table 3.

## Table 3

| | | SH | | 0–7 | 8–9 | 10–15 | 16–23 | 24–31 | 32–35 | 36–39 | 40–47 | 48–55 | 56–59 | 60–63 |
|---|---|---|---|---|---|---|---|---|---|---|---|---|---|---|
| Type | Priority | 1 | 0 | 0x4B | Data 1 | | Data 2 | Data 3 | 0xC | 0x0 | Data 4 | Data 5 | Data 6 | |
| | | 1 | 0 | LSB 0x4B MSB | Resv 00 | LSB Type MSB | LSB Value 1 MSB | LSB Value 2 MSB | LSB 0xC MSB | 0x0 | LSB Value 3 MSB | LSB Value 4 MSB | LSB Seq MSB | $X^3$ CRC4 $X^0$ |
| 2DMM | L | 1 | 0 | 0x4B | Resv 00 | 0x13 | Tx-f-TS [B0] | Tx-f-TS [B1] | 0xC | 0x0 | Tx-f-TS [B2] | Tx-f-TS [B3] | 0x0 | CRC4 |
| | | 1 | 0 | 0x4B | Resv 00 | 0x13 | Tx-f-TS [B4] | Tx-f-TS [B5] | 0xC | 0x0 | Tx-f-TS [B6] | Tx-f-TS [B7] | 0x1 | CRC4 |

For descriptions of fields shown in Table 3, refer to Table 4.

**Table 4**

| Field | Location | Field description | Value |
|---|---|---|---|
| Type | BiH 12:17 | OAM type | 0x14: indicates that the OAM block is of a 2DMR type |
| Tx_f_TS [B0]/Tx_f_TS[B4]/ Rx_b_TS [B0]/Rx_b_TS[B4]/ Tx_b_TS [B0]/Tx_b_TS[B4]/ | BiH 18:25 | Timestamp | Tx_f_TS: forward sending timestamp<br>Rx_b_TS: backward receiving timestamp<br>Tx_b_TS: backward sending timestamp |
| Tx_f_TS [B1]/Tx_f_TS[B5]/ Rx_b_TS [B1]/Rx_b_TS[B5]/ Tx_b_TS[B1]/Tx b_TS[B5]/ | BiH 26:33 | Timestamp | Tx_f_TS: forward sending timestamp<br>Rx_b_TS: backward receiving timestamp<br>Tx_b_TS: backward sending timestamp |
| Tx_f_TS [B2]/Tx_f_TS[B6]/ Rx_b_TS [B2]/Rx_b_TS[B6]/ Tx_b_TS[B2]/Tx b_TS[B6]/ | BiH 42:29 | Timestamp | Tx_f_TS: forward sending timestamp<br>Rx_b_TS: backward receiving timestamp<br>Tx_b_TS: backward sending timestamp |
| Tx _f TS[B3]/Tx _f_TS[B7]/ Rx _b_TS [B3]/Rx_b_TS[B7]/ Tx_b_TS[B3]/Tx b_TS[B7]/ | Bit 50:57 | Timestamp | Tx_f_TS: forward sending timestamp<br>Rx_b_TS: backward receiving timestamp<br>Tx_b_TS: backward sending timestamp |
| Seq | Bit 58:61 | Sequence number | Cycle: 0x0 to 0x5 |
| CRC4 | Bit 62:65 | CRC check | CRC check result of the OAM block |

After studying the one-way delay measurement procedure and the two-way delay measurement procedure, the applicant finds that a detection blind area exists in the current one-way delay measurement procedure and two-way delay measurement procedure. Specifically, in the one-way delay measurement, a time period from receiving the service bit flow by the source node to inserting the 1DM message is not counted into the delay, and a time period in which the sink node extracts the 1DM message from the block flow is not counted into the delay. In the two-way delay measurement, first, in a first direction, a time period from receiving the service bit flow by the source node to inserting the 2DMM message is not counted into the delay, and a time period from extracting the 2DMM message from the block flow by the sink node to sending the service bit flow is not counted into the delay. In a second direction, a time period from extracting the 2DMR message from the ingress slot location by the source node to sending the service bit flow is not counted into the delay.

Based on this, embodiments of this application provide a delay measurement method. A first communication apparatus obtains a first moment, where the first moment is a timestamp at which the first communication apparatus inserts an operation, administration and maintenance OAM block, the first moment is greater than or equal to a moment at which the first communication apparatus receives a first service bit flow, the first moment is less than a moment at which the first communication apparatus inserts a one-way delay measurement 1DM message or a two-way delay measurement 2DM message into a first block flow, the first service bit flow carries a first fine granularity service, and the first block flow is obtained by processing the first service bit flow. The first communication apparatus sends first delay measurement information to a second communication apparatus, where the first delay measurement information carries the first moment, and the first delay measurement information is for measuring a delay between the first communication apparatus and the second communication apparatus. According to the foregoing method, a detection blind area in a one-way delay measurement procedure and a two-way delay measurement procedure is reduced, and delay measurement accuracy is improved, thereby improving communication quality and reducing a service interruption probability.

It should be noted that the fine granularity service in embodiments of this application may be a constant bit rate (constant bit rate, CBR) service, or may be another fine granularity service. This is not limited in embodiments of this application. In embodiments of this application, an example in which the fine granularity service (that is, a first fine granularity service and/or a second fine granularity service) is a CBR service is used for description.

The following specifically describes embodiments of this application with reference to the accompanying drawings. Embodiments of this application may be specifically classified into the following cases based on a delay measurement scenario:

(1) One-way delay measurement
(2) Two-way delay measurement

Embodiments of this application may be specifically classified into the following cases based on a carrying mode of delay measurement information:

(a) The delay measurement information is carried in a service container.
(b) The delay measurement information is carried in a one-way delay measurement 1DM message or a two-way delay measurement 2DM message.

First, (1) one-way delay measurement is introduced. Refer to FIG. 10. FIG. 10 is a schematic diagram of an embodiment of a delay measurement method according to an embodiment of this application. An embodiment of this application provides a delay measurement method, including the following steps.

1001. Obtain a first moment, where the first moment is a timestamp at which a first communication apparatus inserts an OAM block, the first moment is greater than or equal to a moment at which the first communication apparatus receives a first service bit flow, and the first moment is less than a moment at which the first communication apparatus inserts a one-way delay measurement 1DM block or a two-way delay measurement 2DM block into an egress slot, the first service bit flow carries a first fine granularity service, and the egress slot carries the first fine granularity service.

In this embodiment, the first communication apparatus obtains the first moment, where the first moment is the timestamp at which the first communication apparatus inserts the OAM block, the first moment is greater than or equal to the moment at which the first communication apparatus receives the first service bit flow, the first moment is less than the moment at which the first communication apparatus inserts the one-way delay measurement 1DM message into a first block flow, the first service bit flow carries the first fine granularity service, and the first block flow is obtained by processing the first service bit flow.

Specifically, the scenario shown in FIG. 7 is used as an example for description. The first communication apparatus is used in a source node. After the first communication apparatus receives the first service bit flow, the first communication apparatus processes the first service bit flow. A specific processing procedure is similar to the scenarios shown in FIG. 4A and FIG. 4B and FIG. 5. First, the first communication apparatus performs slicing processing on the first service bit flow to obtain a service slice corresponding to the first service bit flow. The service slice is also referred to as a service slice corresponding to a first fine granularity service.

Then, the first communication apparatus encapsulates the service slice to obtain a service container. Specifically, one or more of the following information is added on the basis of the service slice: an expanded sequence (Expanded Sequence, ESQ) number, a frequency synchronization message (for example, a timestamp), a payload length, padding (padding), or a check field. The ESQ sequence number is for performing lossless protection or loss detection on the service slice. The frequency synchronization message is for transferring service-related clock information. When a length of the service slice is less than a length of a lower-order slot payload, the payload length or the padding needs to be encapsulated, where the payload length or the padding is for identifying a valid payload length. The check field is for performing bit error check on the service slice.

After adding an overhead to the service slice, the first communication apparatus further encapsulates the service slice to which the overhead is added, to obtain the service container. Specifically, frame boundary and frame interval encapsulations are added to the service slice to which the overhead is added, to obtain the service container.

Then, the first communication apparatus converts the service container into a 64B/66B block flow, to be specific, maps the service container to a corresponding block I, block S, block T, and block D.

Then, the first communication apparatus inserts an operation, administration and maintenance (operation, administration and maintenance, OAM) block into the block flow.

Then, the first communication apparatus maps the block flow into which the OAM block is inserted to an egress slot location of the first communication apparatus. Data that is of the block flow and that is mapped to the egress slot location is referred to as FGU slot data.

Finally, the first communication apparatus sends the FGU slot data at the egress slot location through an ethernet interface or a flexible ethernet client (flexible ethernet client, FlexE Client) interface.

In the foregoing procedure, the first communication apparatus obtains the first moment.

For example, the scenario shown in FIG. 7 is used as an example for description. The first communication apparatus is used in a source node. After the first communication apparatus receives the first service bit flow, the first communication apparatus first obtains the first moment, and a fine granularity service carried in the first service bit flow is referred to as the first fine granularity service. A specific method for recording the first moment includes:

A. The first communication apparatus records a moment of receiving a specific bit in the first service bit flow. For example, the specific bit may be the 1$^{st}$ bit, the 100$^{th}$ bit, the 200$^{th}$ bit, the 500$^{th}$ bit, and/or the 1000$^{th}$ bit of the service bit flow.

B. The first communication apparatus periodically records a receiving moment based on a quantity of bits of the received service bit flow, where the receiving moment is used as the first moment. For example, each time the first communication apparatus receives 1000 bits, the first communication apparatus records a receiving moment (for example, a receiving moment of the 1001$^{st}$ bit), and the receiving moment is used as the first moment.

C. When the first communication apparatus receives the service bit flow, a receiving moment is recorded every one or more bits. Then, a receiving moment is periodically selected as the first moment. For example, each time the first communication apparatus receives one bit, the first communication apparatus records a receiving moment. The first communication apparatus determines a moment at an interval of 1000 receiving moments as the first moment.

In a solution in which delay measurement information is carried in the one-way delay measurement 1DM message in a one-way delay measurement scenario, the manner of recording the first moment further includes:

First, the first communication apparatus obtains a first sub-moment, where the first sub-moment is a moment at which the first communication apparatus receives the first service bit flow. For example, the first sub-moment is a moment at which the first communication apparatus receives a specific bit in the first service bit flow.

The first communication apparatus obtains a second sub-moment, where the second sub-moment is a moment at which the first communication apparatus maps a service container corresponding to the first service bit flow to the first block flow. For example, in a process in which the first communication apparatus maps, to the first block flow, the service container that carries a specific bit, when the first communication apparatus maps, to a block location that carries the service container in the first block flow, the service container corresponding to the first service bit flow, a moment of the mapping is recorded as the second sub-moment.

The first communication apparatus obtains a third sub-moment, where the third sub-moment is a moment at which the first communication apparatus inserts the 1DM message into the first block flow. For example, in a process (that is, the processing procedures shown in FIG. 4A and FIG. 4B and FIG. 5) in which the first communication apparatus processes the first service bit flow to obtain the first block flow, and then maps the first block flow to the egress slot location, the first communication apparatus records a moment at which the 1DM block is inserted into the first block flow as the third sub-moment.

For example, the first communication apparatus obtains the first moment through calculation in the following manner:

$$T1=t3-(t2-t1),$$

where T1 is the first moment, t3 is the third sub-moment, t2 is the second sub-moment, and t1 is the first sub-moment.

According to the foregoing method, the first moment meets the following features: The first moment is greater than or equal to the moment at which the first communication apparatus receives the first service bit flow, and the first moment is less than the moment at which the first communication apparatus inserts the one-way delay measurement 1DM message into the first block flow.

1002. The first communication apparatus sends first delay measurement information to a second communication apparatus, where the first delay measurement information carries the first moment.

In this embodiment, after the first communication apparatus obtains the first moment, in the one-way delay measurement scenario, the first communication apparatus needs to notify the second communication apparatus of the first moment. In this embodiment of this application, the first communication apparatus sends the first delay measurement information to the second communication apparatus, where the first delay measurement information carries the first moment.

Specifically, the first delay measurement information may be carried in the service container, or the first delay measurement information may be carried in the 1DM message. The following separately provides descriptions.

(aa) The first delay measurement information is carried in a first service container, and the first service container carries the service slice obtained by the first communication apparatus by performing slicing processing based on the first service bit flow.

Specifically, in this embodiment of this application, a service container carrying the first delay measurement information is referred to as the first service container. The service container includes one or more of the following information (or fields): a payload (the payload is for carrying a service slice), an ESQ sequence number (optional), a frequency synchronization message (timestamp), a payload length (optional), padding (optional), and check (optional).

In an optional implementation, a field included in the service container is expanded, and an expanded service container further includes a first field. For ease of understanding, refer to FIG. 17. FIG. 17 is a schematic diagram of an expanded service container according to an embodiment of this application. The expanded service container is shown in FIG. 17, and the first field is added. The first field carries the first delay measurement information. For example, the first field records the first moment.

In another optional implementation, the first delay measurement information is carried in another field in the service container. For example, a padding field in the service container carries the first delay measurement information. In other words, the padding field in the service container records the first moment. For another example, some empty bits are reserved in a service slice field in the service container, and the first moment is recorded in the empty bits.

Optionally, in addition to the first moment, the first delay measurement information may further include indication information, and the indication information indicates that the first moment is for delay measurement. For example, the service container shown in FIG. 17 further includes a second field, where the first field and the second field jointly carry the first delay measurement information, the first field is for carrying the first moment, the second field is for carrying indication information, and the indication information indicates whether the first field in the service container is for delay measurement. For example, the first communication apparatus generates a plurality of service containers based on the first service bit flow, and a first field in each service container records a receiving moment carried in the service container. The first communication apparatus selects one or more service containers to carry the first delay measurement information. A second field in a selected service container for carrying the first delay measurement information is filled with indication information, where the indication information indicates that a receiving moment carried in a first field in the corresponding service container is the first moment. For example, details are shown in Table 5.

**Table 5**

| Whether first delay measurement information is carried | Service container | | |
|---|---|---|---|
| | Sequence number | First field | Second field |
| No | 01 | 000 minute 000 second 001 millisecond 001 microsecond | 0 |
| Yes | 05 | 000 minute 000 second 001 millisecond 050 microsecond | 1 |
| No | 25 | 000 minute 000 second 001 millisecond 231 microsecond | 0 |

(bb) The first delay measurement information is carried in the 1DM message.

Specifically, because the 1DM message includes a timestamp (timestamp) field, the first communication apparatus may replace a moment recorded in the timestamp field of the original 1DM message with the first moment. In this case, it is considered that the 1DM message carries the first delay measurement information. It should be noted that, in embodiments of this application, a quantity of OAM blocks included in the 1DM message is not limited. For example, the first delay measurement information may be carried in one or more OAM blocks (namely, 1DM blocks). After the first communication apparatus generates the first delay measurement information, the first communication apparatus maps the first block flow including the first delay measurement information to the egress slot location, and then sends the FGU slot data at the egress slot location through an ethernet interface or a FlexE client interface. The FGU slot data includes the first delay measurement information, and the FGU slot data includes one or more sub-slots. The FGU slot data arrives at the second communication apparatus after being transmitted by Q intermediate nodes. The second communication apparatus is used in a sink node.

It may be understood that the first delay measurement information in embodiments of this application may include a first moment generated based on one fine granularity service, or may include a plurality of first moments generated based on a plurality of fine granularity services. For example, the first service container includes R1 (the first moment of the first fine granularity service), R3 (a first moment of a third fine granularity service), and R5 (a first moment of a fifth fine granularity service). In other words, the first moments that are obtained through measurement based on the plurality of fine granularity services in the first communication apparatus are transmitted in a same service container. For another example, the 1DM message includes R1, R3, and R5. In other words, the first moments that are obtained through measurement based on the plurality of fine granularity services in the first communication apparatus are transmitted in a same 1DM message.

1003. The second communication apparatus obtains a third moment, where the third moment is a timestamp at which the second communication apparatus extracts the OAM block.

In this embodiment, the second communication apparatus obtains the third moment, and the third moment is the timestamp at which the second communication apparatus extracts the OAM block.

Specifically, the scenario shown in FIG. 7 is used as an example for description. The second communication apparatus is used in a sink node. When the second communication apparatus receives the FGU slot data at an ingress slot location through an ethernet interface or a FlexE client interface, the FGU slot data carries the first fine granularity service. Therefore, the foregoing procedure is also referred to as receiving the FGU slot data by the sink node. Then, the second communication apparatus processes the FGU slot data. A specific processing procedure is similar to the scenarios shown in FIG. 4A and FIG. 4B and FIG. 5. First, the second communication apparatus demaps the FGU slot data at the ingress slot location to obtain a block flow (for example, a 64B/66B block flow). The block flow is referred to as a second block flow. Then, data in the second block flow is extracted, for example, an OAM block is extracted.

Then, the second communication apparatus performs decapsulation processing on the second block flow to obtain a corresponding service container. Then, the second communication apparatus performs further decapsulation processing on the service container to obtain a corresponding service slice. Then, the second communication apparatus performs reassembling processing based on a plurality of service slices, to obtain a corresponding service bit flow. Finally, the second communication apparatus sends the service bit flow. For ease of differentiation, the service bit flow sent by the second communication apparatus is referred to as a second service bit flow, and the second service bit flow carries the first fine granularity service.

In the foregoing procedure, the second communication apparatus obtains the third moment. For example, the scenario shown in FIG. 7 is used as an example for description. The second communication apparatus is used in a sink node. After the first communication apparatus sends the first delay measurement information to the second communication apparatus, the second communication apparatus receives, at an ingress slot location through an ethernet interface or a FlexE client interface, the FGU slot data that carries the first delay measurement information.

Optionally, for different carrying manners of the first delay measurement information, the second communication apparatus obtains the third moment by using a plurality of methods:

(aa) When the first delay measurement information is carried in the first service container:

After the second communication apparatus receives the FGU slot data, the second communication apparatus performs demapping processing on the FGU slot data to obtain the corresponding service container. When the second communication apparatus finds that the service container carries the first delay measurement information, the second communication apparatus records the third moment. The service container carrying the first delay measurement information is referred to as the first service container.

The third moment may be a moment (the first moment) at which the second communication apparatus extracts the first delay measurement information from the first service container, or the third moment may be a moment at which the second communication apparatus sends a service bit flow (that is, the second service bit flow) after reassembling the service bit flow by using the service slice corresponding to the first service container. This is not limited in this embodiment of this application.

(bb) The first delay measurement information is carried in the 1DM block.

After the second communication apparatus receives the FGU slot data, the second communication apparatus performs demapping processing on the FGU slot data to obtain the corresponding second block flow. A manner in which the second communication apparatus obtains the third moment is as follows:

The second communication apparatus obtains a fourth sub-moment, where the fourth sub-moment is a moment at which the second communication apparatus sends the second service bit flow. For example, the fourth sub-moment may be a moment at which the second communication apparatus sends a specific bit in the second service bit flow. For example, the specific bit may be the 1st bit, the 100th bit, the 200th bit, the 500th bit, and/or the 1000th bit of the second service bit flow.

The second communication apparatus obtains a fifth sub-moment, where the fifth sub-moment is a moment at which the second communication apparatus obtains a service container by demapping the second block flow. For example, the second communication apparatus demaps FGU slot data at an ingress slot location to the second block flow, where the second block flow corresponds to the first fine granularity service. Then, in a process of processing the second block flow by the second communication apparatus, when performing demapping processing on a block location that carries a service container in the second block flow, the second communication apparatus records the moment as the fifth sub-moment. The second communication apparatus may perform demapping processing on the block location corresponding to the service container in the second block flow to obtain the corresponding service container.

The second communication apparatus obtains a sixth sub-moment, where the sixth sub-moment is a moment at which the second communication apparatus extracts the 1DM message from the second block flow. For example, the second communication apparatus demaps FGU slot data to obtain the second block flow. When extracting the 1DM message from the second block flow, the second communication apparatus records the moment at which the 1DM message is extracted as the sixth sub-moment.

The second communication apparatus obtains the third moment through calculation in the following manner:

$$T3=t6+(t4-t5),$$

where T3 is the third moment, t6 is the sixth sub-moment, t4 is the fourth sub-moment, and t5 is the fifth sub-moment.

According to the foregoing method, the third moment meets the following features: The third moment is greater than the moment at which the second communication apparatus extracts the one-way delay measurement 1DM message from the second block flow, and the third moment is less than or equal to the moment at which the second communication apparatus sends the second service bit flow, where the second service bit flow is obtained by processing the second block flow, and the second service bit flow carries the first fine granularity service.

1004. The second communication apparatus determines a one-way delay from the first communication apparatus to the second communication apparatus based on the first moment and the third moment.

In this embodiment, after the second communication apparatus obtains the first moment and the third moment, the second communication apparatus determines the one-way delay from the first communication apparatus to the second communication apparatus based on the first moment and the third moment. Specifically, the second communication apparatus obtains the one-way delay from the first communication apparatus to the second communication apparatus through calculation by using the following method:

$$One_way_delay=T3-T1,$$

where

One_way_delay is the one-way delay from the first communication apparatus to the second communication apparatus, T3 is the third moment, and T1 is the first moment.

In this embodiment of this application, the first communication apparatus obtains the first moment, where the first moment is the timestamp at which the first communication apparatus inserts the operation, administration and maintenance OAM block, the first moment is greater than or equal to the moment at which the first communication apparatus receives the first service bit flow, the first moment is less than the moment at which the first communication apparatus inserts the one-way delay measurement 1DM message into the first block flow, the first service bit flow carries the first fine granularity service, and the first block flow is obtained based on the first service bit flow. The first communication apparatus sends the first delay measurement information to the second communication apparatus, where the first delay measurement information carries the first moment, and the first delay measurement information is for measuring the delay between the first communication apparatus and the second communication apparatus. According to the foregoing method, a detection blind area in one-way delay measurement is reduced, and delay measurement accuracy is improved, thereby improving communication quality and reducing a service interruption probability.

Based on the embodiment shown in FIG. 10, the following first describes (a1) that delay measurement information is carried in a service container in a one-way delay measurement scenario. Refer to FIG. 12A and FIG. 12B. FIG. 12A and FIG. 12B are a schematic diagram of an application scenario according to an embodiment of this application.

A source node receives a first service bit flow, where the first service bit flow corresponds to a first fine granularity service. After receiving the first service bit flow, the source node performs slicing processing on the first service bit flow to obtain a plurality of service slices. Then, the source node encapsulates the service slice to obtain a corresponding service container. In the foregoing process, the source node obtains a first moment, where the first moment is a timestamp at which the source node inserts an OAM block. Then, the source node inserts first delay measurement information (the first delay measurement information includes the first moment) into the service container obtained through encapsulation, where the service container carrying the first delay measurement information is referred to as a first service container.

After converting a plurality of service containers into a first block flow, the source node maps the first block flow to an egress slot location. Data sent at the egress slot location is also referred to as FGU slot data because the data carries a fine granularity service. Finally, the source node sends the FGU slot data to a next-hop node (that is, an intermediate node) through a physical interface.

After the intermediate node receives the FGU slot data at an ingress slot location through the physical interface, the intermediate node maps the ingress slot location to an egress slot location based on a slot cross-configuration table. The slot cross-configuration table indicates a mapping rule from the ingress slot location to the egress slot location on the intermediate node. Then, the intermediate node sends the FGU slot data at the egress slot location through a physical interface.

A sink node receives the FGU slot data at an ingress slot location through the physical interface. Then, the sink node performs demapping processing on the FGU slot data to obtain a corresponding service container. Further, the sink node performs decapsulation processing on the service container, to obtain a corresponding service slice and the first delay measurement information. The sink node reassembles a second service bit flow by using a plurality of service slices. The sink node sends the second service bit flow through a physical interface. In the foregoing procedure, the sink node extracts the first moment in the first delay measurement information. The sink node records a third moment, where the third moment is a timestamp at which the sink node extracts the OAM block.

Finally, the sink node calculates a one-way delay from the source node to the sink node based on the first moment and the third moment. The first moment meets: The first moment is greater than or equal to a moment at which the first communication apparatus receives the first service bit flow, and the first moment is less than a moment at which the first communication apparatus inserts a one-way delay measurement 1DM message into the first block flow, where the first block flow is obtained by processing the first service bit flow. The third moment meets: The third moment is greater than a moment at which the second communication apparatus demaps the second block flow to obtain a one-way delay measurement 1DM message, and the third moment is less than or equal to a moment at which the second communication apparatus sends the second service bit flow. Therefore, a detection blind area in the one-way delay measurement procedure is reduced, and delay measurement accuracy is improved, thereby improving communication quality and reducing a service interruption probability.

Next, based on the embodiment shown in FIG. 10, (a2) that delay measurement information is carried in a one-way delay measurement 1DM message in a one-way delay measurement scenario is described. Refer to FIG. 13A and FIG. 13B. FIG. 13A and FIG. 13B are a schematic diagram of another application scenario according to an embodiment of this application.

A source node receives a first service bit flow, where the first service bit flow corresponds to a first fine granularity service. After receiving the first service bit flow, the source node performs slicing processing on the first service bit flow to obtain a plurality of service slices. Then, the source node encapsulates the service slice to obtain a corresponding service container.

In the foregoing process, the source node obtains a first moment, where the first moment is a timestamp at which the source node inserts an OAM block. Optionally, a method for obtaining the first moment is as follows: The first communication apparatus obtains a first sub-moment, where the first sub-moment is a moment at which the first communication apparatus receives the first service bit flow. The first communication apparatus obtains a second sub-moment, where the second sub-moment is a moment at which the first communication apparatus maps a service container corresponding to the first service bit flow to the first block flow. The first communication apparatus obtains a third sub-moment, where the third sub-moment is a moment at which the first communication apparatus inserts the 1DM message into the first block flow. Finally, the first communication apparatus obtains the first moment through calculation in the following manner: $T1=t3-(t2-t1)$, where T1 is the first moment, t3 is the third sub-moment, t2 is the second sub-moment, and t1 is the first sub-moment. According to the foregoing method, the first moment meets the following features: The first moment is greater than or equal to the moment at which the first communication apparatus receives the first service bit flow, and the first moment is less than the moment at which the first communication apparatus inserts the one-way delay measurement 1DM message into the first block flow.

After further performing encapsulation processing on a plurality of service containers, the source node maps the plurality of service containers to an egress slot location, where data carried in the egress slot location is referred to as FGU slot data. Specifically, the source node inserts, into the first block flows obtained by mapping the plurality of service containers, a 1DM message that carries first delay measurement information. Then, the source node maps the first block flow (including the 1DM message carrying the first delay measurement information) to the egress slot location. Finally, the source node sends the FGU slot data to a next hop (that is, an intermediate node) at the egress slot location through a physical interface.

After the intermediate node receives the FGU slot data at an ingress slot location through the physical interface, the intermediate node maps the ingress slot location to an egress slot location based on a slot cross-configuration table. The slot cross-configuration table indicates a mapping rule from the ingress slot location to the egress slot location on the intermediate node. Then, the intermediate node sends the FGU slot data (that is, FGU slot data received by the intermediate node at the ingress slot location) at the egress slot location through the physical interface.

A sink node receives the FGU slot data at an ingress slot location through the physical interface. Then, the sink node performs demapping processing on the FGU slot data to obtain a corresponding service container and the 1DM message.

Specifically, the sink node performs demapping processing on the FGU slot data to obtain a corresponding second block flow. When processing a block location corresponding to a service container in the second block flow, the sink node records a processing moment as a fifth sub-moment. Then, the sink node performs decapsulation processing on the service container obtained through demapping, to obtain a corresponding service slice.

The sink node records a moment at which the sink node extracts the 1DM message from the second block flow as a sixth sub-moment. For example, the sink node demaps the FGU slot data to obtain the second block flow. When extracting the 1DM message in the second block flow, the second communication apparatus records the moment at which the 1DM message is extracted as the sixth sub-moment.

After the sink node decapsulates one or more service containers, the sink node obtains one or more service slices through decapsulation. The sink node reassembles a second service bit flow by using a plurality of service slices. The sink node sends the second service bit flow through a physical interface.

In the foregoing procedure, the sink node obtains the fourth sub-moment, the fifth sub-moment, and the sixth sub-moment. Further, the sink node obtains the third moment through calculation based on the fourth sub-moment, the fifth sub-moment, and the sixth sub-moment, where the third moment is the timestamp at which the sink node extracts the OAM block. The second communication apparatus obtains the third moment through calculation in the following manner: $T3=t6+(t4-t5)$, where T3 is the third moment, t6 is the sixth sub-moment, t4 is the fourth sub-moment, and t5 is the fifth sub-moment. According to the foregoing method, the third moment meets the following features: The third moment is greater than the moment at which the second communication apparatus obtains the one-way delay measurement 1DM message from the second block flow through demapping, and the third moment is less than or equal to the moment at which the second communication apparatus sends the second service bit flow, where the second service bit flow carries the first fine granularity service.

Finally, the sink node calculates a one-way delay from the source node to the sink node based on the first moment and the third moment. According to the foregoing method, a detection blind area in a one-way delay measurement procedure can be reduced, and delay measurement accuracy can be improved, thereby improving communication quality and reducing a service interruption probability.

Next, (2) two-way delay measurement is introduced. Refer to FIG. 11. FIG. 11 is a schematic diagram of another embodiment of a delay measurement method according to an embodiment of this application. An embodiment of this application provides a delay measurement method, including the following steps.

1101. A first communication apparatus obtains a first moment, where the first moment is a timestamp at which the first communication apparatus inserts an OAM block.

In this embodiment, the first communication apparatus obtains the first moment, where the first moment is the timestamp at which the first communication apparatus inserts the OAM block, the first moment is greater than or equal to a moment at which the first communication apparatus receives a first service bit flow, the first moment is less than the moment at which the first communication apparatus inserts a two-way delay measurement message 2DMM message into a first block flow, the first service bit flow carries a first fine granularity service, and the first block flow is obtained by processing the first service bit flow.

A method for obtaining the first moment is similar to step 1001. Details are not described herein again.

In a solution in which delay measurement information is carried in a two-way delay measurement 2DM message in a two-way delay measurement scenario, a manner of recording the first moment further includes:

First, the first communication apparatus obtains a first sub-moment, where the first sub-moment is a moment at which the first communication apparatus receives the first service bit flow. For example, the first sub-moment is a moment at which the first communication apparatus receives a specific bit in the first service bit flow.

The first communication apparatus obtains a second sub-moment, where the second sub-moment is a moment at which the first communication apparatus maps a service container corresponding to the first service bit flow to the first block flow. For example, in a process in which the first communication apparatus maps, to the first block flow, the service container that carries a specific bit, when the first communication apparatus maps, to a block location that carries the service container in the first block flow, the service container corresponding to the first service bit flow, a moment of the mapping is recorded as the second sub-moment.

The first communication apparatus obtains a third sub-moment, where the third sub-moment is a moment at which the first communication apparatus inserts the 1DM message into the first block flow. For example, in a process (that is, the processing procedures shown in FIG. 4A and FIG. 4B and FIG. 5) in which the first communication apparatus processes the first service bit flow to obtain the first block flow, and then maps the first block flow to the egress slot location, the first communication apparatus records a moment at which the 1DM block is inserted into the first block flow as the third sub-moment.

For example, the first communication apparatus obtains the first moment through calculation in the following manner:

$$T1=t3-(t2-t1),$$

where T1 is the first moment, t3 is the third sub-moment, t2 is the second sub-moment, and t1 is the first sub-moment.

According to the foregoing method, the first moment meets the following features: The first moment is greater than or equal to the moment at which the first communication apparatus receives the first service bit flow, and the first moment is less than the moment at which the first communication apparatus inserts the two-way delay measurement message 2DMM message into the first block flow.

Step 1101 is similar to step 1001. Details are not described herein again.

1102. The first communication apparatus sends first delay measurement information to a second communication apparatus, where the first delay measurement information carries the first moment.

Similar to step 1002, the first delay measurement information may be carried in the service container, or the first delay measurement information may be carried in the 2DMM message. The following separately provides descriptions.

(aa) The first delay measurement information is carried in a first service container, and the first service container carries the service slice obtained by the first communication apparatus by performing slicing processing based on the first service bit flow. This solution is similar to step 1002. Details are not described herein again.

Optionally, the first delay measurement information carries identification information. In this case, the first delay measurement information may not carry the first moment. The first communication apparatus stores the first moment and the identification information in a memory of the first communication apparatus, where the first moment is in one-to-one correspondence with the identification information.

For example, the identification information is a group of sequence numbers "01", "02", ..., and "xxx", and the first communication apparatus allocates a unique sequence number to each first moment. After the first communication apparatus obtains the first moment, the first communication apparatus adds a corresponding sequence number to the corresponding first delay measurement information, where the sequence number is used as the identification information. The first communication apparatus stores the identification information and the first moment in the memory after associating the identification information with the first moment. After receiving the first delay measurement information, the second communication apparatus extracts the identification information. Then, the second delay measurement information sent by the second communication apparatus to the first communication apparatus carries the same identification information. After receiving the second delay measurement information from the second communication apparatus, the first communication apparatus determines, from the memory based on the identification information carried in the second delay measurement information, the first moment corresponding to the second delay measurement information. Further, the first communication apparatus determines the two-way delay between the first communication apparatus and the second communication apparatus based on the round trip time information carried in the second delay measurement information, the first moment, and the second moment.

For example, the first moment and the identification information recorded in the memory of the first communication apparatus are shown in Table 6.

**Table 6**

| First moment | Identification information |
|---|---|
| 000 minute 000 second 001 millisecond 001 microsecond | 01 |
| 000 minute 000 second 020 millisecond 001 microsecond | 02 |
| 000 minute 000 second 190 millisecond 001 microsecond | 05 |
| 000 minute 000 second 530 millisecond 001 microsecond | 12 |

(bb) The first delay measurement information is carried in the 2DMM message.

Specifically, because the 2DMM message includes a timestamp (timestamp) field, the first communication apparatus may replace a moment recorded in the timestamp field of the original 2DMM message with the first moment. In this case, it is considered that the 2DMM message carries the first delay measurement information. It should be noted that, in embodiments of this application, a quantity of OAM blocks included in the 2DMM message is not limited. For example, the first delay measurement information may be carried in one or more OAM blocks (namely, 2DMM blocks). After the first communication apparatus generates the first delay measurement information, the first communication apparatus maps the first delay measurement information to the egress slot location, and then sends the FGU slot data (including the first delay measurement information) at the egress slot location through an ethernet interface or a FlexE client interface. The FGU slot data (including the first delay measurement information) arrives at the second communication apparatus after being transmitted by the Q intermediate nodes, so that the second communication apparatus obtains the first delay measurement information. The second communication apparatus is used in a sink node.

1103. The second communication apparatus obtains a third moment, where the third moment is a timestamp at which the second communication apparatus extracts the OAM block.

Similar to step 1003, for different carrying manners of the first delay measurement information, the second communication apparatus obtains the third moment by using a plurality of methods:

(aa) When the first delay measurement information is carried in the first service container: This solution is similar to step 1003. Details are not described herein again.
(bb) The first delay measurement information is carried in the 2DMM message.

After the second communication apparatus receives the FGU slot data, the second communication apparatus performs demapping processing on the FGU slot data to obtain the corresponding block flow. A manner in which the second communication apparatus obtains the third moment is as follows:
The second communication apparatus obtains a fourth sub-moment, where the fourth sub-moment is a moment at which the second communication apparatus sends the second service bit flow. For example, the fourth sub-moment may be a moment at which the second communication apparatus sends a specific bit in the second service bit flow. For example, the specific bit may be the $1^{st}$ bit, the $100^{th}$ bit, the $200^{th}$ bit, the $500^{th}$ bit, and/or the $1000^{th}$ bit of the second service bit flow.

The second communication apparatus obtains a fifth sub-moment, where the fifth sub-moment is a moment at which the second communication apparatus obtains a service container by demapping the second block flow. For example, the second communication apparatus demaps FGU slot data at an ingress slot location to the second block flow, where the second block flow corresponds to the first fine granularity service. Then, in a process of processing the second block flow by the second communication apparatus, when performing demapping processing on a block location that carries a service container in the second block flow, the second communication apparatus records the moment as the fifth sub-moment. The second communication apparatus may perform demapping processing on the block location corresponding to the service container in the second block flow to obtain the corresponding service container.

The second communication apparatus obtains a sixth sub-moment, where the sixth sub-moment is a moment at which the second communication apparatus extracts the 2DMM message from the second block flow. For example, the second communication apparatus demaps FGU slot data to obtain the second block flow. When extracting the 2DMM message from the second block flow, the second communication apparatus records the moment at which the 2DMM message is extracted as the sixth sub-moment.

The second communication apparatus obtains the third moment through calculation in the following manner:

$$T3=t6+(t4-t5),$$

where
T3 is the third moment, t6 is the sixth sub-moment, t4 is the fourth sub-moment, and t5 is the fifth sub-moment.

According to the foregoing method, the third moment meets the following features: The third moment is greater than the moment at which the second communication apparatus extracts the two-way delay measurement message 2DMM message from the second block flow, and the third moment is less than or equal to the moment at which the second communication apparatus sends the second service bit flow, where the second service bit flow carries the first fine granularity service.

1104. The second communication apparatus obtains the round trip time information, where the round trip time information indicates a time interval from sending the second service bit flow to receiving the third service bit flow by the second communication apparatus, the third service bit flow carries the second fine granularity service, and the second fine granularity service is associated with the first fine granularity service.

In this embodiment, after the second communication apparatus sends the second service bit flow, that is, after the service processing procedure in the first direction (from the first communication apparatus to the second communication apparatus) is completed, the second communication apparatus enters a service processing procedure in a second direction (from the second communication apparatus to the first communication apparatus). It should be noted that, in this case, the service in the first direction may continue to be processed. For example, the first communication apparatus continues to send FGU slot data to the second communication apparatus. In this case, the second communication apparatus continues to perform step 1103.

In the second direction, a specific service processing procedure is as follows:
The second communication apparatus receives the third service bit flow in the second direction, where the third service bit flow carries the second fine granularity service, and the second fine granularity service is associated with the first fine granularity service. Then, the second communication apparatus processes the third service bit flow. A specific processing procedure is similar to the scenarios shown in FIG. 4A and FIG. 4B and FIG. 5.

First, the second communication apparatus performs slicing processing on the third service bit flow to obtain a service slice corresponding to the third service bit flow. The service slice is also referred to as a service slice corresponding to the second fine granularity service.

Then, the second communication apparatus encapsulates the service slice to obtain a service container. Specifically, one or more of the following information is added on the basis of the service slice: an expanded sequence (Expanded Sequence, ESQ) number, a frequency synchronization message (for example, a timestamp), a payload length, padding (padding), or a check field. The ESQ sequence number is for performing lossless protection or loss detection on the service slice. The frequency synchronization message is for transferring service-related clock information. When the length of the service slice is less than the length of the lower-order slot payload, the payload length or the padding needs to be encapsulated, where the payload length or the padding is for identifying a valid payload length. The check field is for performing bit error check on the service slice.

After adding the overhead to the service slice, the second communication apparatus further encapsulates the service slice to which the overhead is added, to obtain the service container. Specifically, frame boundary and frame interval encapsulations are added to the service slice to which the overhead is added, to obtain the service container.

Then, the second communication apparatus converts the service container into a 64B/66B block flow, to be specific, maps the service container to a corresponding block I, block S, block T, and block D.

Then, the second communication apparatus inserts an operation, administration and maintenance (operation, administration and maintenance, OAM) block into the block flow.

Then, the second communication apparatus maps the block flow into which the OAM block is inserted to an egress slot location of the second communication apparatus. Data that is of the block flow and that is mapped to the egress slot location is referred to as FGU slot data.

Finally, the second communication apparatus sends the FGU slot data at the egress slot location through an ethernet interface or a flexible ethernet client (flexible ethernet client, FlexE Client) interface.

In the foregoing procedure, the second communication apparatus obtains a fourth moment.

For example, the scenario shown in FIG. 7 is used as an example for description. The second communication apparatus is used in a sink node. After the second communication apparatus receives the third service bit flow, the second communication apparatus first obtains the fourth moment, and a fine granularity service carried in the third service bit flow is referred to as the second fine granularity service. A specific method for recording the fourth moment includes:

A. The second communication apparatus records a moment of receiving a specific bit in the third service bit flow. For example, the specific bit may be the 1$^{st}$ bit, the 100$^{th}$ bit, the 200$^{th}$ bit, the 500$^{th}$ bit, and/or the 1000$^{th}$ bit of the service bit flow.

B. The second communication apparatus periodically records a receiving moment based on a quantity of bits of the received service bit flow, where the receiving moment is used as the fourth moment. For example, each time the second communication apparatus receives 1000 bits, the second communication apparatus records a receiving moment (for example, a receiving moment of the 1001$^{st}$ bit), and the receiving moment is used as the fourth moment.

C. When the second communication apparatus receives the service bit flow, a receiving moment is recorded every one or more bits. Then, a receiving moment is periodically selected as the fourth moment. For example, each time the second communication apparatus receives one bit, the second communication apparatus records a receiving moment. The second communication apparatus determines a moment at an interval of 1000 receiving moments as the fourth moment.

D. The second communication apparatus performs slicing processing on the service bit flow to obtain a service slice, and performs encapsulation processing on the service slice that carries the specific bit, to obtain a service container that carries the specific bit. In this case, the second communication apparatus records an encapsulation moment as the fourth moment.

In a solution in which delay measurement information is carried in a two-way delay measurement 2DM message in a two-way delay measurement scenario, a manner of recording the fourth moment further includes:
The second communication apparatus obtains a seventh sub-moment, where the seventh sub-moment is a moment at which the second communication apparatus receives the third service bit flow, and the third service bit flow carries the second fine granularity service. For example, the seventh sub-moment may be a moment at which the second communication apparatus receives a specific bit in the third service bit flow. For example, the specific bit may be the 1st bit, the 100th bit, the 200th bit, the 500th bit, and/or the 1000th bit of the third service bit flow.

The second communication apparatus obtains an eighth sub-moment, where the eighth sub-moment is a moment at which the second communication apparatus maps a service container corresponding to the third service bit flow to the third block flow. For example, in a process in which the second communication apparatus maps, to the third block flow, the service container that carries a specific bit, when the second communication apparatus maps, to a block location that carries the service container in the third block flow, the service container corresponding to the third service bit flow, a moment of the mapping is recorded as the eighth sub-moment.

The second communication apparatus obtains a ninth sub-moment, where the ninth sub-moment is the moment at which the second communication apparatus inserts a 2DMR message into the third block flow. For example, in a process (that is, the processing procedures shown in FIG. 4A and FIG. 4B and FIG. 5) in which the second communication apparatus processes the third service bit flow to obtain the third block flow, and then maps the third block flow to an egress slot location, the second communication apparatus records a moment at which a 2DMR block is inserted into the third block flow as the ninth sub-moment.

The second communication apparatus obtains the fourth moment through calculation in the following manner:

$$T4=t9-(t8-t7),$$

where
T4 is the fourth moment, t9 is the ninth sub-moment, t8 is the eighth sub-moment, and t7 is the seventh sub-moment.

Optionally, the fourth moment may alternatively be a receiving moment of first K service slices corresponding to P data blocks that are in the block flow and that are before the 2DMR message in time domain, where P is a positive integer, and K is a positive integer. For example, the corresponding block flow is generated at the fourth moment based on the third service bit flow. In time domain, a block P1 before the 2DMR message corresponds to a service slice K1, and a block P2 after the 2DMR message corresponds to a service slice K2. The second communication apparatus selects a receiving moment of the service slice K1 as the fourth moment and records the fourth moment in the timestamp field of the 2DMR message. The 2DMR message is used as the second delay measurement information.

According to the foregoing method, the fourth moment meets the following features: The fourth moment is greater than or equal to the moment at which the second communication apparatus receives the third service bit flow, and the fourth moment is less than a moment at which the second communication apparatus inserts the two-way delay measurement reply 2DMR message into the third block flow.

After obtaining the third moment and the fourth moment, the second communication apparatus determines the round trip time information based on the third moment and the fourth moment, where the round trip time information indicates the time interval from sending the second service bit flow to receiving the third service bit flow by the second communication apparatus.

Specifically, the round trip time information includes the third moment and the fourth moment.

Alternatively, the round trip time information includes a round trip time period, and the round trip time period is obtained by subtracting the third moment from the fourth moment.

1105. The second communication apparatus sends the second delay measurement information to the first communication apparatus, where the second delay measurement information carries the round trip time information.

In this embodiment, after the second communication apparatus obtains the round trip time information, in a two-way delay measurement scenario, the second communication apparatus needs to notify the second communication apparatus of the round trip time information. In this embodiment of this application, the second communication apparatus sends the second delay measurement information to the first communication apparatus, where the second delay measurement information carries the round trip time information.

Specifically, the second delay measurement information may be carried in the service container, or the second delay measurement information may be carried in the 2DM message. The following separately provides descriptions.

(cc) The second delay measurement information is carried in a second service container, and the second service container carries a service slice obtained by the second communication apparatus by performing slicing processing based on the third service bit flow.

Similar to step 1002, specifically, in this embodiment of this application, a service container carrying the second delay measurement information is referred to as the second service container. The service container includes one or more of the following information (or fields): a payload (the payload is for carrying a service slice), an ESQ sequence number (optional), a frequency synchronization message (timestamp), a payload length (optional), padding (optional), and check (optional).

An example in which the round trip time information is a round trip time period is used.

In an optional implementation, a field included in the service container is expanded, and an expanded service container further includes a first field. For ease of understanding, refer to FIG. 17. FIG. 17 is a schematic diagram of an expanded service container according to an embodiment of this application. The expanded service container is shown in FIG. 17, and the first field is added. The first field carries the second delay measurement information. For example, the first field records the round trip time period.

In another optional implementation, the second delay measurement information is carried in another field in the service container. For example, a padding field in the service container carries the second delay measurement information. In other words, the padding field in the service container records the round trip time period. For another example, some empty bits are reserved in a service slice field in the service container, and the round trip time period is recorded in the empty bits.

Optionally, in addition to the round trip time period, the second delay measurement information may further include identification information (refer to the identification information shown in step 1102), and the identification information is consistent with the identification information in the first delay measurement information. Specifically, after receiving the first delay measurement information, the second communication apparatus extracts the identification information. When the service bit flow received by the second communication apparatus corresponds to the second fine granularity service, and the second fine granularity service has an association relationship with the first fine granularity service corresponding to the first delay measurement information, the second communication apparatus adds the identification information to the second delay measurement information. The identification information indicates that the round trip time information in the second delay measurement information is associated with the first moment. The first communication apparatus may determine the two-way delay between the first communication apparatus and the second communication apparatus based on the round trip time information in the second delay measurement information, the first moment, and the second moment.

(dd) The second delay measurement information is carried in the 2DMR message.

Specifically, because the 2DMR message includes the timestamp (timestamp) field, the second communication apparatus may replace the moment recorded in the timestamp field of the original 2DMR message with the round trip time information. In this case, it is considered that the 2DMR carries the second delay measurement information. It should be noted that, in embodiments of this application, a quantity of OAM blocks included in the 2DMR message is not limited. For example, the second delay measurement information may be carried in one or more OAM blocks (namely, 2DMR blocks). After the second communication apparatus generates the second delay measurement information, the second communication apparatus maps the second delay measurement information to an egress slot location, and then sends the egress slot location through an ethernet interface or a FlexE client interface. The egress slot location arrives at the first communication apparatus after being transmitted by Q intermediate nodes. The second communication apparatus is used in a source node.

Optionally, when the second delay measurement information is carried in the 2DMR message, the second delay measurement information further includes the first moment. Specifically, after receiving the first delay measurement information, the second communication apparatus stores the first moment in the first delay measurement information. Then, when sending the second delay measurement information to the first communication apparatus, the second communication apparatus adds the first moment to the second delay measurement information. In this case, the second delay measurement information includes the first moment and the round trip time information (for example, the third moment and the fourth moment). The first moment may be carried in the timestamp field of the 2DMR message.

It may be understood that the second delay measurement information in embodiments of this application may include a first moment and/or round trip time information generated based on one fine granularity service, or may include a plurality of first moments and/or a plurality of pieces of round trip time information generated based on a plurality of fine granularity services. For example, the second service container includes F1 (the first moment and the round trip time information of the first fine granularity service), F3 (a first moment and round trip time information of a third fine granularity service), and F5 (a first moment and round trip time information of a fifth fine granularity service). In other words, the first moments and/or the round trip time information that are/is obtained through measurement based on the plurality of fine granularity services in the second communication apparatus are/is transmitted in a same service container. For another example, the 2DMR message includes F1, F3, and F5. In other words, the first moments and/or the round trip time information that are/is obtained through measurement based on the plurality of fine granularity services in the second communication apparatus are/is transmitted in a same 2DMR message.

1106. The first communication apparatus obtains the second moment, where the second moment is a timestamp at which the first communication apparatus extracts the OAM block.

In this embodiment, the first communication apparatus receives, in the second direction, the FGU slot data (the FGU slot data corresponds to the second fine granularity service) sent by the second communication apparatus. Then, the first communication apparatus demaps the FGU slot data to obtain a fourth block flow, and then performs demapping processing on the fourth block flow to obtain a corresponding service container. The first communication apparatus performs decapsulation processing on the service container to obtain a corresponding service slice. The first communication apparatus performs service reassembling based on a plurality of service slices, to obtain a corresponding service bit flow. The service bit flow is referred to as a fourth service bit flow. A fine granularity service carried in the fourth service bit flow is the second fine granularity service. In the foregoing process, the first communication apparatus obtains the second moment.

Specifically, the scenario shown in FIG. 7 is used as an example for description. The first communication apparatus is used in a source node. When the first communication apparatus receives the FGU slot data at an ingress slot location through an ethernet interface or a FlexE client interface, the FGU slot data carries the second fine granularity service. Therefore, the foregoing procedure is also referred to as receiving the FGU slot data by the source node. Then, the first communication apparatus processes the FGU slot data that carries the second fine granularity service. A specific processing procedure is similar to the scenarios shown in FIG. 4A and FIG. 4B and FIG. 5. First, the first communication apparatus demaps the FGU slot data to obtain a block flow (for example, a 64B/66B block flow). Then, data in the block flow is extracted, for example, an OAM block is extracted.

Then, the first communication apparatus demaps the block flow to obtain a corresponding service container. Then, the first communication apparatus performs decapsulation processing on the service container to obtain a corresponding service slice. Then, the first communication apparatus performs reassembling processing based on a plurality of service slices, to obtain a corresponding service bit flow. Finally, the first communication apparatus sends the service bit flow. For ease of differentiation, the service bit flow sent by the first communication apparatus is referred to as the fourth service bit flow, and the fourth service bit flow carries the second fine granularity service.

Optionally, for different carrying manners of the second delay measurement information, the first communication apparatus obtains the second moment by using a plurality of methods:

(cc) When the second delay measurement information is carried in the second service container:

After the first communication apparatus receives the FGU slot data, the first communication apparatus performs demapping processing on the FGU slot data to obtain a corresponding service container. When the first communication apparatus finds that the service container carries the second delay measurement information, the first communication apparatus records the second moment, and the service container (carrying the second delay measurement information) is referred to as the second service container.

The second moment may be a moment at which the first communication apparatus extracts the second delay measurement information (the round trip time information) from the second service container, or the second moment may be a moment at which the first communication apparatus reassembles a service bit flow (that is, the fourth service bit flow) by using a service slice corresponding to the second service container, and sends the service bit flow. This is not limited in embodiments of this application.

(dd) The second delay measurement information is carried in the 2DMR block.

After the first communication apparatus receives the FGU slot data, the first communication apparatus performs demapping processing on the FGU slot data to obtain the corresponding fourth block flow. A manner in which the first communication apparatus obtains the second moment is as follows:

The first communication apparatus obtains a tenth sub-moment, where the tenth sub-moment is a moment at which the first communication apparatus extracts the two-way delay measurement reply 2DMR message from the fourth block flow. For example, the first communication apparatus demaps FGU slot data to obtain the fourth block flow. When extracting the 2DMR message from the fourth block flow, the first communication apparatus records the moment at which the 2DMR message is extracted as the tenth sub-moment.

The first communication apparatus obtains an eleventh sub-moment, where the eleventh sub-moment is a moment at which the first communication apparatus sends the second service bit flow. For example, the eleventh sub-moment may be a moment at which the first communication apparatus sends a specific bit in the fourth service bit flow. For example, the specific bit may be the 1$^{st}$ bit, the 100$^{th}$ bit, the 200$^{th}$ bit, the 500$^{th}$ bit, and/or the 1000$^{th}$ bit of the fourth service bit flow.

The first communication apparatus obtains a twelfth sub-moment, where the twelfth sub-moment is a moment at which the first communication apparatus obtains a service container by demapping the fourth block flow. For example, the first communication apparatus demaps FGU slot data at an ingress slot location to the fourth block flow, where the fourth block flow corresponds to the second fine granularity service. Then, in a process of processing the fourth block flow by the first communication apparatus, when performing demapping processing on a block location that carries a service container in the fourth block flow, the first communication apparatus records the moment as the twelfth sub-moment. The first communication apparatus may perform demapping processing on the block location corresponding to the service container in the fourth block flow to obtain the corresponding service container.

The first communication apparatus obtains the second moment through calculation in the following manner:

$$T2=t10+(t11-t12),$$

where

T2 is the second moment, t10 is the tenth sub-moment, t11 is the eleventh sub-moment, and t12 is the twelfth sub-moment.

According to the foregoing method, the second moment meets the following features: The second moment is less than or equal to the moment at which the first communication apparatus sends the fourth service bit flow, and is greater than the moment at which the first communication apparatus extracts the two-way delay measurement reply 2DMR message from the fourth block flow, the fourth service bit flow is obtained based on processing of the fourth block flow, and the fourth service bit flow carries the second fine granularity service.

1107. The first communication apparatus determines the two-way delay between the first communication apparatus and the second communication apparatus based on the first moment, the second moment, and the round trip time information.

In this embodiment, after the first communication apparatus receives the second delay measurement information, the first communication apparatus obtains the round trip time information based on the second delay measurement information.

Optionally, when the second delay measurement information includes the identification information, the first communication apparatus determines the first moment from the memory of the first communication apparatus based on the identification information.

Optionally, when the second delay measurement information includes the first moment, the first communication apparatus directly obtains the first moment from the second delay measurement information.

Then, the first communication apparatus determines the two-way delay between the first communication apparatus and the second communication apparatus based on the first moment (from the memory of the first communication apparatus or the second delay measurement information), the second moment (obtained by the first communication apparatus through measurement), and the round trip time information (from the second delay measurement information).

For example, the first communication apparatus obtains the two-way delay between the first communication apparatus and the second communication apparatus through calculation by using the following method:

$$Two_way_delay=T2-T1-\Delta,$$

where

Two_way_delay is the two-way delay between the first communication apparatus and the second communication apparatus, T2 is the second moment, T1 is the first moment, and $\Delta$ is the round trip time period.

For another example, the first communication apparatus obtains the two-way delay between the first communication apparatus and the second communication apparatus through calculation by using the following method:

$$Two_way_delay=(T2-T1)-(T4-T3),$$

where

Two_way_delay is the two-way delay between the first communication apparatus and the second communication apparatus, T4 is the fourth moment, T1 is the first moment, T3 is the third moment, and T2 is the second moment.

In this embodiment of this application, the first communication apparatus obtains the first moment, where the first moment is the timestamp at which the first communication apparatus inserts the operation, administration and maintenance OAM block, the first moment is greater than or equal to the moment at which the first communication apparatus receives the first service bit flow, the first moment is less than the moment at which the first communication apparatus inserts the two-way delay measurement message 2DMM message into the first block flow, the first service bit flow carries the first fine granularity service, and the first block flow carries the first fine granularity service. The first communication apparatus sends the first delay measurement information to the second communication apparatus, where the first delay measurement information carries the first moment, and the first delay measurement information is for measuring the delay between the first communication apparatus and the second communication apparatus. Then, the second communication apparatus sends the second delay measurement information to the first communication apparatus, where the second delay measurement information carries the round trip time information, and the round trip time information indicates a time interval from sending the second service bit flow to receiving the third service bit flow by the second communication apparatus, the third service bit flow carries the second fine granularity service, and the second fine granularity service is associated with the first fine granularity service. The first communication apparatus obtains the second moment, where the second moment is the timestamp at which the first communication apparatus extracts the OAM block, the second moment is less than or equal to the moment at which the first communication apparatus sends the fourth service bit flow, and is greater than the moment at which the first communication apparatus extracts the two-way delay measurement reply 2DMR message from the fourth block flow, the fourth service bit flow is obtained based on processing of the fourth block flow, and the fourth service bit flow carries the second fine granularity service. Finally, the first communication apparatus determines the two-way delay between the first communication apparatus and the second communication apparatus based on the first moment, the second moment, and the round trip time information. According to the foregoing method, a detection blind area in a two-way delay measurement procedure is reduced, and delay measurement accuracy is improved, thereby improving communication quality and reducing a service interruption probability.

Based on the embodiment shown in FIG. 11, the following first describes (b1) that delay measurement information is carried in a service container in a two-way delay measurement scenario. Refer to FIG. 14A to FIG. 14C. FIG. 14A to FIG. 14C are a schematic diagram of an application scenario according to an embodiment of this application.

First, a first direction (from a source node to a sink node) is described.

The source node receives a first service bit flow, where the first service bit flow corresponds to a first fine granularity service. After receiving the first service bit flow, the source node performs slicing processing on the first service bit flow to obtain a plurality of service slices. Then, the source node encapsulates the service slice to obtain a corresponding service container. In the foregoing process, the source node obtains a first moment, where the first moment is a timestamp at which the source node inserts an OAM block.

Optionally, the source node allocates unique identification information to the first moment. Then, the source node stores the first moment and the associated identification information in a memory. The source node inserts first delay measurement information (the first delay measurement information includes the identification information) into the service container, where the service container carrying the first delay measurement information is referred to as a first service container.

Optionally, the source node uses the first moment and the associated identification information together as the first delay measurement information, and then the source node inserts the first delay measurement information into the first service container.

After further encapsulating a plurality of service containers (including the first delay measurement information), the source node maps the plurality of service containers to an egress slot location in a first direction. Data carried in the egress slot location is referred to as FGU slot data. Finally, the source node sends the FGU slot data to a next-hop node (that is, an intermediate node) at the egress slot location through a physical interface.

After the intermediate node receives the FGU slot data at an ingress slot location through the physical interface, the intermediate node maps the ingress slot location to an egress slot location based on a slot cross-configuration table. The slot cross-configuration table indicates a mapping rule from the ingress slot location to the egress slot location on the intermediate node. Then, the intermediate node sends the FGU slot data at the egress slot location through a physical interface.

The sink node receives the FGU slot data at an ingress slot location through the physical interface. Then, the sink node performs demapping processing on the FGU slot data to obtain a corresponding service container. Further, the sink node performs decapsulation processing on the service container, to obtain a corresponding service slice and the first delay measurement information. The sink node reassembles a second service bit flow by using a plurality of service slices. The sink node sends the second service bit flow through a physical interface. In the foregoing procedure, the sink node extracts the first moment in the first delay measurement information. The sink node records a third moment, where the third moment is a timestamp at which the sink node extracts the OAM block.

After sending the second service bit flow, the sink node enters a service procedure in the second direction. The following describes the service procedure in the second direction:

First, the sink node receives a third service bit flow, where the third service bit flow is a service bit flow corresponding to a second fine granularity service. The second fine granularity service is associated with the first fine granularity service. For example, the second fine granularity service and the first fine granularity service belong to a same fine granularity service.

Then, the sink node processes the third service bit flow, and maps the third service bit flow to an egress slot location in the second direction. Data carried in the egress slot location is referred to as FGU slot data. For a specific processing manner, refer to the method described in FIG. 11. Details are not described herein again. Specifically, the sink node extracts the first moment and the identification information from the first delay measurement information. Then, the sink node performs slicing processing on the third service bit flow to obtain a service slice.

The sink node obtains a fourth moment. Then, the sink node obtains a round trip time period through calculation based on the third moment and the fourth moment, where the round trip time period indicates time consumed by the second communication apparatus from sending the second service bit flow to receiving the third service bit flow.

The sink node performs encapsulation processing on the service slice to obtain a service container. The sink node inserts the round trip time period into an overhead of the service container. The service container is referred to as a second service container, and the second service container carries second delay measurement information (the round trip time period).

Optionally, the sink node uses the service slice as a payload of the service container, and inserts identification information into the overhead of the service container. The identification information indicates that the round trip time is associated with the first moment.

Then, the sink node maps the second service container and another service container corresponding to the third service bit flow to the egress slot location in the second direction. The sink node sends the egress slot location (that is, sends the FGU slot data) through the physical interface.

The FGU slot data sent by the sink node is transmitted to the source node through an intermediate node. The source node receives, in the second direction, the FGU slot data sent by the sink node. Then, the source node performs demapping and decapsulation processing on the FGU slot data to obtain a corresponding service bit flow, where the service bit flow is referred to as a fourth service bit flow. A fine granularity service carried in the fourth service bit flow is the second fine granularity service. In the foregoing process, the source node obtains the second moment.

Optionally, the source node determines the corresponding first moment in a memory of the source node based on the identification information carried in the second delay measurement information.

Finally, the source node calculates a two-way delay between the source node and the sink node based on the first moment, the second moment, and the round trip time period extracted from the second delay measurement information.

The first moment meets: The first moment is greater than or equal to the moment at which the first communication apparatus receives the first service bit flow, and the first moment is less than the moment at which the first communication apparatus inserts the two-way delay measurement message 2DMM message into the first block flow. The third moment meets the following features: The third moment is greater than the moment at which the second communication apparatus extracts the two-way delay measurement message 2DMM message from the second block flow, and the third moment is less than or equal to the moment at which the second communication apparatus sends the second service bit flow, where the second service bit flow carries the first fine granularity service. The second moment meets the following features: The second moment is less than or equal to the moment at which the first communication apparatus sends the fourth service bit flow, and is greater than the moment at which the first communication apparatus extracts the two-way delay measurement reply 2DMR message from the fourth block flow, the fourth service bit flow is obtained based on processing of the fourth block flow, and the fourth service bit flow carries the second fine granularity service. The fourth moment meets the following features: The fourth moment is greater than or equal to the moment at which the second communication apparatus receives the third service bit flow, and the fourth moment is less than a moment at which the second communication apparatus inserts the two-way delay measurement reply 2DMR message into the third block flow. Therefore, a detection blind area in the two-way delay measurement procedure is reduced, and delay measurement accuracy is improved, thereby improving communication quality and reducing a service interruption probability.

Next, based on the embodiment shown in FIG. 11, (b2) that delay measurement information is carried in a two-way delay measurement 2DM message in a two-way delay measurement scenario is described. Refer to FIG. 15A to FIG. 15C. FIG. 15A to FIG. 15C are a schematic diagram of another application scenario according to an embodiment of this application.

First, a first direction (from a source node to a sink node) is described.

The source node receives a first service bit flow, where the first service bit flow corresponds to a first fine granularity service. After receiving the first service bit flow, the source node performs slicing processing on the first service bit flow to obtain a plurality of service slices. Then, the source node encapsulates the service slice to obtain a corresponding service container. In the foregoing process, the source node obtains a first moment, where the first moment is a timestamp at which the source node inserts an OAM block.

The source node inserts the first moment into a 2DMM block. In other words, the source node updates a moment of the 2DMM message by using the first moment. For example, the source node replaces a moment originally recorded in the timestamp field of the 2DMM message with the first moment. The 2DMM message carrying the first moment is used as first delay measurement information.

After further encapsulating a plurality of service containers (including the first delay measurement information), the source node maps the plurality of service containers to an egress slot location in a first direction. Data carried in the egress slot location is referred to as FGU slot data. Finally, the source node sends the FGU slot data to a next-hop node (that is, an intermediate node) at the egress slot location through a physical interface.

After the intermediate node receives the FGU slot data at an ingress slot location through the physical interface, the intermediate node maps the ingress slot location to an egress slot location based on a slot cross-configuration table. The slot cross-configuration table indicates a mapping rule from the ingress slot location to the egress slot location on the intermediate node. Then, the intermediate node sends the FGU slot data at the egress slot location through a physical interface.

The sink node receives the FGU slot data at an ingress slot location through the physical interface. Then, the sink node demaps the FGU slot data to obtain a second block flow. The sink node performs demapping processing on the second block flow, extracts the 2DMM message from the second block flow, and performs demapping to obtain a service container. Further, the sink node performs decapsulation processing on the service container, to obtain a corresponding service slice. The sink node reassembles a second service bit flow by using a plurality of service slices. The sink node sends the second service bit flow through a physical interface. In the foregoing procedure, the sink node extracts the first moment in the first delay measurement information. The sink node records a third moment, where the third moment is a timestamp at which the sink node extracts the OAM block.

After sending the second service bit flow, the sink node enters a service procedure in the second direction. The following describes the service procedure in the second direction:

First, the sink node receives a third service bit flow, where the third service bit flow is a service bit flow corresponding to a second fine granularity service. The second fine granularity service is associated with the first fine granularity service. For example, the second fine granularity service and the first fine granularity service belong to a same fine granularity service.

Then, the sink node processes the third service bit flow, and maps the third service bit flow to an egress slot location in the second direction. For a specific processing manner, refer to the method described in FIG. 11. Details are not described herein again. In this process, the sink node records the third moment and a fourth moment, and then the sink node uses the third moment and the fourth moment as round trip time information. The round trip time information indicates time consumed by the second communication apparatus from sending the second service bit flow to receiving the third service bit flow. The sink node inserts the first moment (from the first delay measurement information), the third moment, and the fourth moment into the 2DMR message. In other words, the sink node updates a moment of the 2DMR message based on the first moment, the third moment, and the fourth moment. For example, the first moment, the third moment, and the fourth moment are for replacing a moment originally recorded in a timestamp field of the 2DMR message. The 2DMR message that carries the first moment, the third moment, and the fourth moment is used as second delay measurement information.

Then, the sink node maps the second delay measurement information and another service container corresponding to the third service bit flow to the egress slot location in the second direction. The sink node sends the FGU slot data (including the second delay measurement information and the another service container corresponding to the third service bit flow) at the egress slot location through the physical interface.

The FGU slot data sent by the sink node is transmitted to the source node through an intermediate node. The source node receives, in the second direction, the FGU slot data (the FGU slot data corresponds to the second fine granularity service) sent by the sink node. Then, the source node performs demapping and decapsulation processing on the FGU slot data to obtain a corresponding service bit flow, where the service bit flow is referred to as a fourth service bit flow. A fine granularity service carried in the fourth service bit flow is the second fine granularity service. In the foregoing process, the source node obtains the second moment.

Finally, the source node calculates a two-way delay between the source node and the sink node based on the first moment, the second moment, and the third moment and the fourth moment that are extracted from the second delay measurement information.

The first moment meets: The first moment is greater than or equal to the moment at which the first communication apparatus receives the first service bit flow, and the first moment is less than the moment at which the first communication apparatus inserts the two-way delay measurement message 2DMM message into the first block flow. The third moment meets the following features: The third moment is greater than the moment at which the second communication apparatus extracts the two-way delay measurement message 2DMM message from the second block flow, and the third moment is less than or equal to the moment at which the second communication apparatus sends the second service bit flow, where the second service bit flow carries the first fine granularity service. The second moment meets the following features: The second moment is less than or equal to the moment at which the first communication apparatus sends the fourth service bit flow, and is greater than the moment at which the first communication apparatus extracts the two-way delay measurement reply 2DMR message from the fourth block flow, the fourth service bit flow is obtained based on processing of the fourth block flow, and the fourth service bit flow carries the second fine granularity service. The fourth moment meets the following features: The fourth moment is greater than or equal to the moment at which the second communication apparatus receives the third service bit flow, and the fourth moment is less than a moment at which the second communication apparatus inserts the two-way delay measurement reply 2DMR message into the third block flow. Therefore, a detection blind area in the two-way delay measurement procedure is reduced, and delay measurement accuracy is improved, thereby improving communication quality and reducing a service interruption probability.

With reference to the foregoing embodiments, based on the foregoing embodiments, an embodiment of this application further provides a delay compensation method based on delay measurement information. Specifically, refer to FIG. 16A and FIG. 16B. FIG. 16A and FIG. 16B are a schematic diagram of another application scenario according to an embodiment of this application.

After a source node receives a first service bit flow, the source node records a first moment. Then, the source node inserts the first moment into a service container, for example, inserts the first moment into an overhead of the service container. The source node maps the service container and another service container corresponding to the first service bit flow to an egress slot location. Because the first service bit flow corresponds to a first fine granularity service, data carried in the egress slot location is referred to as FGU slot data. The source node sends the FGU slot data to an intermediate node.

After transmission by the intermediate node, a sink node receives the FGU slot data at an ingress slot location. Then, the sink node demaps the FGU slot data to obtain one or more corresponding service containers. The sink node performs further decapsulation processing on the service container to obtain the first moment recorded in the overhead of the service container. The sink node records a third moment in the foregoing process. The sink node calculates a one-way delay from the source node to the sink node based on the first moment and the third moment.

In a process of decapsulating the FGU slot data, the sink node stores, in a memory, a service slice obtained through decapsulation, to wait for delay compensation.

Then, the sink node obtains a target delay, where the target delay is greater than or equal to a larger one of the following two transmission delay values: a service transmission delay value in a first direction or a service transmission delay value in a second direction, where the first direction is from the source node to the sink node, and the second direction is from the sink node to the source node. The second communication apparatus determines a delay compensation value based on the target delay and a one-way delay from the first communication apparatus to the second communication apparatus.

After the delay compensation value is obtained, when residence time of a service slice corresponding to the first fine granularity service in the memory reaches the delay compensation value, the second communication apparatus extracts the service slice corresponding to the first fine granularity service from the memory. The second communication apparatus reassembles a second service bit flow by using the service slice corresponding to the first fine granularity service. The second communication apparatus sends the second service bit flow.

According to the foregoing method, one-way delay compensation in a fine granularity service scenario is implemented, so that a delay of a service bit flow in the first direction is consistent with a delay of a service bit flow in the second direction.

With reference to the foregoing embodiments, the delay measurement method provided in embodiments of this application may also be applied to a scenario in which a CBR service is carried in large-granularity slot data (referred to as a large-granularity slot for short below). A resource granularity of the large-granularity slot data may be E*1 Gbps, or may be E*5 Gbps. This is not limited in this embodiment of this application, where E is a positive integer. A specific service processing procedure is as follows: A source node encapsulates a CBR service bit flow into a service container and maps the service container to a large-granularity slot. An intermediate node cross-connects large-granularity slots, and then sends the large-granularity slots at an egress slot location. A sink node demaps the large-granularity slot to obtain a service container, and then decapsulates the service container to obtain a CBR service flow. Finally, the sink node sends the CBR service flow at a service port. A specific delay measurement method used when the CBR service is carried in the large-granularity slot is similar to the delay measurement method provided in the foregoing embodiments. Details are not described herein again. The foregoing mainly describes the solutions provided in embodiments of this application from the perspective of the methods. It may be understood that, to implement the foregoing functions, the network device includes a corresponding hardware structure and/or software module for implementing each function. A person of ordinary skill in the art should easily be aware that, in combination with the examples described in embodiments disclosed in this specification, modules, algorithms and steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the network device may be obtained through division according to the foregoing method example. For example, the functional modules may be obtained through division corresponding to various functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

The following describes a network device in embodiments of this application. The network device described below has any function of the first communication apparatus or the second communication apparatus in the foregoing method embodiments.

FIG. 18 is a schematic diagram of a structure of a communication apparatus 1800 according to an embodiment of this application. As shown in FIG. 18, the communication apparatus 1800 includes: a transceiver module 1801, configured to perform step 1002 or 1003; and a processing module 1802, configured to perform step 1001 or 1004.

For another example, the transceiver module 1801 is configured to perform step 1101, 1102, 1103, 1104, 1105, or 1106, and the processing module 1802 is configured to perform step 1107.

For example, the communication apparatus 1800 is used in a first communication apparatus. The communication apparatus 1800 includes:

The communication apparatus 1800 may correspond to the first communication apparatus or the second communication apparatus in the foregoing method embodiments. The units in the communication apparatus 1800 and the foregoing other operations and/or functions are respectively for implementing the steps and methods implemented by the first communication apparatus or the second communication apparatus in the method embodiments. For specific details, refer to the foregoing method embodiments. For brevity, details are not described herein again.

When the communication apparatus 1800 processes a data block, division into the foregoing functional modules is merely used as an example for description. In actual application, the foregoing functions may be allocated to different functional modules for implementation according to a requirement. In other words, an internal structure of the communication apparatus 1800 is divided into different functional modules, to implement all or some of the functions described above. In addition, the communication apparatus 1800 provided in the foregoing embodiment and the method in the embodiment corresponding to FIG. 10 or FIG. 11 belong to a same concept. For a specific implementation process of the communication apparatus 1800, refer to the foregoing method embodiment. Details are not described herein again.

It should be noted that the communication apparatus mentioned in embodiments of this application may be, for example, a network device such as a switch or a router, may be some components of a network device, for example, a board or a line card of the network device, may be a functional module of the network device, or may be a chip configured to implement the methods in this application. This is not specifically limited in embodiments of this application. When the communication apparatus is a chip, the transceiver module configured to implement the method may be, for example, an interface circuit of the chip, and the processing module may be a processing circuit having a processing function in the chip. Communication apparatuses may be directly connected, for example, but not limited to, by using an ethernet cable or an optical cable.

To implement the foregoing embodiments, this application further provides a network device. Refer to FIG. 19. FIG. 19 is a schematic diagram of a structure of a communication apparatus 1900 according to an embodiment of this application.

Although the communication apparatus 1900 shown in FIG. 19 shows some specific features, a person skilled in the art may be aware, from embodiments of this application, that, for brevity, FIG. 19 does not show various other features, to avoid confusing more related aspects of implementations disclosed in embodiments of this application. Therefore, for example, in some implementations, the communication apparatus 1900 includes one or more processing units (for example, a CPU) 1901, a network interface 1902, a programming interface 1903, a memory 1904, and one or more communication buses 1905, configured to interconnect various components. In some other implementations, some functional components or units may be omitted or added to the communication apparatus 1900 based on the foregoing example.

In some implementations, the network interface 1902 is configured to connect to one or more other network devices/servers in a network system. In some implementations, the communication bus 1905 includes a circuit that interconnects and controls communication between system components. The memory 1904 may include a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. Alternatively, the memory 1904 may include a volatile memory. The volatile memory may be a random access memory (random access memory, RAM), and is used as an external cache.

In some implementations, the memory 1904 or a non-transitory computer-readable storage medium of the memory 1904 stores the following programs, modules, and data structures, or a subset thereof, for example, includes a transceiver unit (not shown), an obtaining unit 19041, and a processing unit 19042.

In a possible embodiment, the communication apparatus 1900 may have any function of the first communication apparatus or the second communication apparatus in the method embodiment corresponding to FIG. 10 or FIG. 11.

It should be understood that the communication apparatus 1900 corresponds to the first communication apparatus or the second communication apparatus in the foregoing method embodiments. The units in the communication apparatus 1900 and the foregoing other operations and/or functions are respectively for implementing the steps and methods implemented by the first communication apparatus or the second communication apparatus in the method embodiments. For specific details, refer to the method embodiment corresponding to FIG. 10 or FIG. 11. For brevity, details are not described herein again.

It should be understood that in this application, the network interface 1902 of the communication apparatus 1900 may perform data receiving and sending operations, or a processor may invoke program code in the memory, and implement functions of the transceiver unit in cooperation with the network interface 1902 when required.

In various implementations, the communication apparatus 1900 is configured to perform the delay compensation method provided in embodiments of this application, for example, perform the delay compensation method corresponding to the embodiment shown in FIG. 10 or FIG. 11.

A specific structure of the network device in FIG. 19 in this application may be shown in FIG. 20.

FIG. 20 is a schematic diagram of a structure of a communication apparatus 2000 according to an embodiment of this application. The communication apparatus 2000 includes a main control board 2020 and an interface board 2030.

The main control board 2020 is also referred to as a main processing unit (main processing unit, MPU) or a route processor (route processor). The main control board 2020 is configured to control and manage components in the communication apparatus 2000, including route computation, device management, device maintenance, and protocol processing functions. The main control board 2020 includes a central processing unit 2011 and a memory 2012.

The interface board 2030 is also referred to as a line processing unit (line processing unit, LPU), a line card (line card), or a service board. The interface board 2030 is configured to provide various service interfaces, and forward a data packet. The service interfaces include but are not limited to ethernet interfaces and POS (Packet over SONET/SDH, POS) interfaces. The interface board 2030 includes a central processing unit 2031, a network processor 2032, a forwarding entry memory 2034, and a physical interface card (physical interface card, PIC) 2033.

The central processing unit 2031 on the interface board 2030 is configured to control and manage the interface board 2030 and communicate with the central processing unit 2011 on the main control board 2020.

The network processor 2032 is configured to implement packet forwarding processing. A form of the network processor 2032 may be a forwarding chip.

The physical interface card 2033 is configured to implement a physical layer interconnection function. Original traffic enters the interface board 2030, and a processed packet is sent from the physical interface card 2033. The physical interface card 2033 includes at least one physical interface. The physical interface is also referred to as a physical port, and the physical interface may be a flexible ethernet (Flexible Ethernet, FlexE) physical interface. The physical interface card 2033 is also referred to as a sub-card, may be installed on the interface board 2030, and is responsible for converting a photoelectric signal into a packet, performing validity check on the packet, and then forwarding the packet to the network processor 2032 for processing. In some embodiments, the central processing unit 2031 of the interface board 2030 may further perform a function of the network processor 2032, for example, implement software forwarding based on a general-purpose CPU, so that the interface board 2030 does not need the network processor 2032.

Optionally, the communication apparatus 2000 includes a plurality of interface boards. For example, the communication apparatus 2000 further includes an interface board 2040. The interface board 2040 includes a central processing unit 2041, a network processor 2042, a forwarding entry memory 2044, and a physical interface card 2043.

Optionally, the communication apparatus 2000 further includes a switching board 2022. The switching board 2022 may also be referred to as a switch fabric unit (switch fabric unit, SFU). When the network device has a plurality of interface boards 2030, the switching board 2022 is configured to complete data exchange between the interface boards. For example, the interface board 2030 and the interface board 2040 may communicate with each other by using the switching board 2022.

The main control board 2020 is coupled with the interface board. For example, the main control board 2020, the interface board 2030, the interface board 2040, and the switching board 2022 are connected to each other by using a system bus and/or a system backplane to implement interworking. In a possible implementation, an inter-process communication (inter-process communication, IPC) channel is established between the main control board 2020 and the interface board 2030, and the main control board 2020 and the interface board 2030 communicate with each other by using the inter-process communication IPC channel.

Logically, the communication apparatus 2000 includes a control plane and a forwarding plane. The control plane includes a main control board 2020 and a central processing unit 2031, and the forwarding plane includes components for performing forwarding, such as a forwarding entry memory 2034, a physical interface card 2033, and a network processor 2032. The control plane performs functions such as route advertising, generating a forwarding table, processing signaling and protocol packets, and configuring and maintaining a status of a device. The control plane delivers the generated forwarding table to the forwarding plane. On the forwarding plane, the network processor 2032 looks up the table and forwards a packet received by the physical interface card 2033 based on the forwarding table delivered by the control plane. The forwarding table delivered by the control plane may be stored in the forwarding entry memory 2034. In some embodiments, the control plane and the forwarding plane may be completely separated, and are not on a same device.

It should be understood that the transceiver unit in the communication apparatus 1900 may be equivalent to the physical interface card 2033 or the physical interface card 2043 in the communication apparatus 2000, and the obtaining unit 19041 and the processing unit 19042 in the communication apparatus 1900 may be equivalent to the central processing unit 2011 or the central processing unit 2031 in the communication apparatus 2000, or may be equivalent to program code or instructions stored in the memory 2012.

It should be understood that an operation on the interface board 2040 in this embodiment of this application is consistent with an operation on the interface board 2030. For brevity, details are not described again. It should be understood that the communication apparatus 2000 in this embodiment may correspond to the first communication apparatus or the second communication apparatus in the foregoing method embodiments. The main control board 2020, the interface board 2030, and/or the interface board 2040 in the communication apparatus 2000 may implement functions and/or various steps implemented by the first communication apparatus or the second communication apparatus in the foregoing method embodiments. For brevity, details are not described herein again.

It should be noted that, there may be one or more main control boards. When there are a plurality of main control boards, the main control boards may include an active main control board and a standby main control board. There may be one or more interface boards, and a network device having a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need the switching board, and the interface board provides a function of processing service data of an entire system. In a distributed forwarding architecture, the network device may have at least one switching board, and data exchange between a plurality of interface boards is implemented through the switching board, to provide a large-capacity data exchange and processing capability. Optionally, the form of the network device may also be that there is only one card. In other words, there is no switching board, and functions of the interface board and the main control board are integrated on the one card. In this case, a central processing unit on the interface board and a central processing unit on the main control board may be combined into one central processing unit on the one card, to perform a function obtained by superimposing the two central processing units. Which architecture is specifically used depends on a specific networking deployment scenario, and is not uniquely limited herein.

In some possible embodiments, the first communication apparatus or the second communication apparatus may be implemented as a virtualization device. The virtualization device may be a virtual machine (virtual machine, VM), a virtual router, or a virtual switch that runs a program for sending a packet. A virtualization device is deployed on a hardware device (for example, a physical server). For example, the first Network device may be implemented based on a general-purpose physical server in combination with a network functions virtualization (network functions virtualization, NFV) technology.

It should be understood that the network devices in the foregoing product forms have any function of the first communication apparatus or the second communication apparatus in the foregoing method embodiments. Details are not described herein again.

An embodiment of this application further provides a network device. The network device includes a communication interface; and

a processor connected to the communication interface, based on the communication interface and the processor.

In a possible implementation, the network device is used in a first communication apparatus, so that the first communication apparatus performs the method in the embodiment shown in FIG. 10 or FIG. 11.

In another possible implementation, a second communication apparatus is enabled to perform the method in the embodiment shown in FIG. 10 or FIG. 11.

An embodiment of this application further provides a computer-readable storage medium, including instructions. When the instructions are run on a computer, the computer controls a network apparatus to perform any implementation shown in the foregoing method embodiments.

An embodiment of this application further provides a computer program product. The computer program product includes computer program code. When the computer program code is run on a computer, the computer performs any implementation shown in the foregoing method embodiments.

Further, an embodiment of this application further provides a computer program product. When the computer program product runs on a network device, the network device is enabled to perform the method performed by the first communication apparatus or the second communication apparatus in the method embodiment corresponding to FIG. 10 or FIG. 11.

An embodiment of this application further provides a chip system, including a processor and an interface circuit. The interface circuit is configured to receive instructions and transmit the instructions to the processor. The processor is configured to implement the method in any one of the foregoing method embodiments. In a specific implementation, the chip system further includes a memory.

There may be one or more processors in the chip system. The processor may be implemented by hardware, or may be implemented by software. When the processor is implemented by hardware, the processor may be a logic circuit, an integrated circuit, or the like. When the processor is implemented by software, the processor may be a general-purpose processor, and the method in any one of the foregoing method embodiments is implemented by reading software code stored in the memory.

In a specific implementation, there may be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

Refer to FIG. 21. FIG. 21 is a schematic diagram of a network system 2100 according to an embodiment of this application. The network system 2100 includes a first communication apparatus 2101 and a second communication apparatus 2102. The first communication apparatus 2101 and the second communication apparatus 2102 may be, for example, physical devices such as routers, switches, or gateways, or may be virtual devices that support route advertisement and packet forwarding. Specific types of the first communication apparatus 2101 and the second communication apparatus 2102 are not limited in this embodiment.

Optionally, the network system 2100 further includes a controller 2103. The controller 2103 may be a server that manages the first communication apparatus 2101 and the second communication apparatus 2102. Optionally, the first communication apparatus 2101 may be the communication apparatus 1800, the communication apparatus 1900, or the communication apparatus 2000. Optionally, the second communication apparatus 2102 may be the communication apparatus 1800, the communication apparatus 1900, or the communication apparatus 2000. Optionally, the controller 2103 may be the communication apparatus 1800, the communication apparatus 1900, or the communication apparatus 2000.

Refer to FIG. 22. FIG. 22 is a schematic diagram of a network system 2200 according to an embodiment of this application. The network system 2200 includes a first communication apparatus 2201, a second communication apparatus 2202, and a third communication apparatus 2203. The first communication apparatus 2201, the second communication apparatus 2202, and the third communication apparatus 2203 may be, for example, physical devices such as routers, switches, or gateways, or may be virtual devices that support route advertisement and packet forwarding. Specific types of the first communication apparatus 2201, the second network device 2202, and the third network device 2203 are not limited in this embodiment.

For example, when the network system 2200 is used in the scenario shown in FIG. 7, the first communication apparatus 2201 may be an edge node 1, one or more second communication apparatuses 2202 may be intermediate nodes, and the third communication apparatus 2203 may be an edge node 2.

Optionally, the network system 2200 shown in FIG. 22 further includes a controller 2204. The controller 2204 is not shown in the scenario shown in FIG. 7.

The network devices in the foregoing product forms have any function of the first communication apparatus or the second communication apparatus in the foregoing method embodiments. Details are not described herein again.

The foregoing describes embodiments of this application in detail. Steps in the methods in embodiments of this application may be sequentially scheduled, combined, or deleted according to an actual requirement. Modules in the apparatus in embodiments of this application may be divided, combined, or deleted according to an actual requirement.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the specification does not necessarily refer to a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined according to A. However, it should be further understood that determining B based on A does not mean that B is determined based only on A. B may alternatively be determined based on A and/or other information.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

## Claims

**1.** A delay measurement method, comprising:

obtaining, by a first communication apparatus, a first moment, wherein
the first moment is a timestamp at which the first communication apparatus inserts an operation, administration and maintenance OAM block; and
the first moment is greater than or equal to a moment at which the first communication apparatus receives a first service bit flow, the first moment is less than a moment at which the first communication apparatus inserts a one-way delay measurement 1DM message or a two-way delay measurement 2DM message into a first block flow, the first service bit flow carries a first fine granularity service, and the first block flow is obtained based on the first service bit flow; and
sending, by the first communication apparatus, first delay measurement information to a second communication apparatus, wherein the first delay measurement information carries the first moment, and the first delay measurement information is for measuring a delay between the first communication apparatus and the second communication apparatus.

**2.** The method according to claim 1, wherein the first delay measurement information is carried in a first service container, and the first service container carries a service slice obtained by the first communication apparatus by performing slicing processing based on the first service bit flow.

**3.** The method according to claim 1, wherein the first delay measurement information is carried in the 1DM message, or the first delay measurement information is carried in a two-way delay measurement message 2DMM message; and a timestamp field of the 1DM message or the two-way delay measurement message 2DMM message carries the first moment.

**4.** The method according to claim 3, wherein the obtaining, by a first communication apparatus, a first moment comprises:

obtaining, by the first communication apparatus, a first sub-moment, wherein the first sub-moment is a moment at which the first communication apparatus receives the first service bit flow;
obtaining, by the first communication apparatus, a second sub-moment, wherein the second sub-moment is a moment at which the first communication apparatus maps a service container corresponding to the first service bit flow to the first block flow;
obtaining, by the first communication apparatus, a third sub-moment, wherein the third sub-moment is a moment at which the first communication apparatus maps the 1DM message or the 2DM message to the first block flow; and
obtaining, by the first communication apparatus, the first moment through calculation in the following manner:

$$T1=t3-(t2-t1),$$

wherein
T1 is the first moment, t3 is the third sub-moment, t2 is the second sub-moment, and t1 is the first sub-moment.

**5.** The method according to any one of claims 1 to 4, wherein the method further comprises:

receiving, by the first communication apparatus, second delay measurement information from the second communication apparatus, wherein the second delay measurement information comprises round trip time information, and the round trip time information indicates time consumed by the second communication apparatus from sending a second service bit flow to receiving a third service bit flow, wherein
the second service bit flow carries the first fine granularity service, the third service bit flow carries a second fine granularity service, the first fine granularity service has an association relationship with the second fine granularity service, the first fine granularity service is a service in a first direction of the second fine granularity service, the first direction is from the first communication apparatus to the second communication apparatus, the second fine granularity service is a service in a second direction of the first fine granularity service, and the second direction is from the second communication apparatus to the first communication apparatus;
obtaining, by the first communication apparatus, a second moment, wherein the second moment is a timestamp at which the first communication apparatus extracts the OAM block, the second moment is less than or equal to a moment at which the first communication apparatus sends a fourth service bit flow, and greater than a moment at which the first communication apparatus extracts a two-way delay measurement reply 2DMR message from a fourth block flow, the fourth service bit flow is obtained based on processing of the fourth block flow, and the fourth service bit flow carries the second fine granularity service; and
determining, by the first communication apparatus, a two-way delay between the first communication apparatus and the second communication apparatus based on the first moment, the second moment, and the round trip time information.

**6.** The method according to claim 5, wherein the second delay measurement information is carried in a second service container, and the second service container carries a service slice obtained by the second communication apparatus by performing slicing processing based on the third service bit flow; and
the third service bit flow carries the second fine granularity service, the second fine granularity service has the association relationship with the first fine granularity service, the first fine granularity service is the service in the first direction of the second fine granularity service, the first direction is from the first communication apparatus to the second communication apparatus, the second fine granularity service is the service in the second direction of the first fine granularity service, and the second direction is from the second communication apparatus to the first communication apparatus.

**7.** The method according to claim 5, wherein the second delay measurement information is carried in the two-way delay measurement reply 2DMR message.

**8.** The method according to claim 7, wherein the obtaining, by the first communication apparatus, a second moment comprises:

obtaining, by the first communication apparatus, a tenth sub-moment, wherein the tenth sub-moment is a moment at which the first communication apparatus extracts the two-way delay measurement reply 2DMR message from the fourth block flow;
obtaining, by the first communication apparatus, an eleventh sub-moment, wherein the eleventh sub-moment is a moment at which the first communication apparatus sends the second service bit flow;
obtaining, by the first communication apparatus, a twelfth sub-moment, wherein the twelfth sub-moment is a moment at which the first communication apparatus obtains a service container by demapping the fourth block flow; and
obtaining, by the first communication apparatus, the second moment through calculation in the following manner:

$$T2=t10+(t11-t12),$$

wherein
T2 is the second moment, t10 is the tenth sub-moment, t11 is the eleventh sub-moment, and t12 is the twelfth sub-moment.

**9.** The method according to any one of claims 5 to 8, wherein the round trip time information comprises:

a third moment and a fourth moment, wherein the third moment is greater than a moment at which the second communication apparatus extracts the two-way delay measurement message 2DMM message from a second block flow, and is less than or equal to a moment at which the second communication apparatus sends the second service bit flow, the second block flow carries the first fine granularity service, and the second service bit flow is generated based on the second block flow; and
the fourth moment is greater than or equal to a moment at which the second communication apparatus receives the third service bit flow, and is less than a moment at which the second communication apparatus inserts the two-way delay measurement reply 2DMR message into a third block flow, wherein the third block flow is generated based on the third service bit flow; or
the round trip time information comprises a round trip time period, and the round trip time period is obtained by subtracting the third moment from the fourth moment.

**10.** The method according to claim 9, wherein when the round trip time information is the round trip time period, the determining, by the first communication apparatus, a two-way delay between the first communication apparatus and the second communication apparatus based on the first moment, the second moment, and the round trip time information comprises:
obtaining, by the first communication apparatus, the two-way delay between the first communication apparatus and the second communication apparatus through calculation by using the following method:

$$\text{Two_way_delay} = T2 - T1 - \Delta,$$

wherein
Two_way_delay is the two-way delay between the first communication apparatus and the second communication apparatus, T2 is the second moment, T1 is the first moment, and Δ is the round trip time period.

**11.** The method according to claim 9, wherein when the round trip time information is the third moment and the fourth moment,
the determining, by the first communication apparatus, a two-way delay between the first communication apparatus and the second communication apparatus based on the first moment, the second moment, and the round trip time information comprises:
obtaining, by the first communication apparatus, the two-way delay between the first communication apparatus and the second communication apparatus through calculation by using the following method:

$$\text{Two_way_delay} = (T2 - T1) - (T4 - T3),$$

wherein
Two_way_delay is the two-way delay between the first communication apparatus and the second communication apparatus, T4 is the fourth moment, T1 is the first moment, T3 is the third moment, and T2 is the second moment.

**12.** The method according to any one of claims 5 to 11, wherein

the first delay measurement information carries identification information;
the second delay measurement information carries the identification information; and
the method further comprises:

storing, by the first communication apparatus, the first moment and the identification information in a memory of the first communication apparatus, wherein the first moment is in one-to-one correspondence with the identification information; and
determining, by the first communication apparatus, the first moment from the memory of the first communication apparatus based on the identification information in the second delay measurement information.

**13.** The method according to any one of claims 1 to 12, wherein the first fine granularity service is a constant bit rate CBR service.

**14.** A delay measurement method, comprising:

obtaining, by a second communication apparatus, a third moment, wherein the third moment is a timestamp at which the second communication apparatus extracts an operation, administration and maintenance OAM block; and
the third moment is greater than a moment at which the second communication apparatus extracts a one-way delay measurement 1DM message or a two-way delay measurement 2DM message from a second block flow, and is less than or equal to a moment at which the second communication apparatus sends a second service bit flow, the second block flow carries a first fine granularity service, the second service bit flow is generated based on the second block flow, and the second service bit flow carries the first fine granularity service;
receiving, by the second communication apparatus, first delay measurement information from a first communication apparatus, wherein the first delay measurement information carries a first moment, and the first moment is a timestamp at which the first communication apparatus inserts the OAM block; and
determining, by the second communication apparatus, a one-way delay from the first communication apparatus to the second communication apparatus based on the first moment and the third moment; or
sending, by the second communication apparatus, second delay measurement information to the first communication apparatus, wherein the second delay measurement information is obtained based on the third moment, and the second delay measurement information indicates the first communication apparatus to determine a two-way delay between the first communication apparatus and the second communication apparatus.

**15.** The method according to claim 14, wherein the second delay measurement information is carried in a second service container, and the second service container carries a service slice obtained by the second communication apparatus by performing slicing processing based on a third service bit flow; and
the third service bit flow carries a second fine granularity service, and the second fine granularity service has an association relationship with the first fine granularity service.

**16.** The method according to claim 14, wherein the second delay measurement information is carried in a two-way delay measurement reply 2DMR message.

**17.** The method according to any one of claims 14 to 16, wherein

the first moment is carried in the first delay measurement information; and
the first delay measurement information carries the first moment, the first moment is greater than or equal to a moment at which the first communication apparatus receives a first service bit flow, the first moment is less than a moment at which the first communication apparatus inserts the one-way delay measurement 1DM message or the two-way delay measurement 2DM message into a first block flow, the first service bit flow carries the first fine granularity service, and the first block flow is obtained based on the first service bit flow.

**18.** The method according to claim 17, wherein the first delay measurement information is carried in a first service container, and the first service container carries a service slice obtained by the first communication apparatus by performing slicing processing based on the first service bit flow.

**19.** The method according to claim 17, wherein the first delay measurement information is carried in the 1DM message, or the first delay measurement information is carried in a two-way delay measurement message 2DMM message; and a timestamp field of the 1DM message or the two-way delay measurement message 2DMM message carries the first moment.

**20.** The method according to any one of claims 15 to 19, wherein the sending, by the second communication apparatus, second delay measurement information to the first communication apparatus comprises:

obtaining, by the second communication apparatus, a fourth moment, wherein the fourth moment is a timestamp at which the second communication apparatus inserts an OAM block, the fourth moment is greater than or equal to a moment at which the second communication apparatus receives the third service bit flow, and is less than a moment at which the second communication apparatus inserts the two-way delay measurement reply 2DMR message into a third block flow, wherein the third block flow is generated based on the third service bit flow;
obtaining, by the second communication apparatus, round trip time information, wherein the round trip time information is determined based on the third moment and the fourth moment, and the round trip time information indicates a time interval from sending the second service bit flow by the second communication apparatus to receiving the third service bit flow by the second communication apparatus; and
sending, by the second communication apparatus, the second delay measurement information to the first communication apparatus, wherein the second delay measurement information carries the round trip time information.

**21.** The method according to claim 20, wherein

the round trip time information comprises the third moment and the fourth moment; or
the round trip time information comprises a round trip time period, and the round trip time period is obtained by subtracting the third moment from the fourth moment.

**22.** The method according to any one of claims 14 to 21, wherein the obtaining, by a second communication apparatus, a third moment comprises:

obtaining, by the second communication apparatus, a fourth sub-moment, wherein the fourth sub-moment is a moment at which the second communication apparatus sends the second service bit flow;
obtaining, by the second communication apparatus, a fifth sub-moment, wherein the fifth sub-moment is a moment at which the second communication apparatus obtains a service container by demapping the second block flow;
obtaining, by the second communication apparatus, a sixth sub-moment, wherein the sixth sub-moment is a moment at which the second communication apparatus extracts the 1DM message or the 2DM message from the second block flow;
obtaining, by the second communication apparatus, the third moment through calculation in the following manner:

$$T3=t6+(t4-t5),$$

wherein
T3 is the third moment, t6 is the sixth sub-moment, t4 is the fourth sub-moment, and t5 is the fifth sub-moment.

**23.** The method according to claim 22, wherein the method further comprises:

obtaining, by the second communication apparatus, a seventh sub-moment, wherein the seventh sub-moment is a moment at which the second communication apparatus receives the third service bit flow;
obtaining, by the second communication apparatus, an eighth sub-moment, wherein the eighth sub-moment is a moment at which the second communication apparatus maps a service container corresponding to the third service bit flow to the third block flow;
obtaining, by the second communication apparatus, a ninth sub-moment, wherein the ninth sub-moment is the moment at which the second communication apparatus inserts the 2DMR message into the third block flow; and
obtaining, by the second communication apparatus, the fourth moment through calculation in the following manner:

$$T4=t9-(t8-t7),$$

wherein
T4 is the fourth moment, t9 is the ninth sub-moment, t8 is the eighth sub-moment, and t7 is the seventh sub-moment.

**24.** The method according to any one of claims 14 to 23, wherein the determining, by the second communication apparatus, a one-way delay from the first communication apparatus to the second communication apparatus based on the first moment and the third moment comprises:
obtaining, by the second communication apparatus, a one-way delay from the first communication apparatus to the second communication apparatus through calculation by using the following method:

$$One_way_delay=T3-T1,$$

wherein
One_way_delay is the one-way delay from the first communication apparatus to the second communication apparatus, T3 is the third moment, and T1 is the first moment.

**25.** The method according to any one of claims 14 to 24, wherein the second fine granularity service is a constant bit rate CBR service.

**26.** A communication apparatus, used as a first communication apparatus, comprising:

a transceiver module, configured to perform a receiving- and/or sending-related operation performed by the first communication apparatus in the method according to any one of claims 1 to 13; and
a processing module, configured to perform an operation other than the receiving and/or sending-related operation performed by the first communication apparatus in the method according to any one of claims 1 to 13.

**27.** A communication apparatus, used as a second communication apparatus, comprising:

a transceiver module, configured to perform a receiving- and/or sending-related operation performed by the second communication apparatus in the method according to any one of claims 14 to 25; and
a processing module, configured to perform an operation other than the receiving and/or sending-related operation performed by the second communication apparatus in the method according to any one of claims 14 to 25.

**28.** A network device, used as a first communication apparatus, comprising:

a communication interface; and
a processor connected to the communication interface, wherein based on the communication interface and the processor, the first communication apparatus performs the method according to any one of claims 1 to 13.

**29.** A network device, used as a second communication apparatus, comprising:

a communication interface; and
a processor connected to the communication interface, wherein based on the communication interface and the processor, the second communication apparatus performs the method according to any one of claims 14 to 25.

**30.** A communication system, wherein the communication system comprises a first communication apparatus and a second communication apparatus, the first communication apparatus is configured to perform the method according to any one of claims 1 to 13, and the second communication apparatus is configured to perform the method according to any one of claims 14 to 25.

**31.** A computer-readable storage medium, comprising instructions, wherein when the instructions are executed by a processor, the method according to any one of claims 1 to 25 is implemented.

**32.** A computer program product, comprising a program, wherein when the program is executed by a processor, the method according to any one of claims 1 to 25 is implemented.

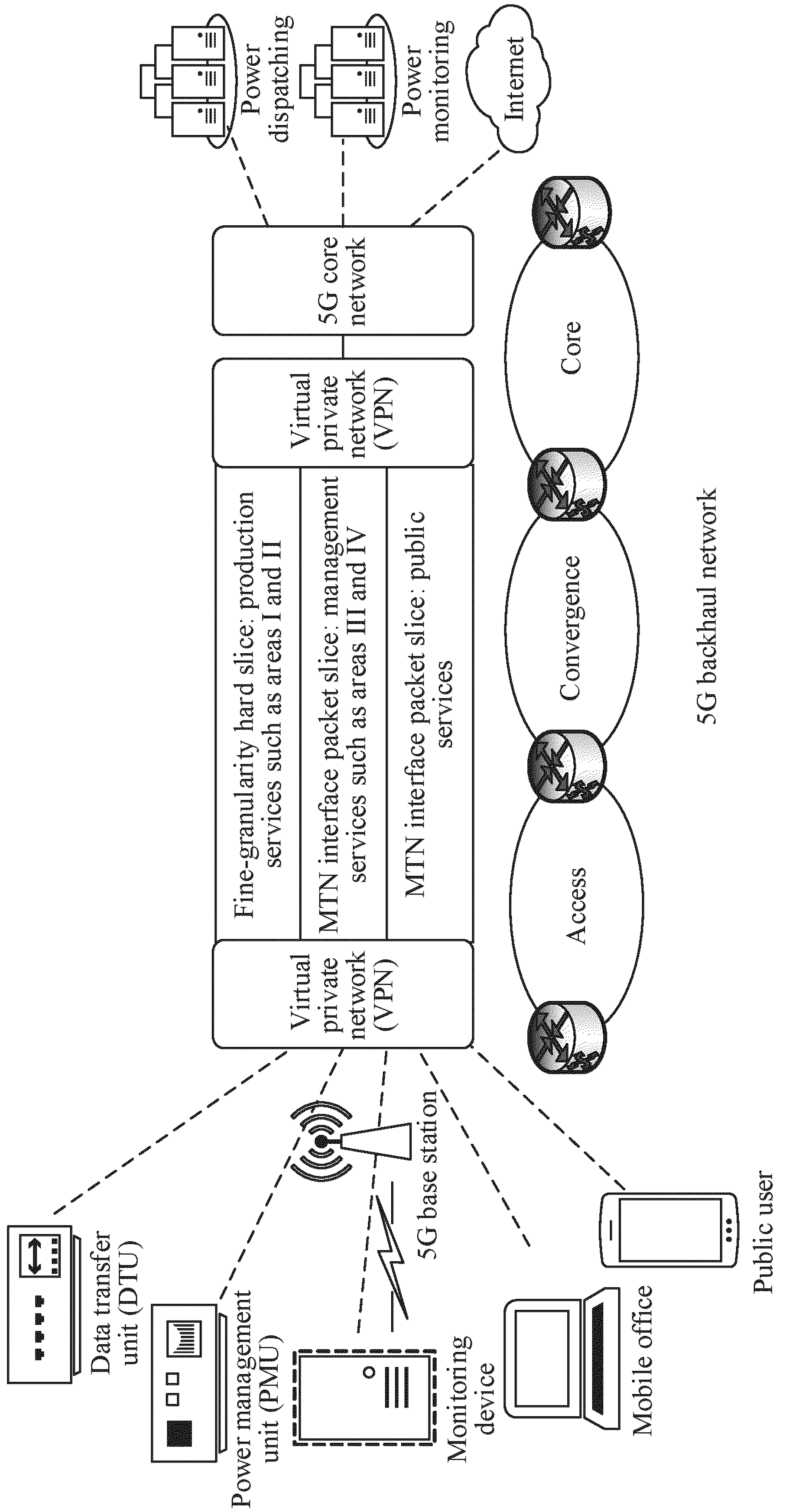
Power dispatching
Power monitoring
Internet
5G core network
Virtual private network (VPN)
Fine-granularity hard slice: production services such as areas I and II
MTN interface packet slice: management services such as areas III and IV
MTN interface packet slice: public services
Virtual private network (VPN)
Core
Convergence
Access
5G backhaul network
Data transfer unit (DTU)
Power management unit (PMU)
5G base station
Monitoring device
Mobile office
Public user

FIG. 1

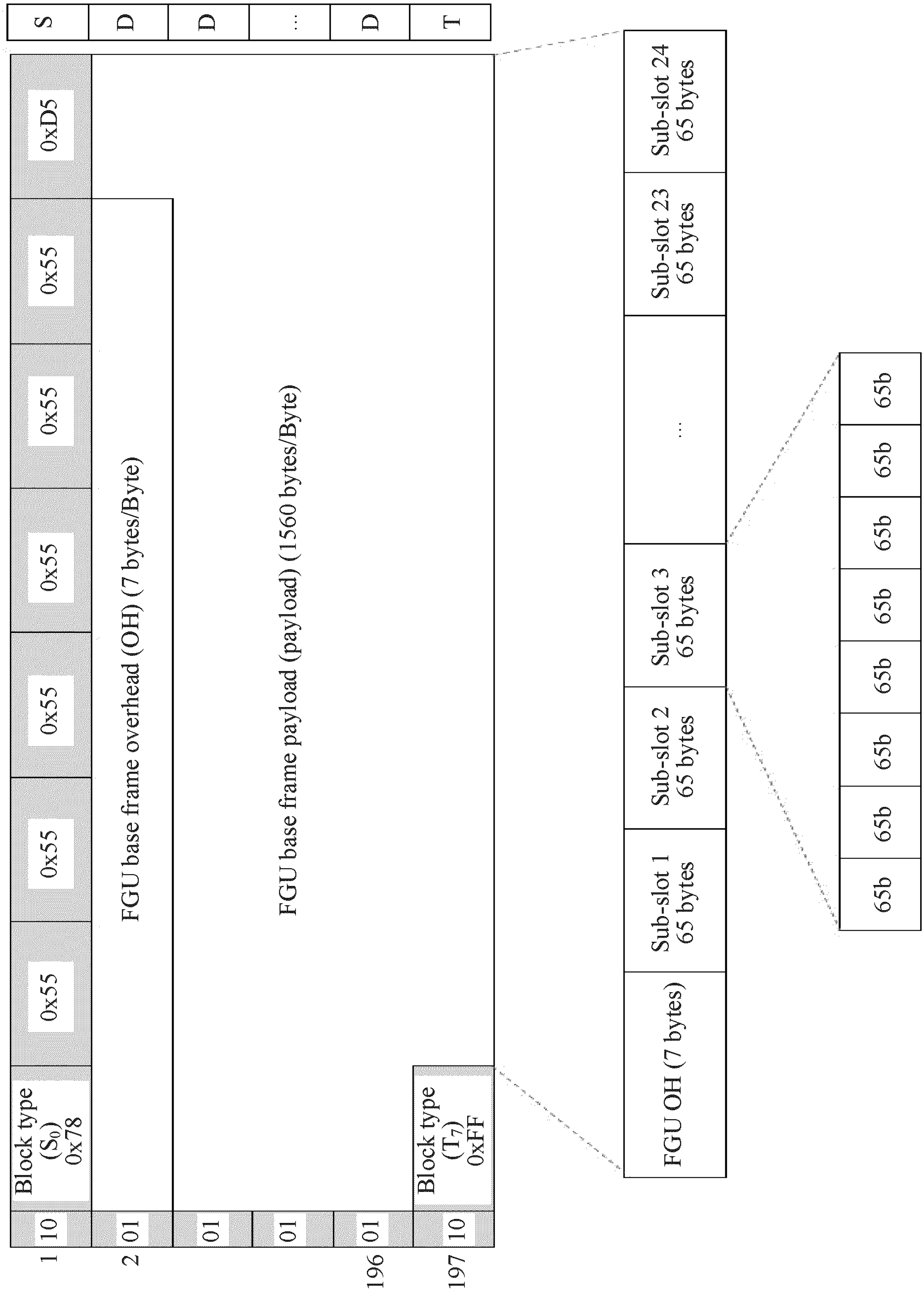
S
D
D
...
D
T
1
2
196
197
10
01
01
01
01
10
Block type (S0) 0x78
0x55
0x55
0x55
0x55
0x55
0x55
0xD5
FGU base frame overhead (OH) (7 bytes/Byte)
FGU base frame payload (payload) (1560 bytes/Byte)
Block type (T7) 0xFF
FGU OH (7 bytes)
Sub-slot 1 65 bytes
Sub-slot 2 65 bytes
Sub-slot 3 65 bytes
...
Sub-slot 23 65 bytes
Sub-slot 24 65 bytes
65b
65b
65b
65b
65b
65b
65b
65b

FIG. 2

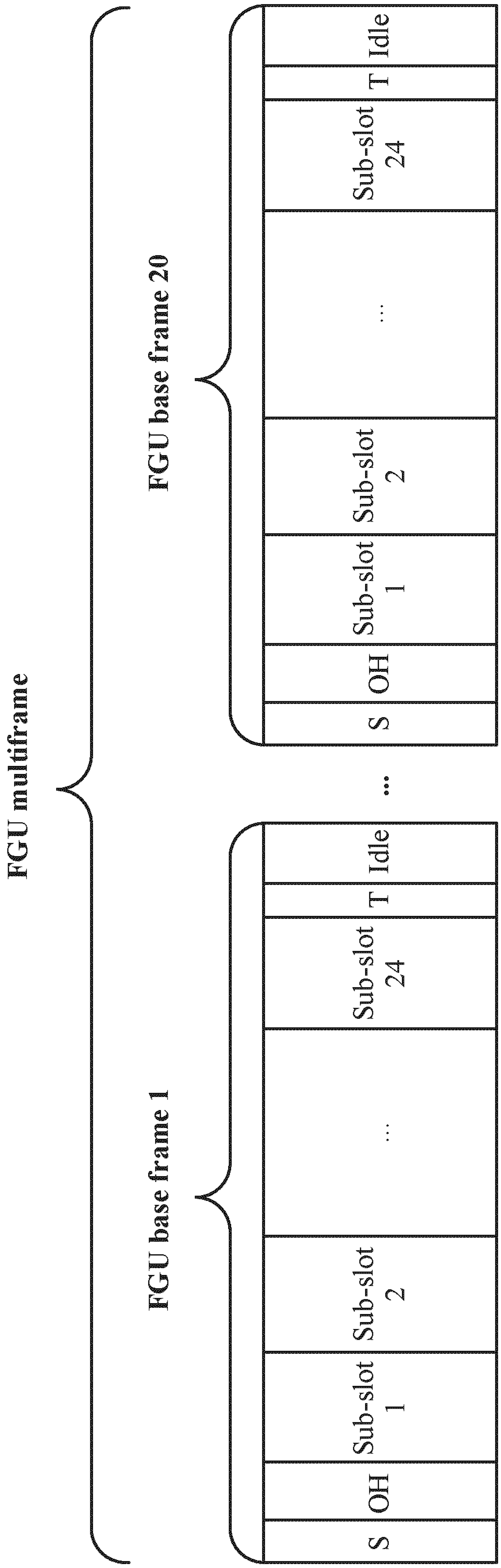
FGU multiframe
FGU base frame 1
S
OH
Sub-slot 1
Sub-slot 2
...
Sub-slot 24
T
Idle
...
FGU base frame 20
S
OH
Sub-slot 1
Sub-slot 2
...
Sub-slot 24
T
Idle

FIG. 3a

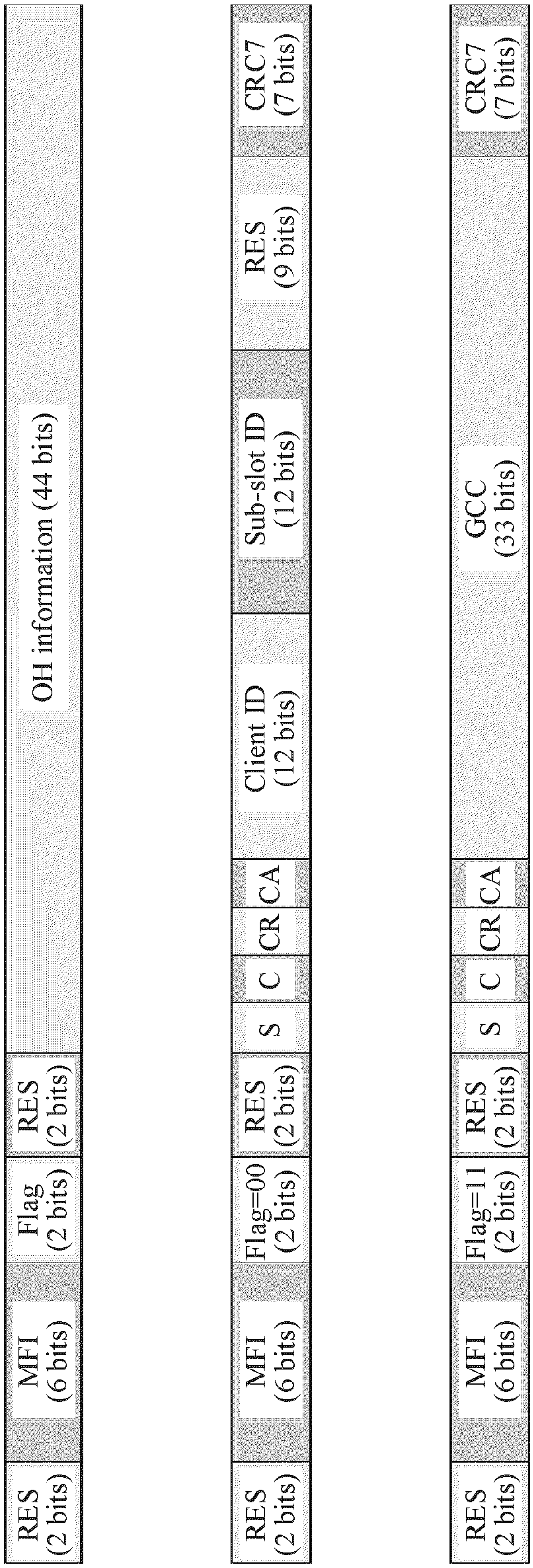
RES (2 bits)
MFI (6 bits)
Flag (2 bits)
RES (2 bits)
OH information (44 bits)
RES (2 bits)
MFI (6 bits)
Flag=00 (2 bits)
RES (2 bits)
S
C
CR
CA
Client ID (12 bits)
Sub-slot ID (12 bits)
RES (9 bits)
CRC7 (7 bits)
RES (2 bits)
MFI (6 bits)
Flag=11 (2 bits)
RES (2 bits)
S
C
CR
CA
GCC (33 bits)
CRC7 (7 bits)

FIG. 3b

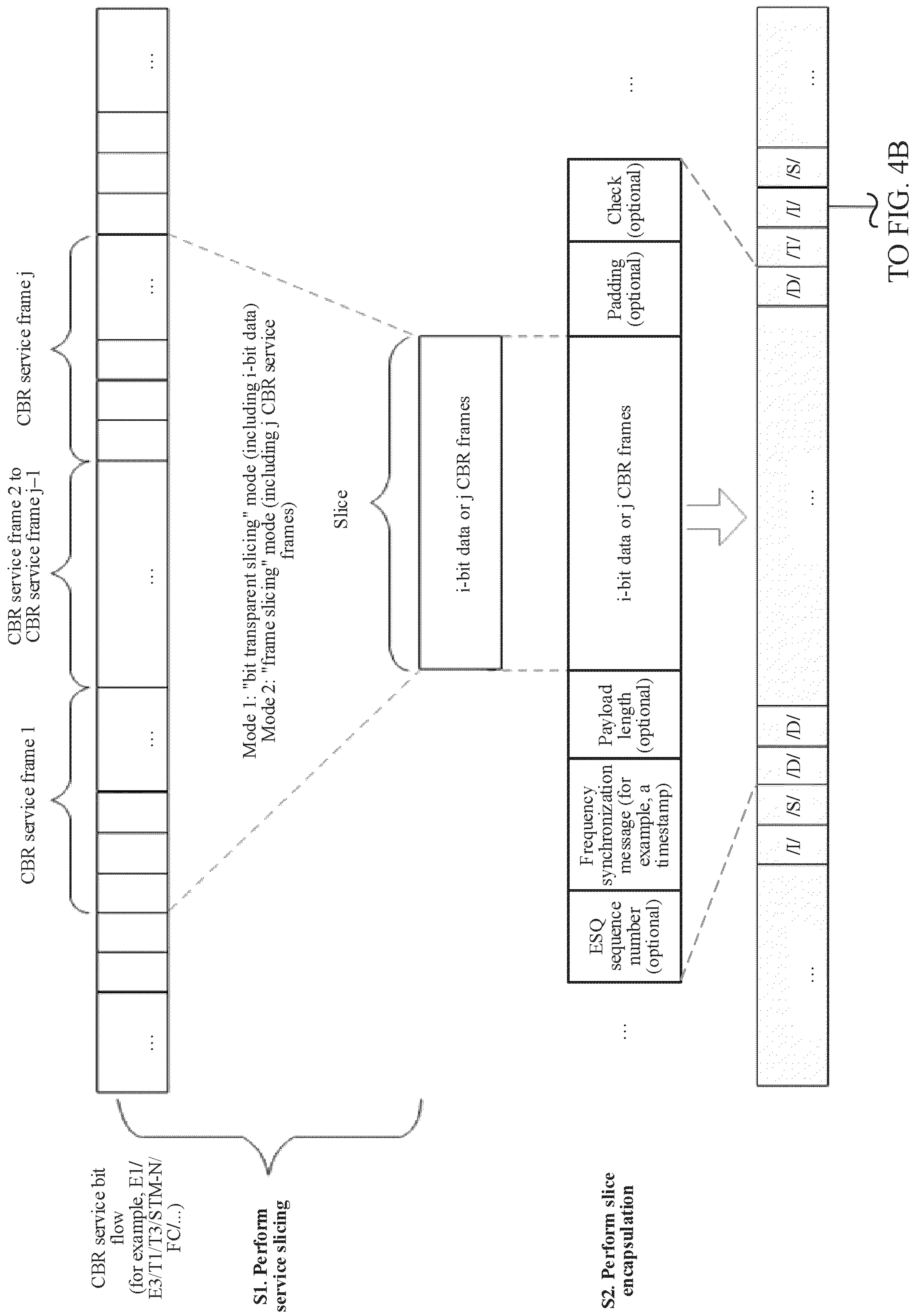
CBR service bit flow (for example, E1/ E3/T1/T3/STM-N/ FC/...)
S1. Perform service slicing
S2. Perform slice encapsulation
CBR service frame 1
CBR service frame 2 to CBR service frame j–1
CBR service frame j
Mode 1: "bit transparent slicing" mode (including i-bit data)
Mode 2: "frame slicing" mode (including j CBR service frames)
Slice
i-bit data or j CBR frames
ESQ sequence number (optional)
Frequency synchronization message (for example, a timestamp)
Payload length (optional)
i-bit data or j CBR frames
Padding (optional)
Check (optional)
/I/ /S/ /D/ /D/
/D/ /T/ /I/ /S/
TO FIG. 4B

FIG. 4A

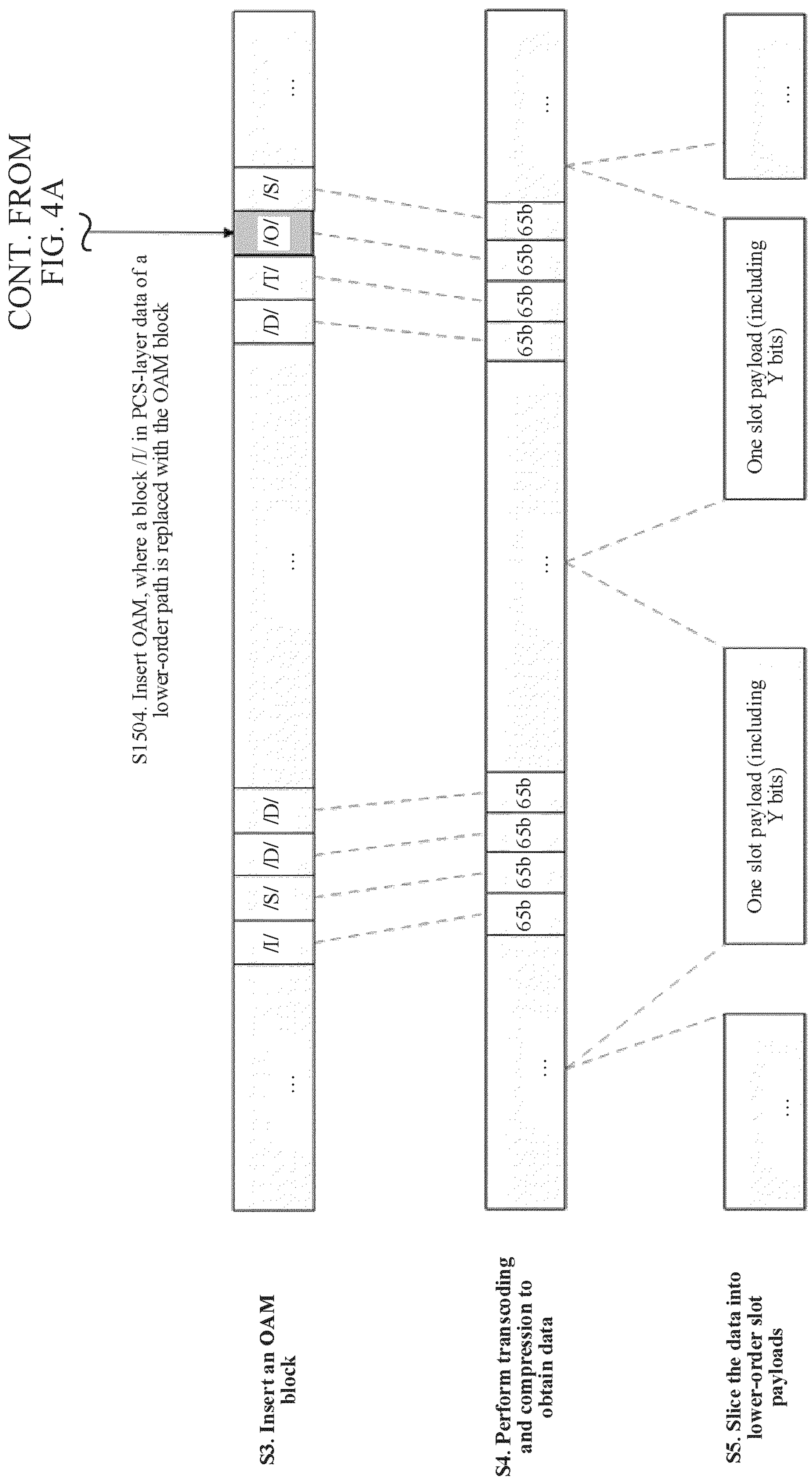
CONT. FROM FIG. 4A
S1504. Insert OAM, where a block /I/ in PCS-layer data of a lower-order path is replaced with the OAM block
...
/S/
/O/
/T/
/D/
/D/
/D/
/S/
/I/
65b
One slot payload (including Y bits)
One slot payload (including Y bits)
S3. Insert an OAM block
S4. Perform transcoding and compression to obtain data
S5. Slice the data into lower-order slot payloads

FIG. 4B

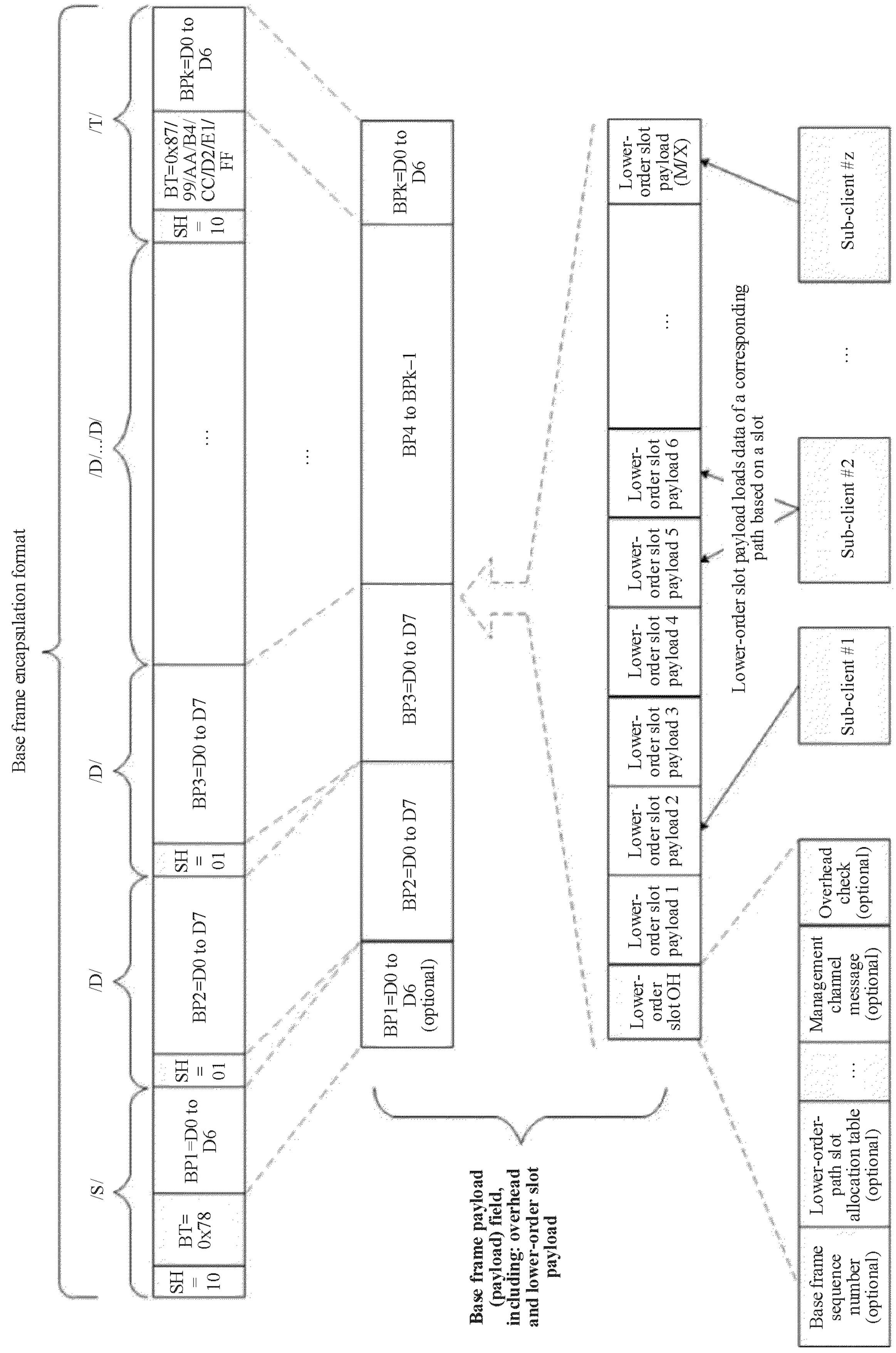
Base frame encapsulation format
/S/
/D/
/D/
/D/.../D/
/T/
SH = 10
BT= 0x78
BP1=D0 to D6
SH = 01
BP2=D0 to D7
SH = 01
BP3=D0 to D7
...
SH = 10
BT=0x87/ 99/AA/B4/ CC/D2/E1/ FF
BPk=D0 to D6
...
BP1=D0 to D6 (optional)
BP2=D0 to D7
BP3=D0 to D7
BP4 to BPk−1
BPk=D0 to D6
Base frame payload (payload) field, including: overhead and lower-order slot payload
Lower-order slot OH
Lower-order slot payload 1
Lower-order slot payload 2
Lower-order slot payload 3
Lower-order slot payload 4
Lower-order slot payload 5
Lower-order slot payload 6
...
Lower-order slot payload (M/X)
Lower-order slot payload loads data of a corresponding path based on a slot
Base frame sequence number (optional)
Lower-order-path slot allocation table (optional)
...
Management channel message (optional)
Overhead check (optional)
Sub-client #1
Sub-client #2
...
Sub-client #z

FIG. 5

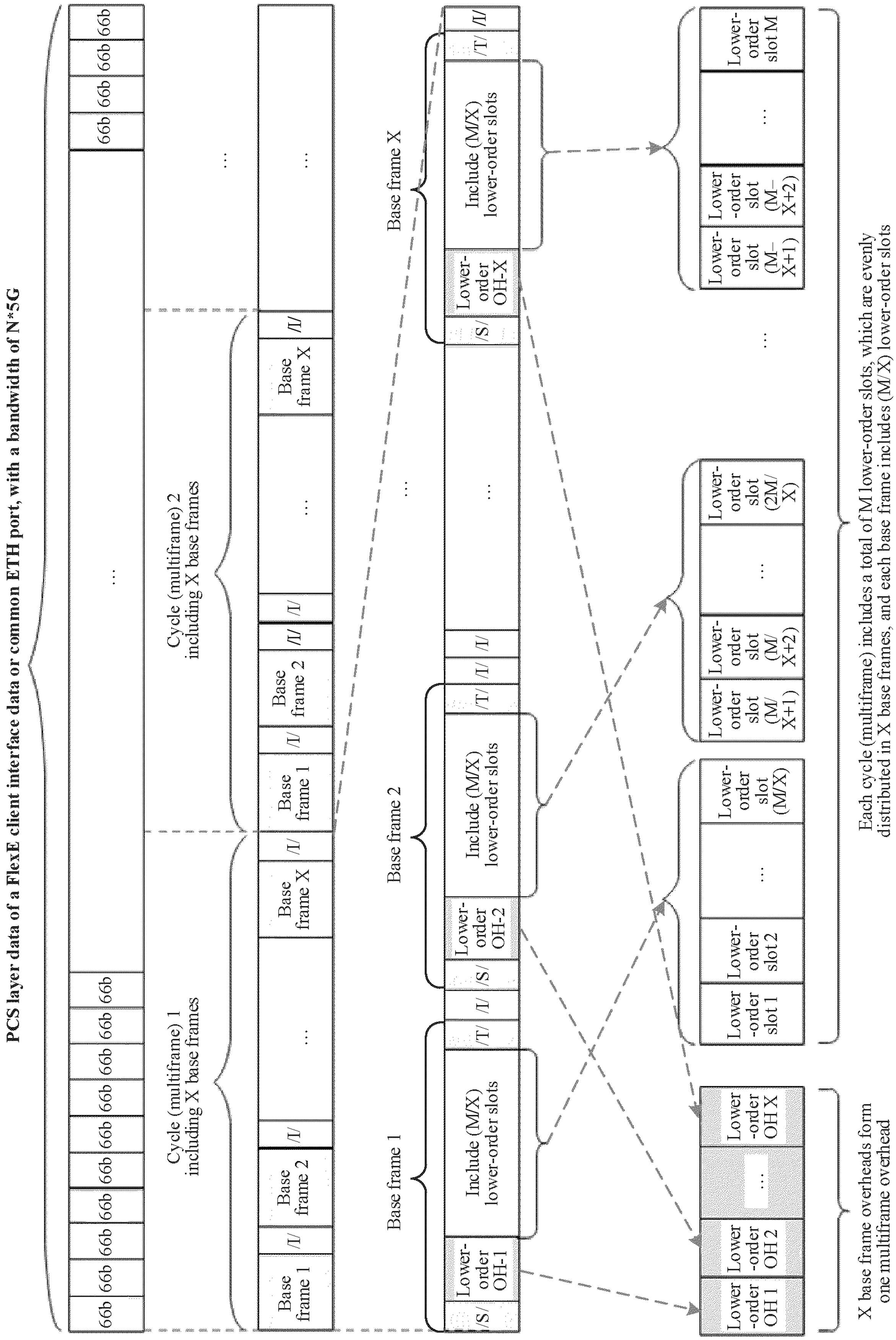
PCS layer data of a FlexE client interface data or common ETH port, with a bandwidth of N*5G
66b
...
Cycle (multiframe) 1 including X base frames
Cycle (multiframe) 2 including X base frames
Base frame 1
Base frame 2
Base frame X
/I/
/S/
/T/
Lower-order OH-1
Lower-order OH-2
Lower-order OH-X
Include (M/X) lower-order slots
Lower-order OH 1
Lower-order OH 2
Lower-order OH X
X base frame overheads form one multiframe overhead
Lower-order slot 1
Lower-order slot 2
Lower-order slot (M/X)
Lower-order slot (M/X+1)
Lower-order slot (M/X+2)
Lower-order slot (2M/X)
Lower-order slot (M–X+1)
Lower-order slot (M–X+2)
Lower-order slot M
Each cycle (multiframe) includes a total of M lower-order slots, which are evenly distributed in X base frames, and each base frame includes (M/X) lower-order slots

FIG. 6

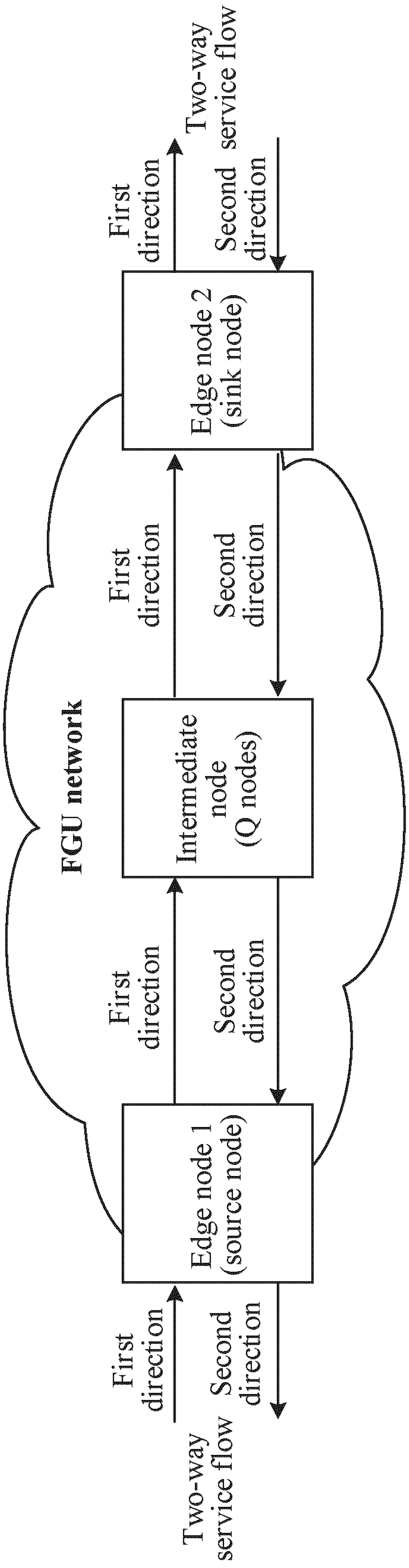
Two-way service flow
First direction
Second direction
Edge node 1 (source node)
First direction
Second direction
FGU network
Intermediate node (Q nodes)
First direction
Second direction
Edge node 2 (sink node)
First direction
Second direction
Two-way service flow

FIG. 7

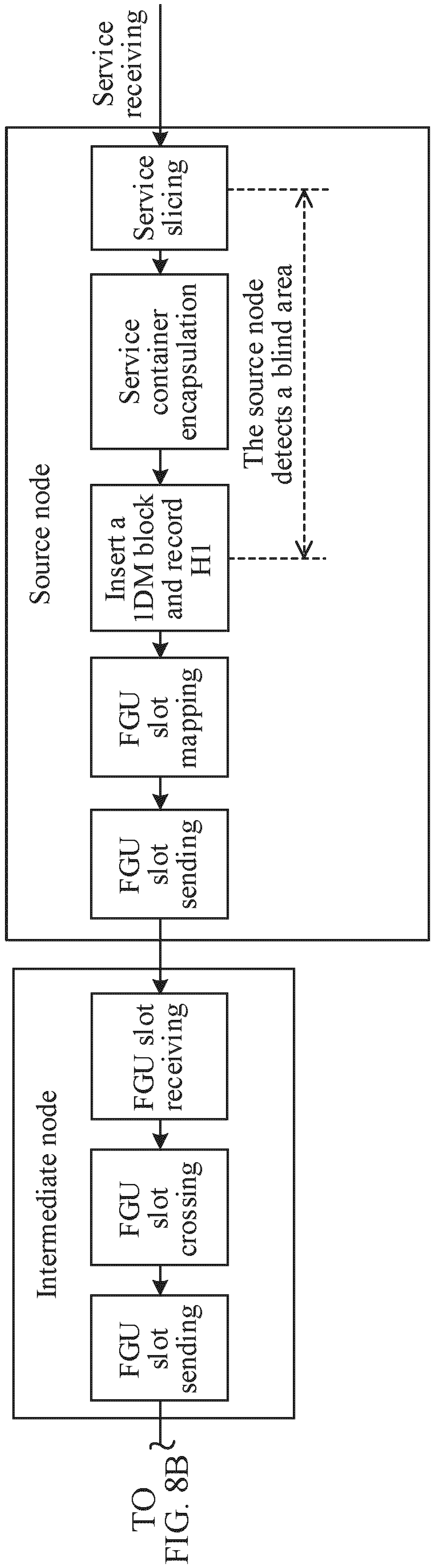
Service receiving
Source node
Service slicing
Service container encapsulation
Insert a 1DM block and record H1
FGU slot mapping
FGU slot sending
The source node detects a blind area
Intermediate node
FGU slot receiving
FGU slot crossing
FGU slot sending
TO FIG. 8B

FIG. 8A

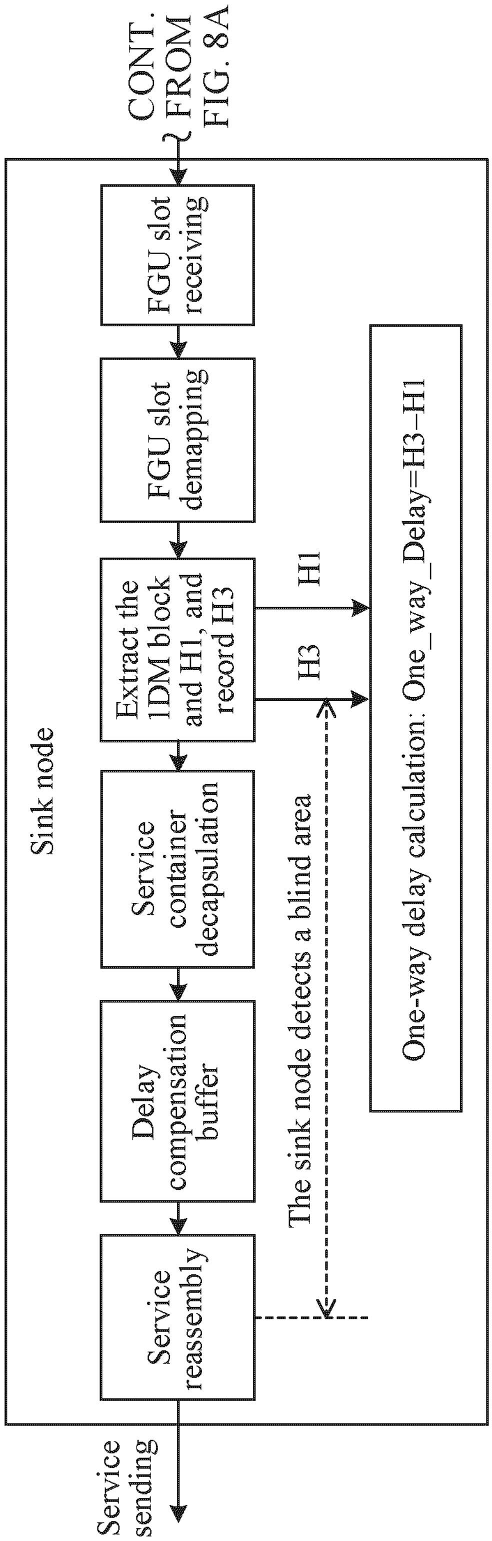
CONT. FROM FIG. 8A
Sink node
FGU slot receiving
FGU slot demapping
Extract the 1DM block and H1, and record H3
H1
H3
Service container decapsulation
Delay compensation buffer
Service reassembly
The sink node detects a blind area
One-way delay calculation: One_way_Delay=H3−H1
Service sending

FIG. 8B

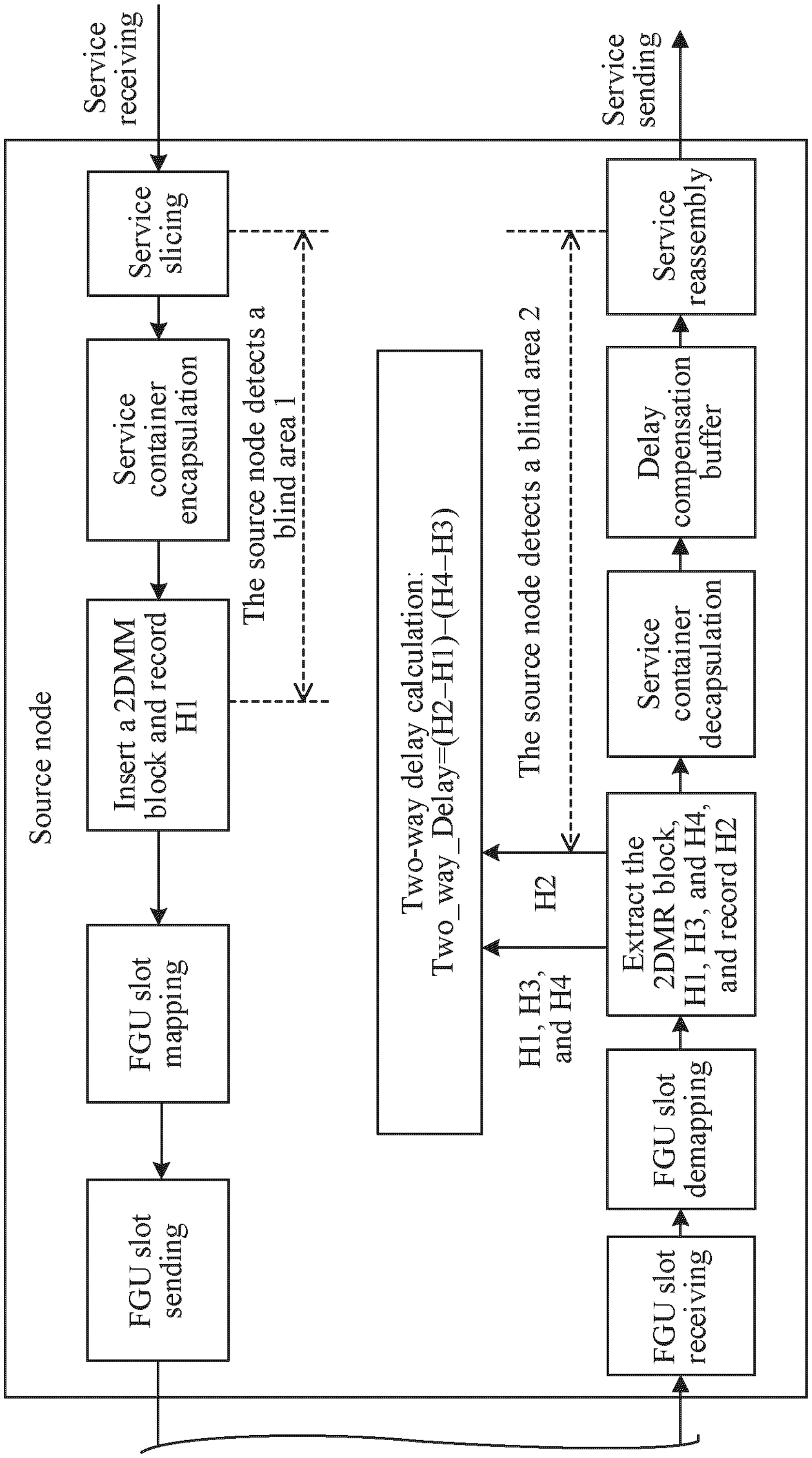


TO FIG. 9B

FIG. 9A

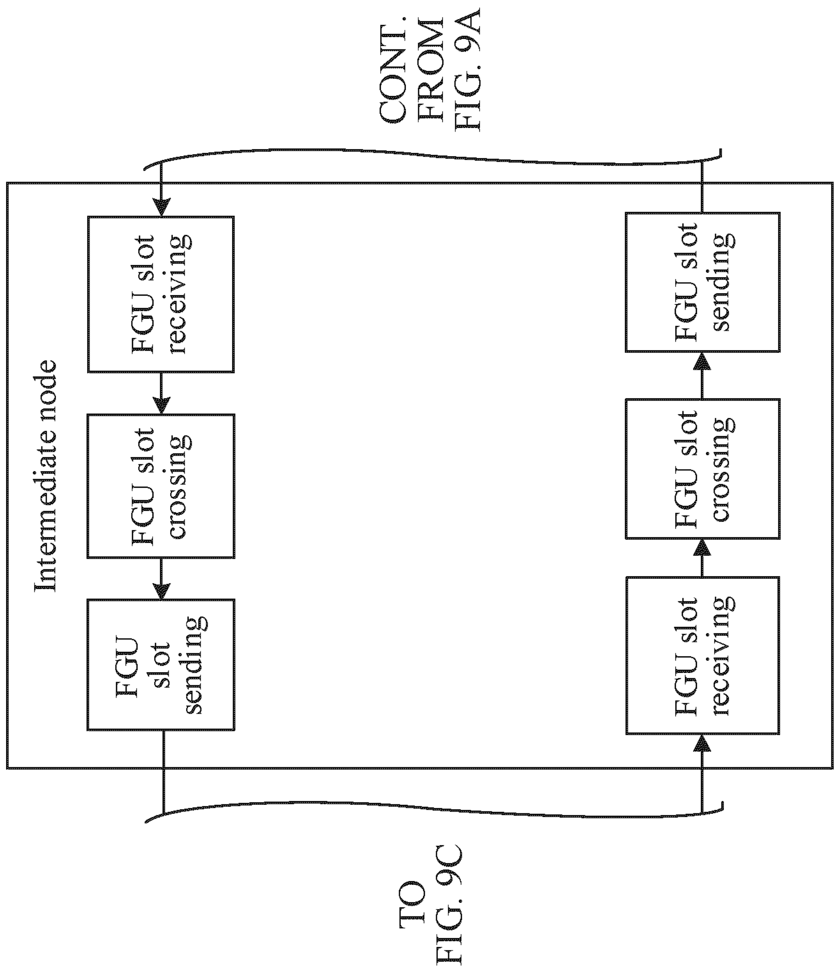
CONT. FROM FIG. 9A
Intermediate node
FGU slot receiving
FGU slot crossing
FGU slot sending
FGU slot sending
FGU slot crossing
FGU slot receiving
TO FIG. 9C

FIG. 9B

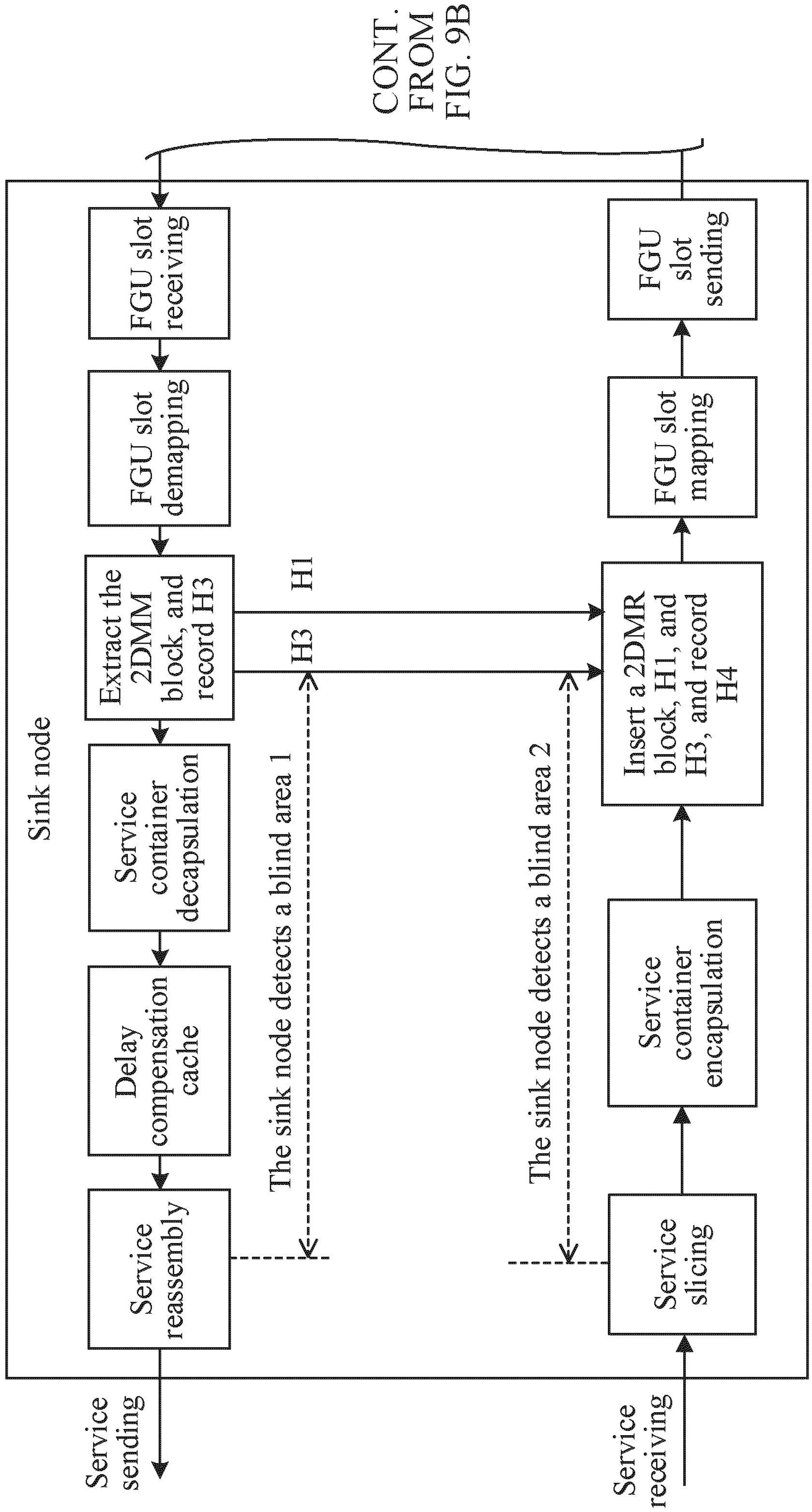
CONT. FROM FIG. 9B
Sink node
FGU slot receiving
FGU slot demapping
Extract the 2DMM block, and record H3
Service container decapsulation
Delay compensation cache
Service reassembly
Service sending
H1
H3
The sink node detects a blind area 1
The sink node detects a blind area 2
Service receiving
Service slicing
Service container encapsulation
Insert a 2DMR block, H1, and H3, and record H4
FGU slot mapping
FGU slot sending

FIG. 9C

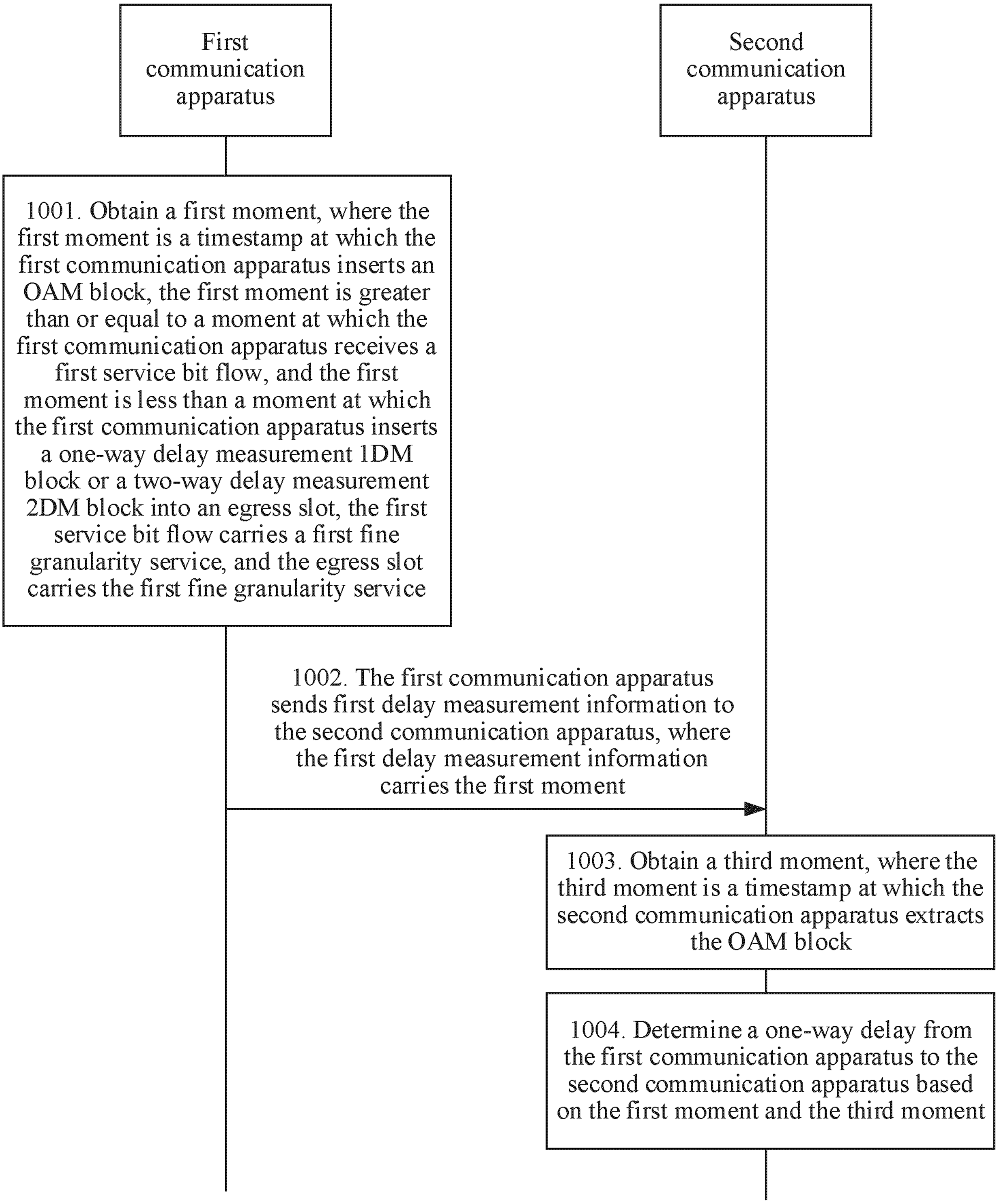
First communication apparatus
Second communication apparatus
1001. Obtain a first moment, where the first moment is a timestamp at which the first communication apparatus inserts an OAM block, the first moment is greater than or equal to a moment at which the first communication apparatus receives a first service bit flow, and the first moment is less than a moment at which the first communication apparatus inserts a one-way delay measurement 1DM block or a two-way delay measurement 2DM block into an egress slot, the first service bit flow carries a first fine granularity service, and the egress slot carries the first fine granularity service
1002. The first communication apparatus sends first delay measurement information to the second communication apparatus, where the first delay measurement information carries the first moment
1003. Obtain a third moment, where the third moment is a timestamp at which the second communication apparatus extracts the OAM block
1004. Determine a one-way delay from the first communication apparatus to the second communication apparatus based on the first moment and the third moment

FIG. 10

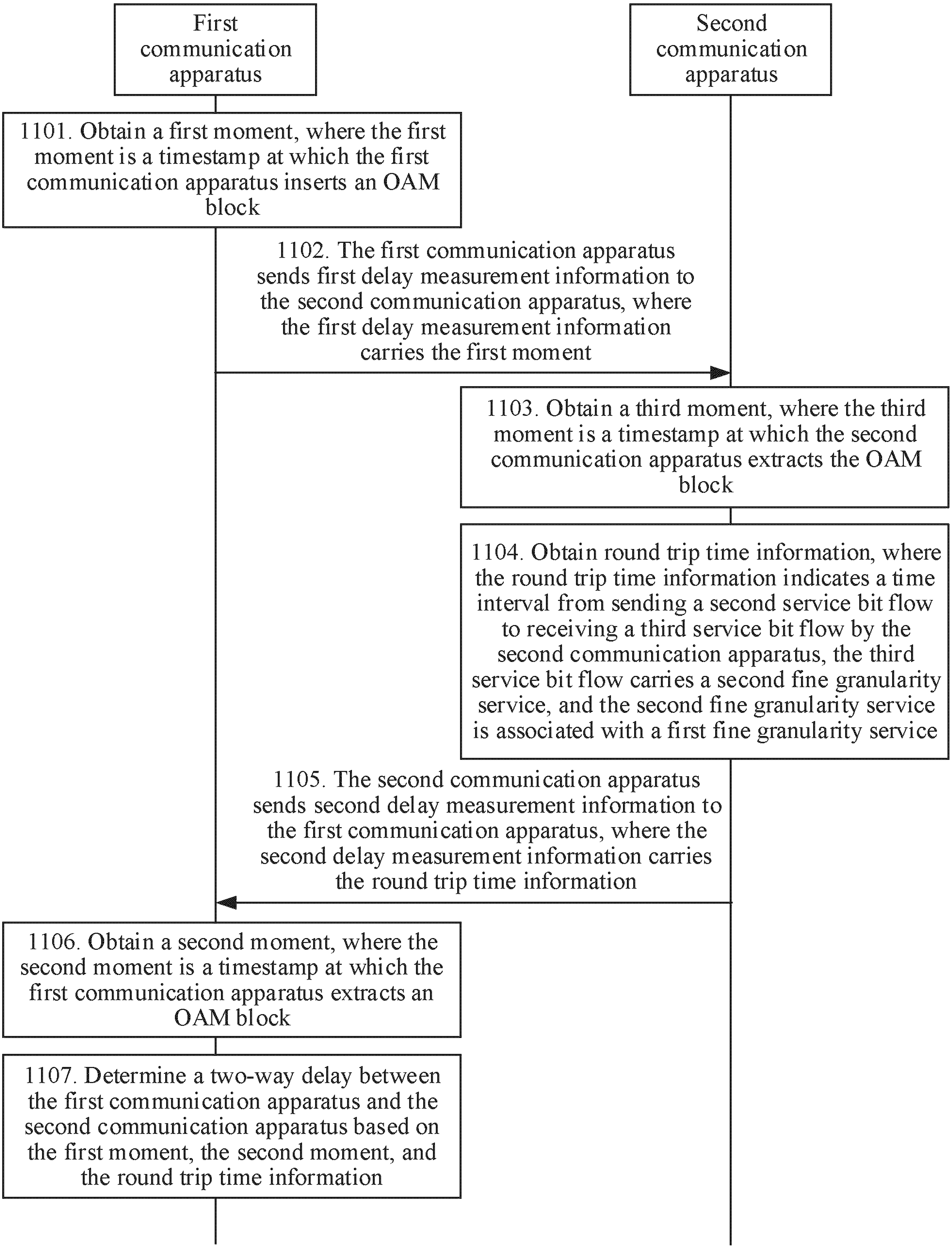
First communication apparatus
Second communication apparatus
1101. Obtain a first moment, where the first moment is a timestamp at which the first communication apparatus inserts an OAM block
1102. The first communication apparatus sends first delay measurement information to the second communication apparatus, where the first delay measurement information carries the first moment
1103. Obtain a third moment, where the third moment is a timestamp at which the second communication apparatus extracts the OAM block
1104. Obtain round trip time information, where the round trip time information indicates a time interval from sending a second service bit flow to receiving a third service bit flow by the second communication apparatus, the third service bit flow carries a second fine granularity service, and the second fine granularity service is associated with a first fine granularity service
1105. The second communication apparatus sends second delay measurement information to the first communication apparatus, where the second delay measurement information carries the round trip time information
1106. Obtain a second moment, where the second moment is a timestamp at which the first communication apparatus extracts an OAM block
1107. Determine a two-way delay between the first communication apparatus and the second communication apparatus based on the first moment, the second moment, and the round trip time information

FIG. 11

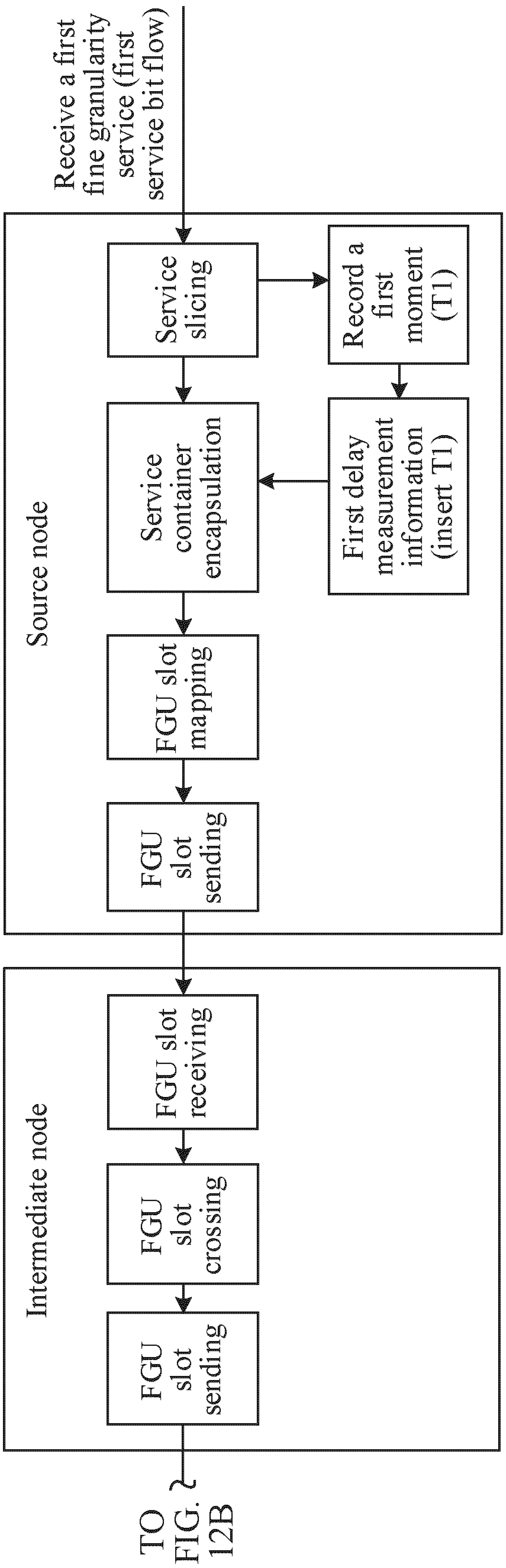
Receive a first fine granularity service (first service bit flow)
Source node
Service slicing
Record a first moment (T1)
Service container encapsulation
First delay measurement information (insert T1)
FGU slot mapping
FGU slot sending
Intermediate node
FGU slot receiving
FGU slot crossing
FGU slot sending
TO FIG. 12B

FIG. 12A

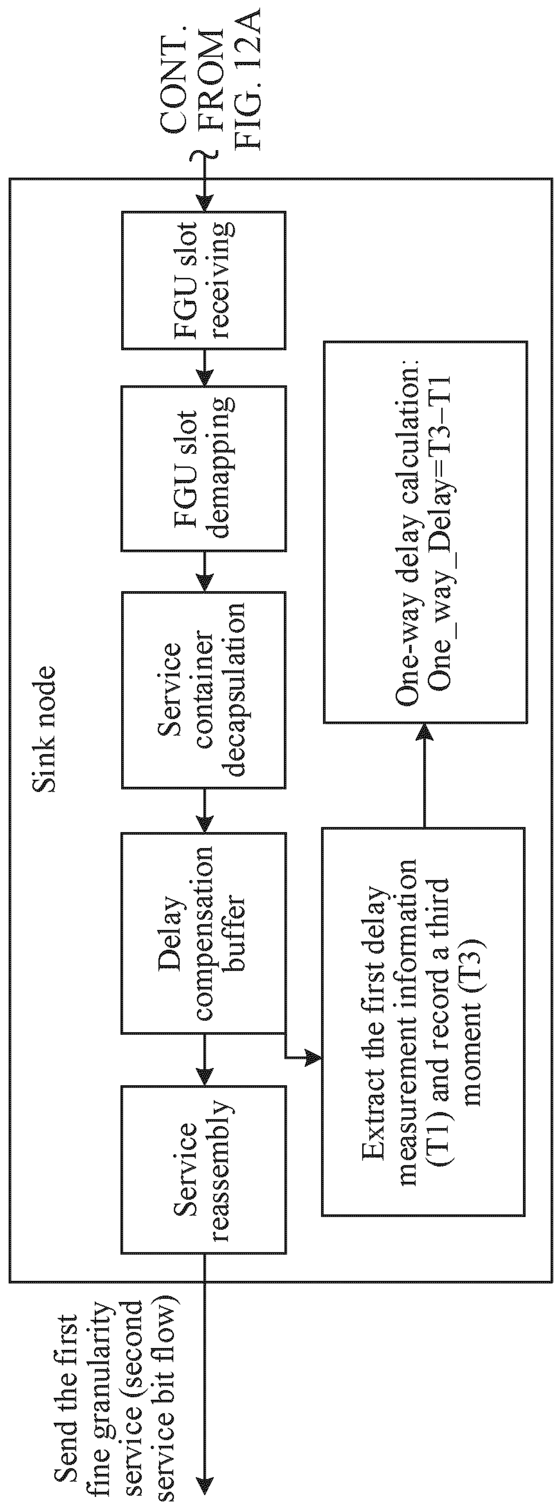
CONT. FROM FIG. 12A
Sink node
FGU slot receiving
FGU slot demapping
Service container decapsulation
Delay compensation buffer
Service reassembly
Extract the first delay measurement information (T1) and record a third moment (T3)
One-way delay calculation: One_way_Delay=T3−T1
Send the first fine granularity service (second service bit flow)

FIG. 12B

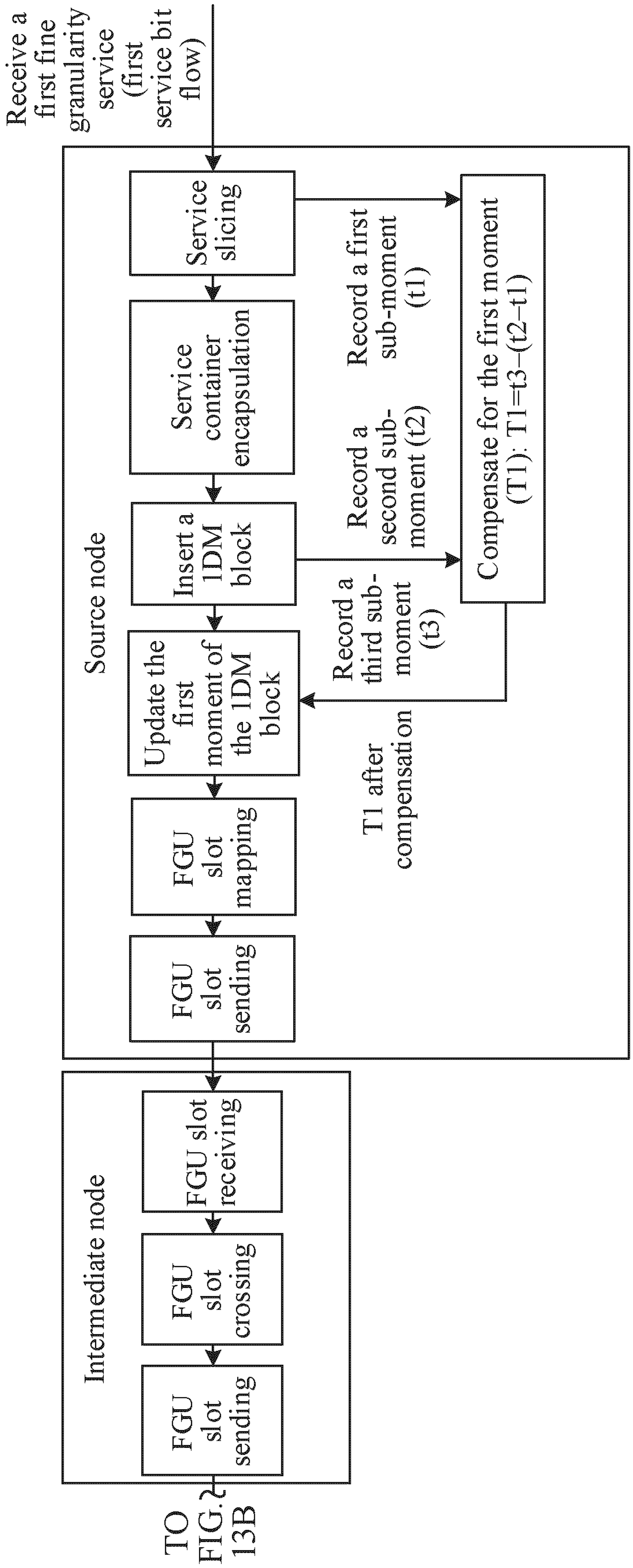
Receive a first fine granularity service (first service bit flow)
Source node
Service slicing
Service container encapsulation
Insert a 1DM block
Update the first moment of the 1DM block
FGU slot mapping
FGU slot sending
Record a first sub-moment (t1)
Record a second sub-moment (t2)
Record a third sub-moment (t3)
Compensate for the first moment (T1): T1=t3−(t2−t1)
T1 after compensation
Intermediate node
FGU slot receiving
FGU slot crossing
FGU slot sending
TO FIG. 13B

FIG. 13A

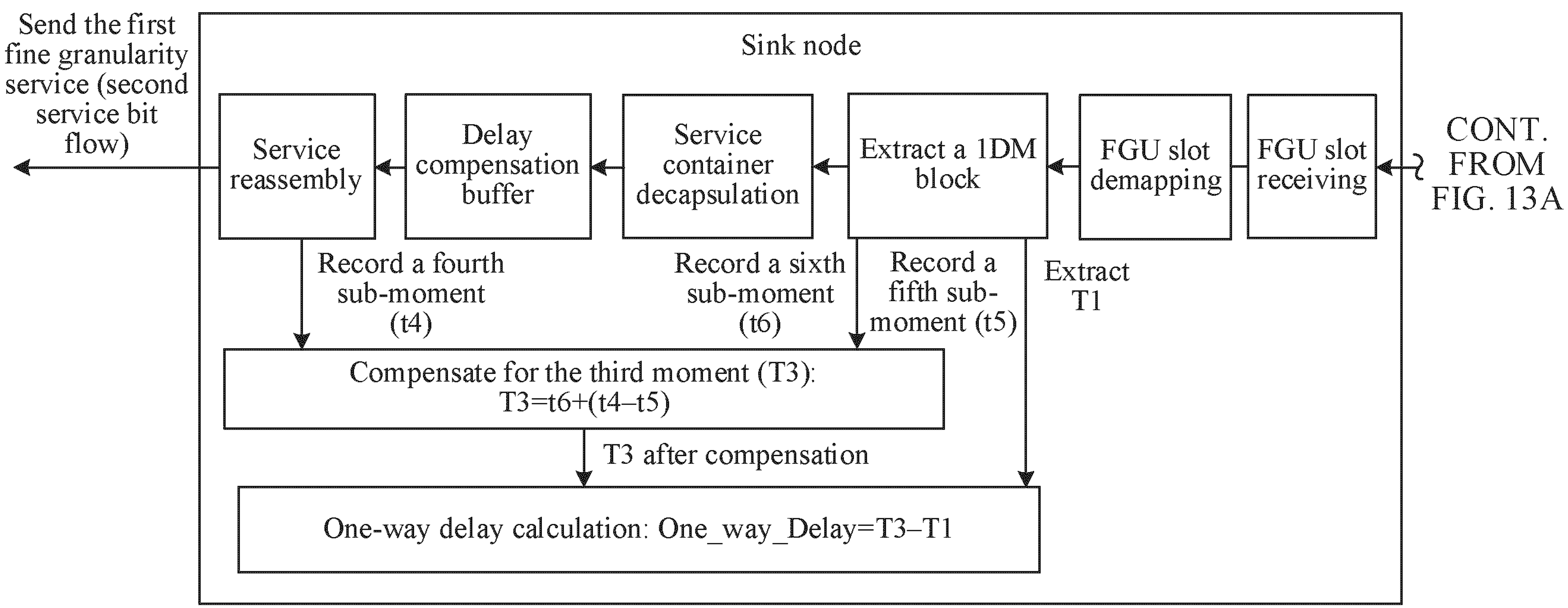
Send the first fine granularity service (second service bit flow)
Sink node
Service reassembly
Delay compensation buffer
Service container decapsulation
Extract a 1DM block
FGU slot demapping
FGU slot receiving
CONT. FROM FIG. 13A
Record a fourth sub-moment (t4)
Record a sixth sub-moment (t6)
Record a fifth sub-moment (t5)
Extract T1
Compensate for the third moment (T3): T3=t6+(t4–t5)
T3 after compensation
One-way delay calculation: One_way_Delay=T3–T1

FIG. 13B

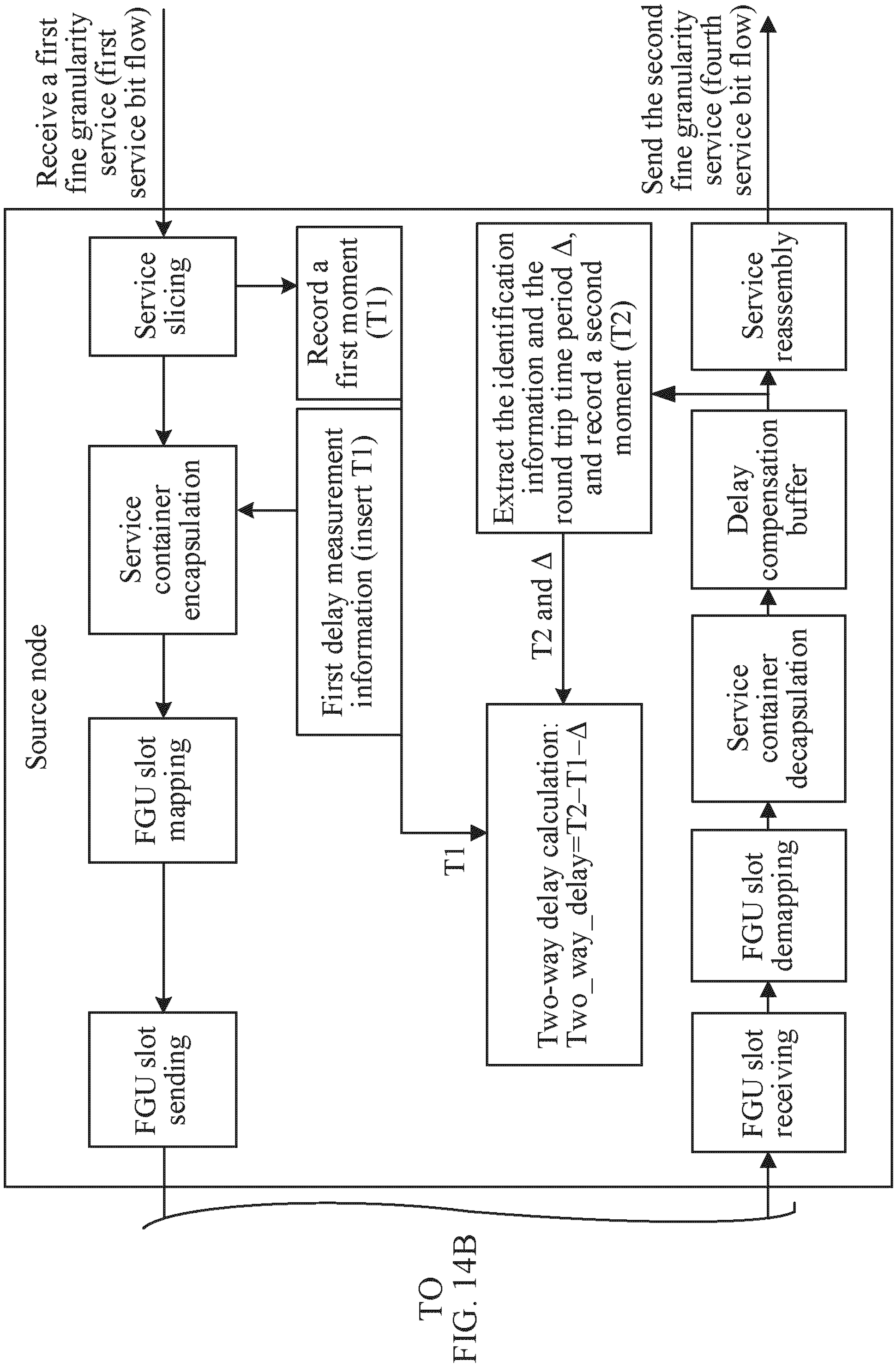
Receive a first fine granularity service (first service bit flow)
Source node
Service slicing
Record a first moment (T1)
Service container encapsulation
First delay measurement information (insert T1)
FGU slot mapping
FGU slot sending
T1
Two-way delay calculation: Two_way_delay=T2−T1−Δ
T2 and Δ
Extract the identification information and the round trip time period Δ, and record a second moment (T2)
Send the second fine granularity service (fourth service bit flow)
Service reassembly
Delay compensation buffer
Service container decapsulation
FGU slot demapping
FGU slot receiving
TO FIG. 14B

FIG. 14A

CONT. FROM FIG. 14A

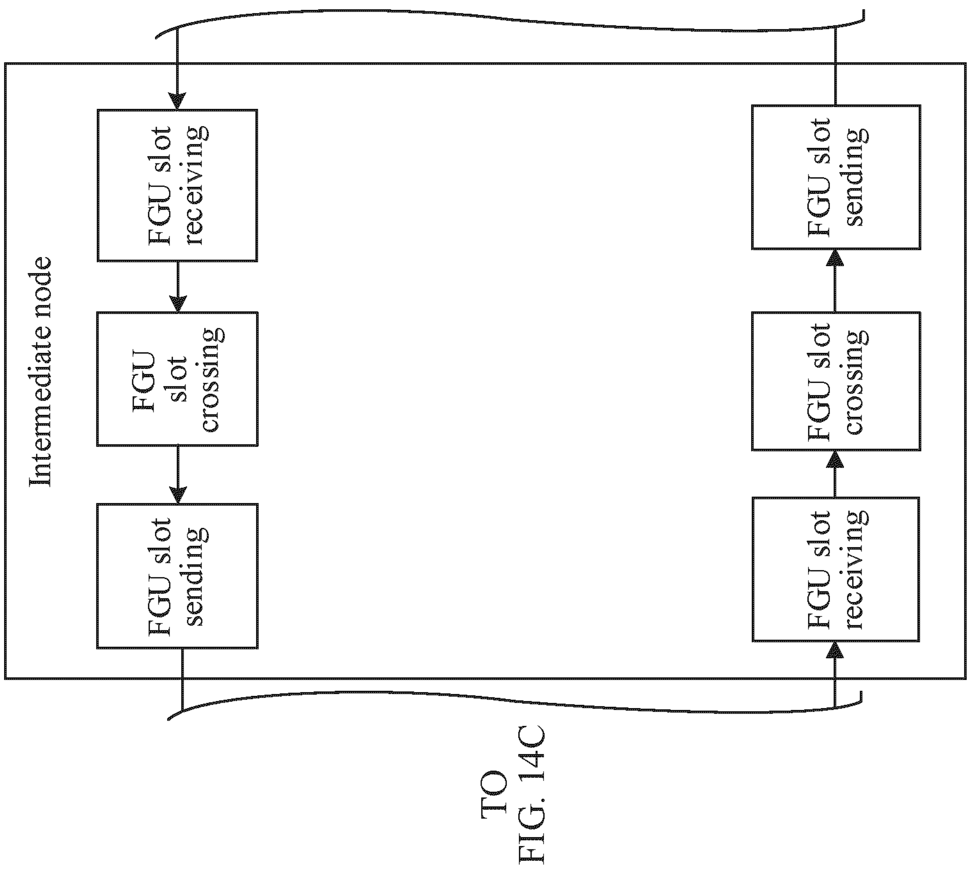


TO FIG. 14C

FIG. 14B

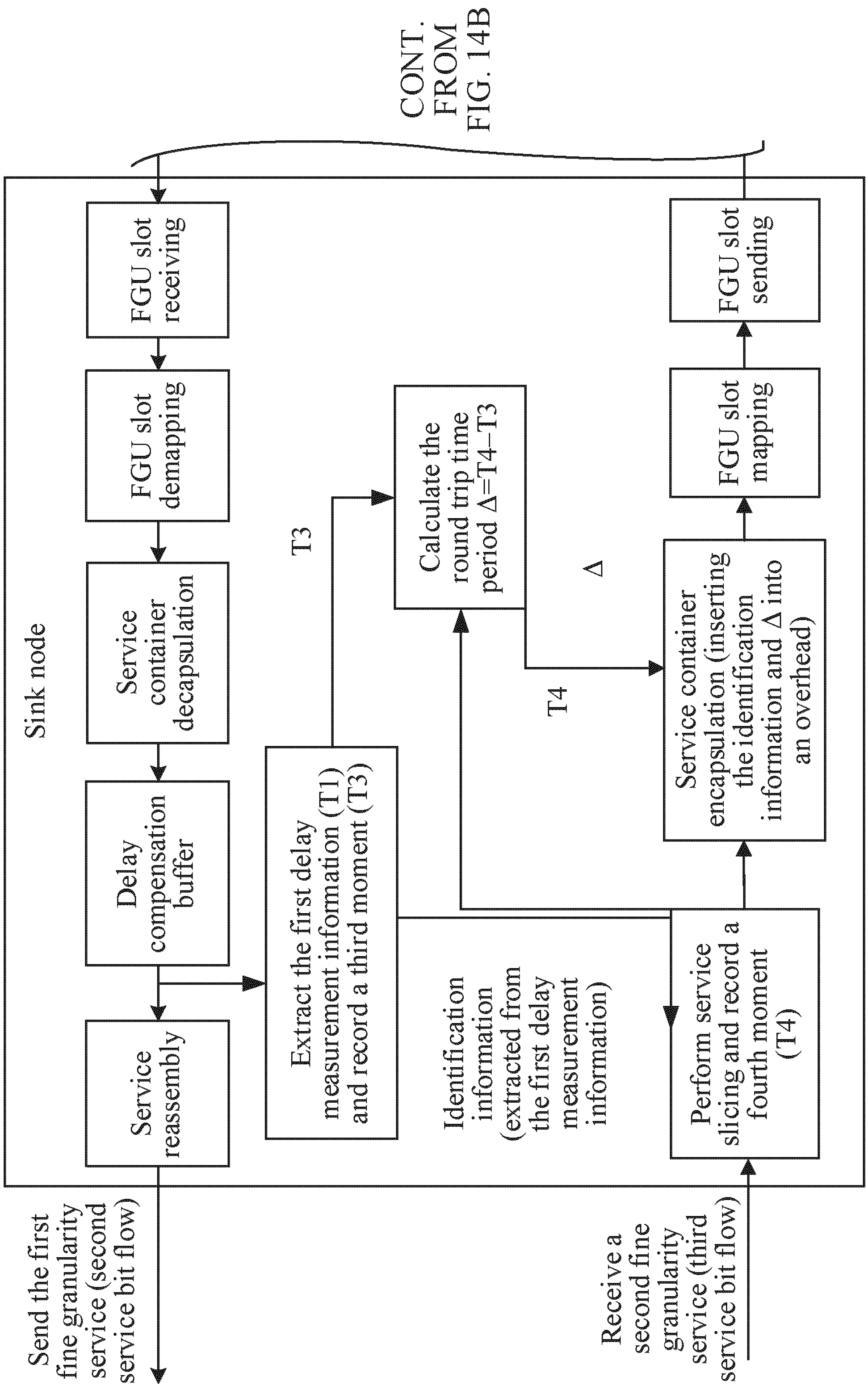
CONT. FROM FIG. 14B
Sink node
FGU slot receiving
FGU slot demapping
Service container decapsulation
Delay compensation buffer
Service reassembly
Send the first fine granularity service (second service bit flow)
Extract the first delay measurement information (T1) and record a third moment (T3)
T3
Calculate the round trip time period Δ=T4−T3
T4
Δ
Identification information (extracted from the first delay measurement information)
Perform service slicing and record a fourth moment (T4)
Service container encapsulation (inserting the identification information and Δ into an overhead)
FGU slot mapping
FGU slot sending
Receive a second fine granularity service (third service bit flow)

FIG. 14C

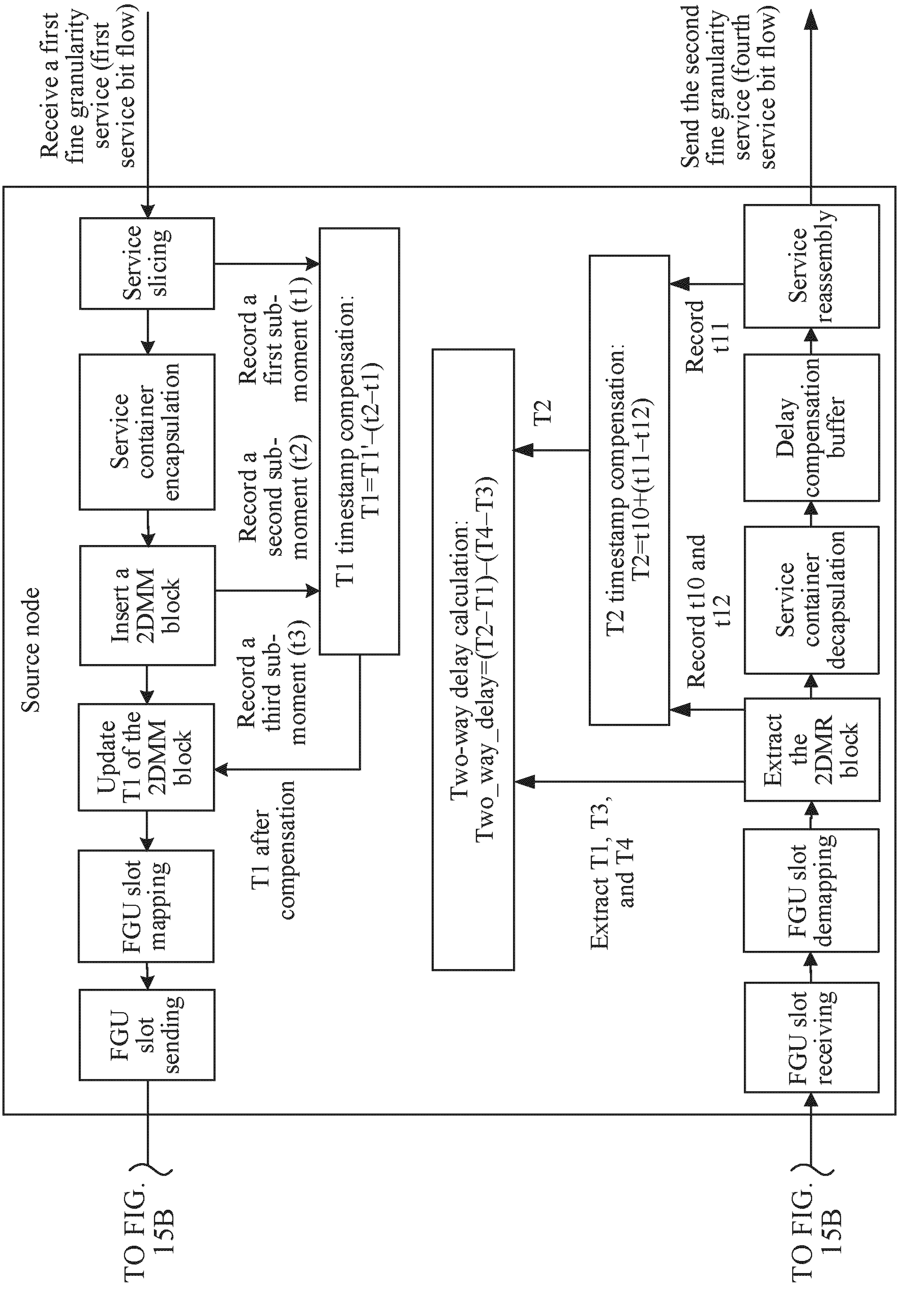
Receive a first fine granularity service (first service bit flow)
Source node
Service slicing
Service container encapsulation
Insert a 2DMM block
Update T1 of the 2DMM block
FGU slot mapping
FGU slot sending
Record a first sub-moment (t1)
Record a second sub-moment (t2)
Record a third sub-moment (t3)
T1 timestamp compensation: T1=T1'-(t2-t1)
T1 after compensation
Two-way delay calculation: Two_way_delay=(T2-T1)-(T4-T3)
T2
Extract T1, T3, and T4
T2 timestamp compensation: T2=t10+(t11-t12)
Record t11
Record t10 and t12
Send the second fine granularity service (fourth service bit flow)
Service reassembly
Delay compensation buffer
Service container decapsulation
Extract the 2DMR block
FGU slot demapping
FGU slot receiving
TO FIG. 15B
TO FIG. 15B

FIG. 15A

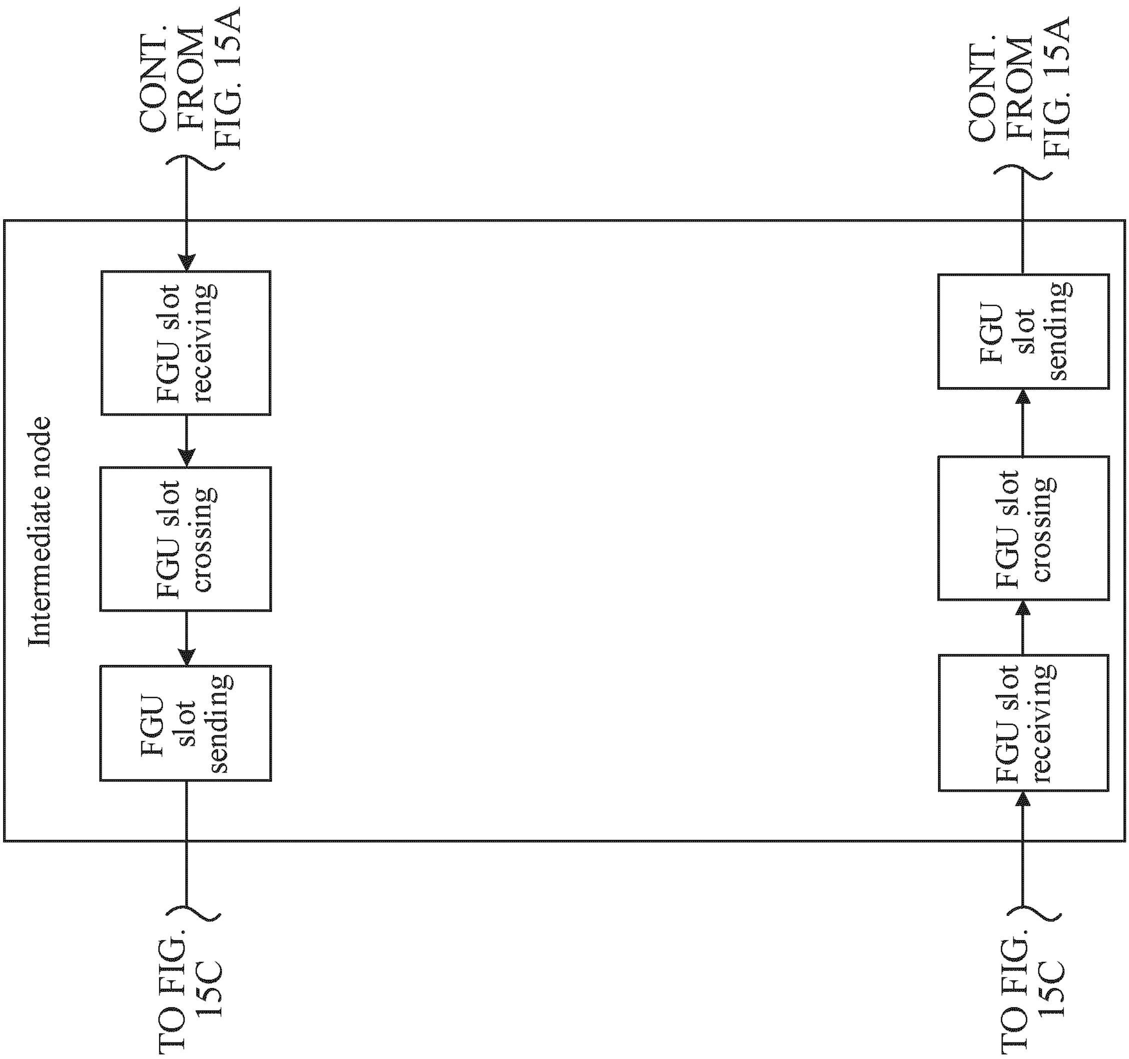
CONT. FROM FIG. 15A
CONT. FROM FIG. 15A
Intermediate node
FGU slot receiving
FGU slot crossing
FGU slot sending
FGU slot sending
FGU slot crossing
FGU slot receiving
TO FIG. 15C
TO FIG. 15C

FIG. 15B

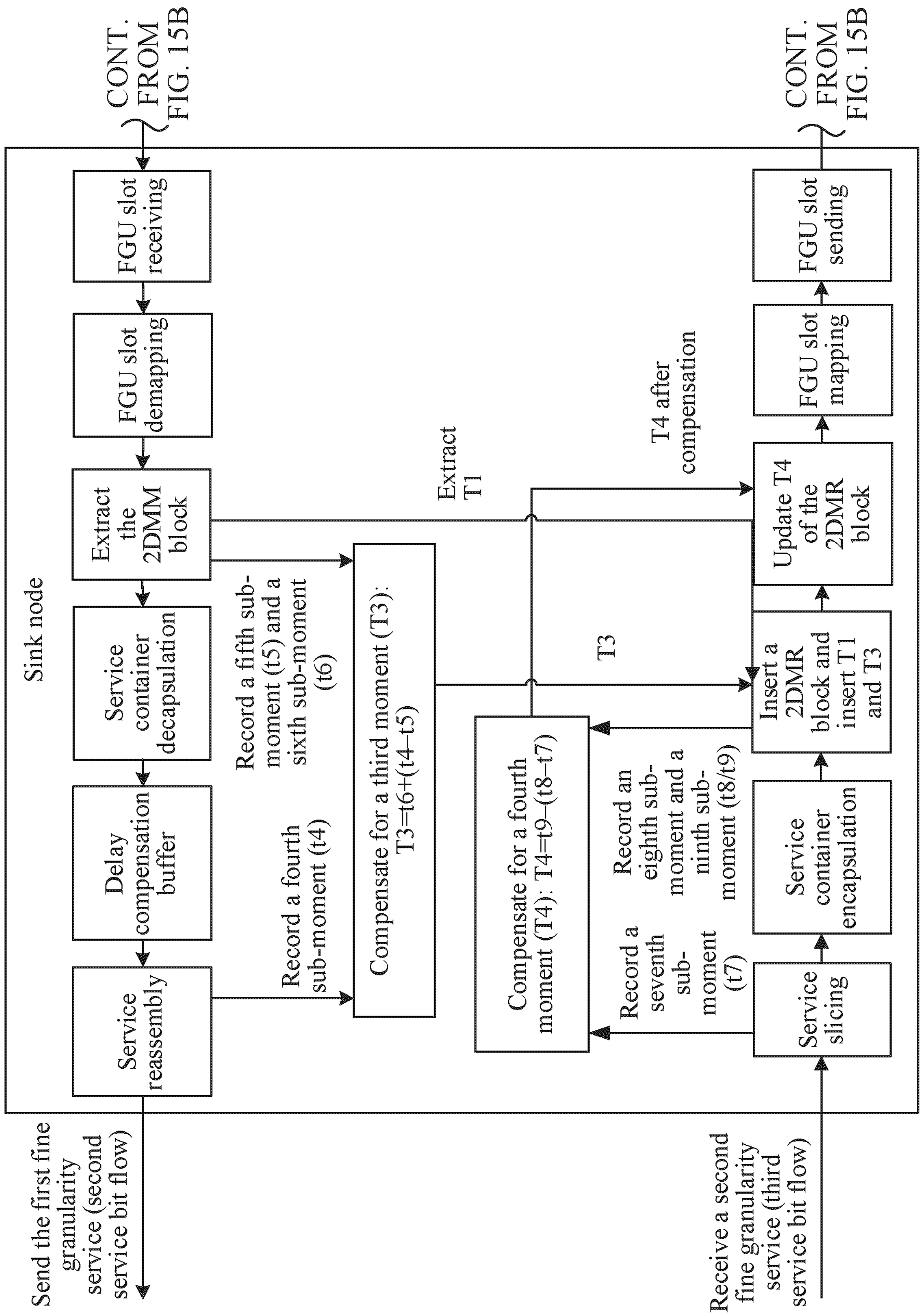
CONT. FROM FIG. 15B
CONT. FROM FIG. 15B
Sink node
FGU slot receiving
FGU slot demapping
Extract the 2DMM block
Service container decapsulation
Delay compensation buffer
Service reassembly
Send the first fine granularity service (second service bit flow)
Record a fifth sub-moment (t5) and a sixth sub-moment (t6)
Record a fourth sub-moment (t4)
Compensate for a third moment (T3): T3=t6+(t4–t5)
Extract T1
T3
T4 after compensation
Compensate for a fourth moment (T4): T4=t9–(t8–t7)
Record an eighth sub-moment and a ninth sub-moment (t8/t9)
Record a seventh sub-moment (t7)
FGU slot sending
FGU slot mapping
Update T4 of the 2DMR block
Insert a 2DMR block and insert T1 and T3
Service container encapsulation
Service slicing
Receive a second fine granularity service (third service bit flow)

FIG. 15C

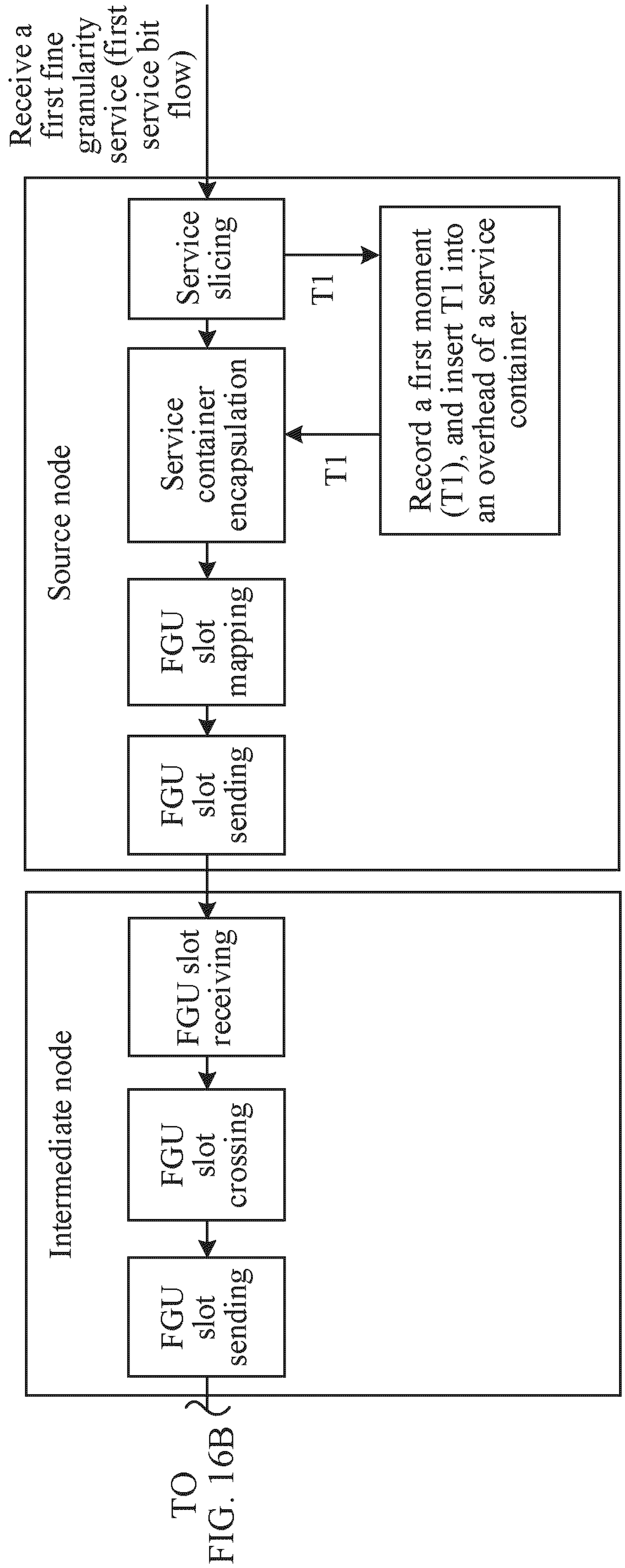
Receive a first fine granularity service (first service bit flow)
Source node
Service slicing
T1
Record a first moment (T1), and insert T1 into an overhead of a service container
T1
Service container encapsulation
FGU slot mapping
FGU slot sending
Intermediate node
FGU slot receiving
FGU slot crossing
FGU slot sending
TO FIG. 16B

FIG. 16A

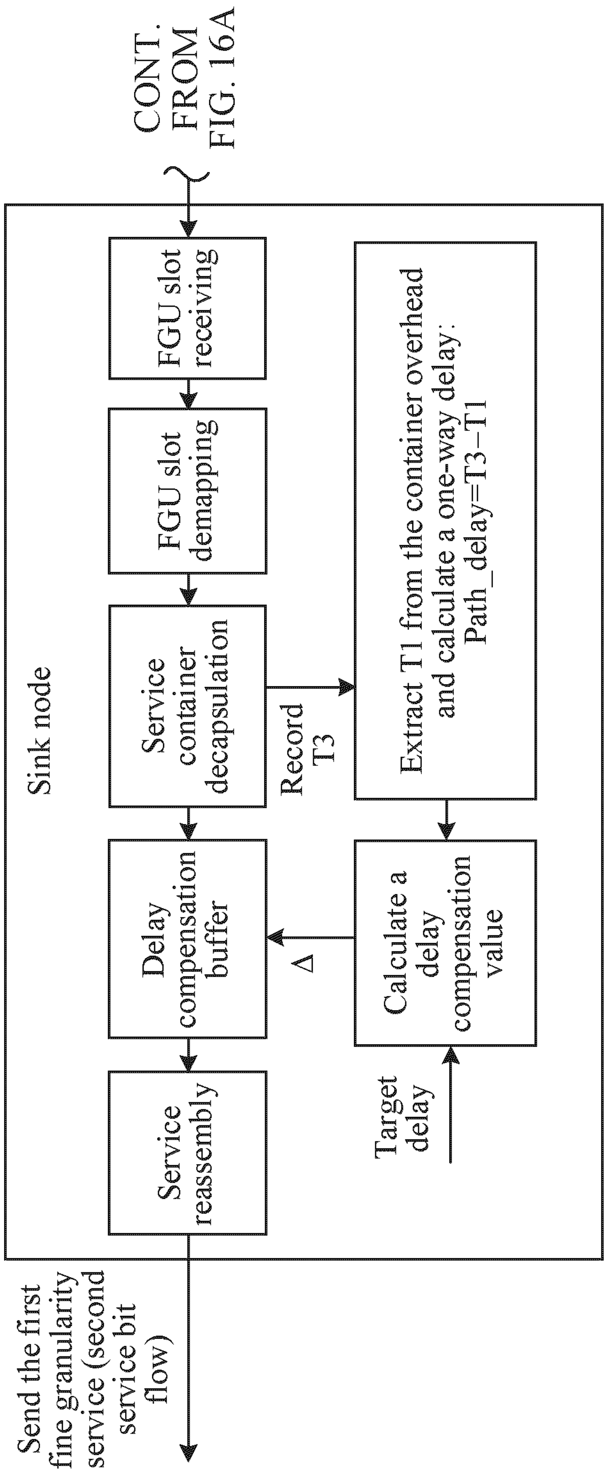
CONT. FROM FIG. 16A
Sink node
FGU slot receiving
FGU slot demapping
Service container decapsulation
Record T3
Extract T1 from the container overhead and calculate a one-way delay: Path_delay=T3−T1
Delay compensation buffer
Δ
Calculate a delay compensation value
Target delay
Service reassembly
Send the first fine granularity service (second service bit flow)

FIG. 16B

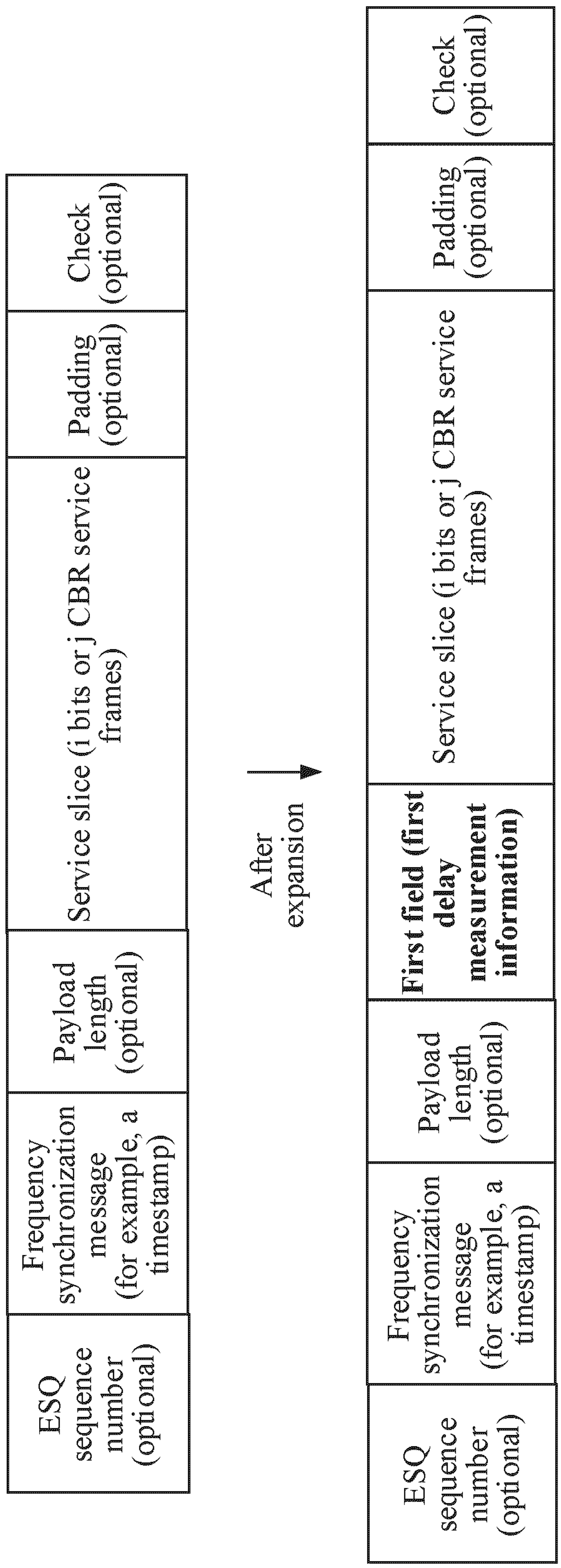
ESQ sequence number (optional)
Frequency synchronization message (for example, a timestamp)
Payload length (optional)
Service slice (i bits or j CBR service frames)
Padding (optional)
Check (optional)
After expansion
ESQ sequence number (optional)
Frequency synchronization message (for example, a timestamp)
Payload length (optional)
First field (first delay measurement information)
Service slice (i bits or j CBR service frames)
Padding (optional)
Check (optional)

FIG. 17

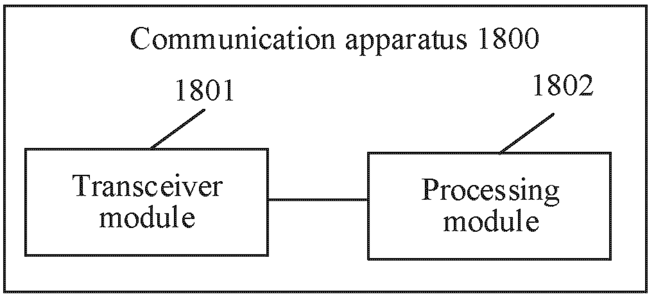
Communication apparatus 1800
1801
1802
Transceiver module
Processing module

FIG. 18

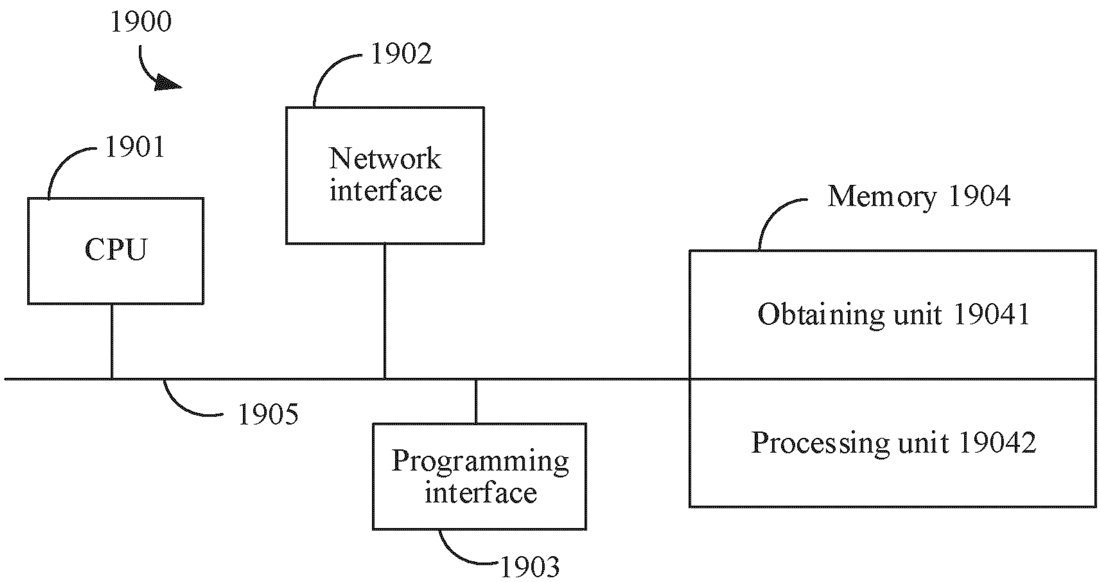
1900
1902
1901
Network interface
CPU
Memory 1904
Obtaining unit 19041
1905
Programming interface
Processing unit 19042
1903

FIG. 19

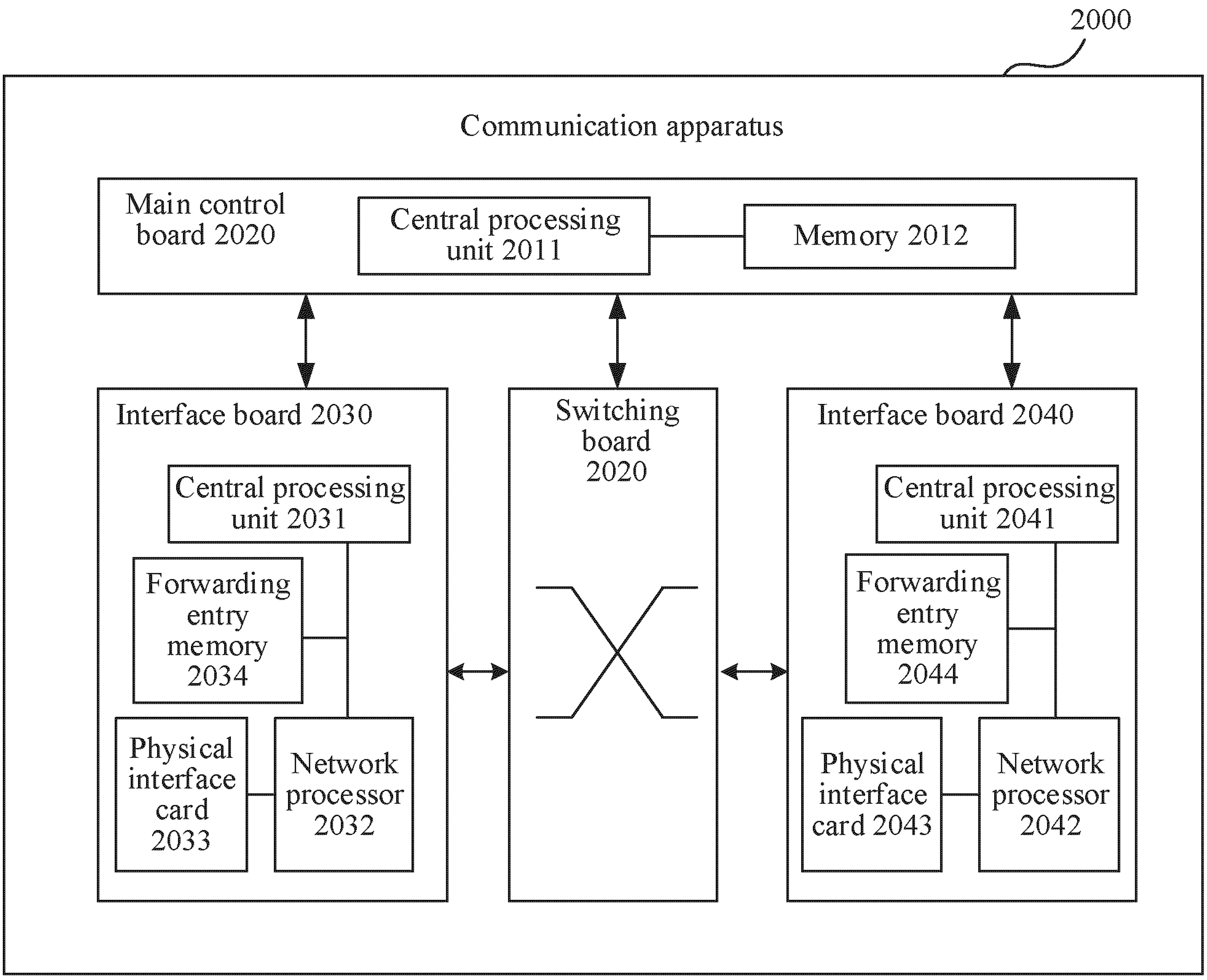
2000
Communication apparatus
Main control board 2020
Central processing unit 2011
Memory 2012
Interface board 2030
Central processing unit 2031
Forwarding entry memory 2034
Physical interface card 2033
Network processor 2032
Switching board 2020
Interface board 2040
Central processing unit 2041
Forwarding entry memory 2044
Physical interface card 2043
Network processor 2042

FIG. 20

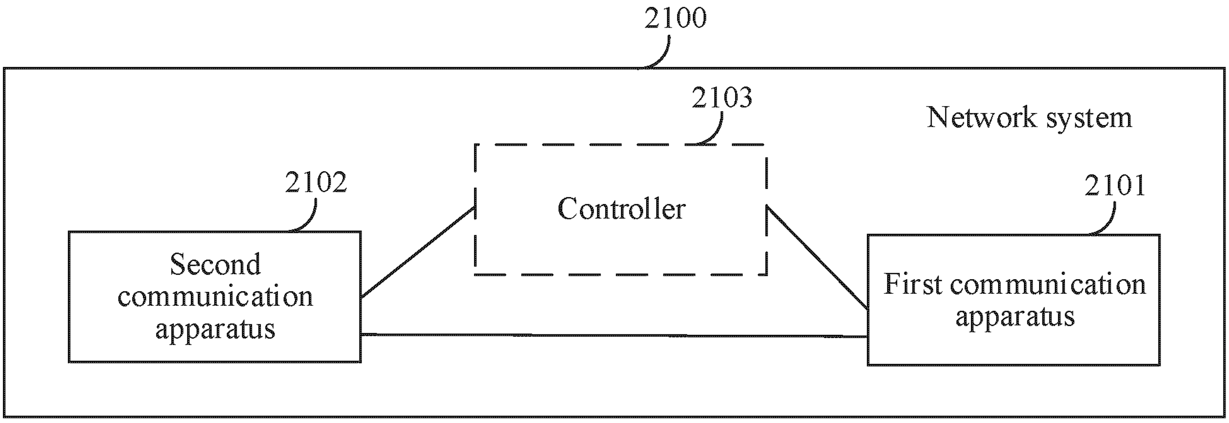
2100
2103
Network system
2102
Controller
2101
Second communication apparatus
First communication apparatus

FIG. 21

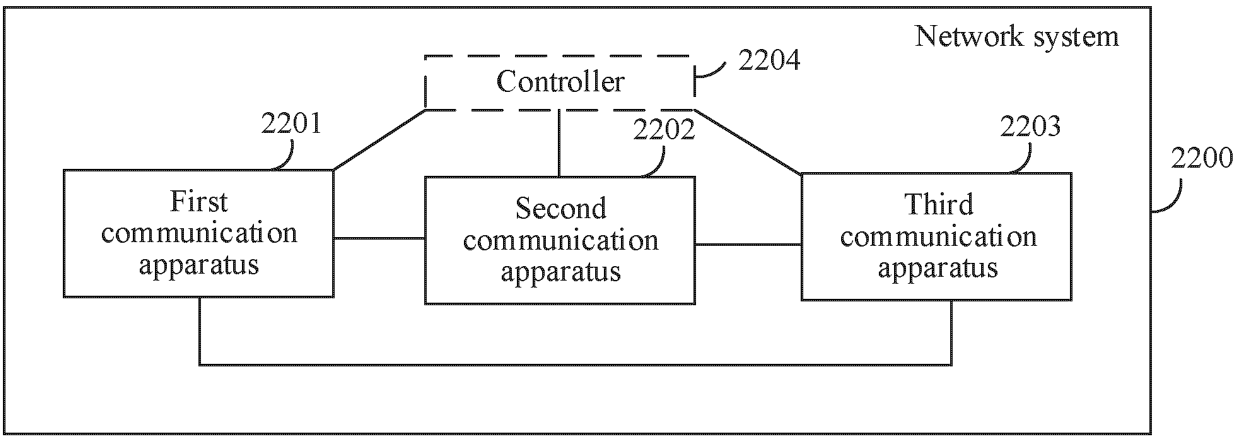
Network system
Controller
2204
2201
2202
2203
2200
First communication apparatus
Second communication apparatus
Third communication apparatus

FIG. 22

**INTERNATIONAL SEARCH REPORT**

International application No.
**PCT/CN2023/087970**

**A. CLASSIFICATION OF SUBJECT MATTER**

H04L 43/08(2022.01)i

According to International Patent Classification (IPC) or to both national classification and IPC

**B. FIELDS SEARCHED**

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, CNKI, VEN, ENTXT, 3GPP: 时延, 小颗粒, OAM, 单向时延, 双向时延, DM, 码块, 时间戳, delay, fine granularity unit, FGU, operation administration and maintenance, one way, two way, delay measurement, code block, time stamp

**C. DOCUMENTS CONSIDERED TO BE RELEVANT**

| Category* | Citation of document, with indication, where appropriate, of the relevant passages | Relevant to claim No. |
|---|---|---|
| A | CN 112073245 A (RESEARCH INSTITUTE OF CHINA MOBILE COMMUNICATIONS CORPORATION et al.) 11 December 2020 (2020-12-11)<br>entire document | 1-32 |
| A | CN 110768742 A (ZTE CORP.) 07 February 2020 (2020-02-07)<br>entire document | 1-32 |
| A | CN 102025556 A (ZTE CORP.) 20 April 2011 (2011-04-20)<br>entire document | 1-32 |
| A | WO 2018104175 A1 (ERICSSON TELEFON AB. L. M.) 14 June 2018 (2018-06-14)<br>entire document | 1-32 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 July 2023** | **07 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**
**Information on patent family members**

International application No.
**PCT/CN2023/087970**

| Patent document cited in search report | | | Publication date (day/month/year) | Patent family member(s) | | | Publication date (day/month/year) |
|---|---|---|---|---|---|---|---|
| CN | 112073245 | A | 11 December 2020 | None | | | |
| CN | 110768742 | A | 07 February 2020 | WO | 2020019845 | A1 | 30 January 2020 |
| | | | | EP | 3832914 | A1 | 09 June 2021 |
| | | | | EP | 3832914 | A4 | 08 September 2021 |
| CN | 102025556 | A | 20 April 2011 | None | | | |
| WO | 2018104175 | A1 | 14 June 2018 | US | 2021336864 | A1 | 28 October 2021 |
| | | | | EP | 3552355 | A1 | 16 October 2019 |
| | | | | US | 2019342198 | A1 | 07 November 2019 |
| | | | | US | 11088930 | B2 | 10 August 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202210434623